(19) **Europäisches Patentamt / European Patent Office / Office européen des brevets**

(11) **EP 4 683 416 A1**

(12) **EUROPEAN PATENT APPLICATION**
published in accordance with Art. 153(4) EPC

(43) Date of publication:
**21.01.2026 Bulletin 2026/04**

(21) Application number: **24784275.0**

(22) Date of filing: **02.04.2024**

(51) International Patent Classification (IPC):
**H04W 72/231** (2023.01)

(52) Cooperative Patent Classification (CPC):
**H04L 1/1812; H04L 5/00; H04W 72/0446;
H04W 72/0453; H04W 72/21; H04W 72/231**

(86) International application number:
**PCT/CN2024/085506**

(87) International publication number:
**WO 2024/208192 (10.10.2024 Gazette 2024/41)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.04.2023 CN 202310410242**

(71) Applicants:
• **Peng Cheng Laboratory**
 **Shenzhen, Guangdong 518000 (CN)**
• **Huawei Technologies Co., Ltd.**
 **Shenzhen, Guangdong 518129 (CN)**

(72) Inventors:
• **LU, Shaozhong**
 **Shenzhen, Guangdong 518129 (CN)**
• **GUO, Zhiheng**
 **Shenzhen, Guangdong 518129 (CN)**
• **SONG, Xinghua**
 **Shenzhen, Guangdong 518129 (CN)**
• **HOU, Hailong**
 **Shenzhen, Guangdong 518129 (CN)**

(74) Representative: **Körber, Martin Hans
Mitscherlich PartmbB
Patent- und Rechtsanwälte
Karlstraße 7
80333 München (DE)**

(54) **COMMUNICATION METHOD AND RELATED DEVICE**

(57) This application provides a communication method and a related device, to improve reliability of UCI transmission and improve communication efficiency. In the method, a terminal device receives first information, where the first information indicates N sets of first indexes, one of the N sets of first indexes includes M first indexes, the M first indexes include a first index, the first index corresponds to a first parameter, and the first parameter is for performing code rate compensation on UCI carried in an SBFD time unit; and the first information further indicates P sets of second indexes, one of the P sets of second indexes includes Q second indexes, the Q second indexes include a second index, the second index corresponds to a second parameter, and the second parameter is for performing code rate compensation on UCI carried in an uplink time unit; and the terminal device sends UCI and uplink data based on the first parameter and/or the second parameter, where the UCI and the uplink data are carried on a PUSCH.

```
Terminal                          Network
device                            device
   |                                 |
   |<----- S301: First information --|
   |                                 |
   |-- S302: UCI and uplink data --->|
   |                                 |
```

FIG. 3

## Description

This application claims priority to Chinese Patent Application No. 202310410242.7, filed with the China National Intellectual Property Administration on April 7, 2023, and entitled "COMMUNICATION METHOD AND RELATED DEVICE", which is incorporated herein by reference in its entirety.

## TECHNICAL FIELD

This application relates to the field of communication technologies, and in particular, to a communication method and a related device.

## BACKGROUND

In a communication system, a terminal device may perform communication in a time division duplex (time division duplex, TDD) mode. To be specific, based on scheduling of the terminal device by a network device, time domain resources are divided into uplink (uplink, UL) resources and downlink (downlink, DL) resources. In an uplink communication process, when uplink control information (uplink control information, UCI) sent by the terminal device is carried on a physical uplink shared channel (physical uplink shared channel, PUSCH), the network device may send, to the terminal device in advance, a transmission parameter of the UCI carried on the PUSCH in an uplink time unit.

Currently, in a TDD communication process, a limitation on uplink time domain resource allocation may lead to reduced uplink coverage and increased latency in TDD. A possible enhancement method is to perform communication in a subband full duplex (subband full duplex, SBFD) mode. In a process in which the terminal device is scheduled to perform uplink transmission in an SBFD time unit, the terminal device can send uplink signals in some frequency bands, and the network device may send downlink signals in some frequency bands and receive uplink signals in some other frequency bands. This can improve uplink coverage performance and can provide more uplink transmission opportunities to reduce communication latency.

However, due to relatively large differences between an uplink time unit and an SBFD time unit in channel environments and channel interference, if a transmission parameter of the uplink time unit is reused in the SBFD time unit, reliability of UCI transmission may be reduced, and communication efficiency is affected.

## SUMMARY

This application provides a communication method and a related device, to improve reliability of UCI transmission and improve communication efficiency.

A first aspect of this application provides a communication method. The method is performed by a terminal device, or the method is performed by some components (for example, a processor, a chip, or a chip system) in the terminal device, or the method may be implemented by a logic module or software that can implement all or some functions of the terminal device. In the first aspect and possible implementations of the first aspect, an example in which the method is performed by the terminal device is used for description. In the method, the terminal device receives first information, where the first information indicates N sets of first indexes, one of the N sets of first indexes includes M first indexes, the M first indexes include a first index, the first index corresponds to a first parameter, the first parameter is for performing code rate compensation on UCI carried in an SBFD time unit, N is a positive integer, and M is a positive integer; and the first information further indicates P sets of second indexes, one of the P sets of second indexes includes Q second indexes, the Q second indexes include a second index, the second index corresponds to a second parameter, the second parameter is for performing code rate compensation on UCI carried in an uplink time unit, P is a positive integer, and Q is a positive integer; and the terminal device sends UCI and uplink data based on the first parameter and/or the second parameter, where the UCI and the uplink data are carried on a PUSCH.

Based on the foregoing technical solution, the first information received by the terminal device indicates the N sets of first indexes and the P sets of second indexes. Then the terminal device can determine, based on the N sets of first indexes, the first parameter used to perform code rate compensation on the UCI carried in the SBFD time unit, and the terminal device can also determine, based on the P sets of second indexes, the second parameter used to perform code rate compensation on the UCI carried in the uplink time unit. Correspondingly, the terminal device may send the UCI and the uplink data on the PUSCH based on the first parameter and/or the second parameter. Therefore, when the UCI is carried on the PUSCH, the terminal device can determine the code rate compensation parameter of the UCI in the uplink time unit and/or the code rate compensation parameter of the UCI in the SBFD time unit, so that the terminal device performs uplink transmission in the SBFD time unit and/or the uplink time unit based on the code rate compensation parameter that adapts to channel environments (or channel interference, or the like), thereby improving reliability of UCI transmission and improving communication efficiency.

It should be noted that in this application, the time unit may include a frame, a subframe, a slot, a symbol, or the like.

It should be noted that in this application, the SBFD time unit may include a subband non-overlapping full duplex (subband non-overlapping full duplex, SBFD) time unit and/or a subband overlapping full duplex (subband overlapping full duplex, SBFD) time unit.

It should be understood that in the uplink time unit, the terminal device may send an uplink signal, and a network device may receive the uplink signal. However, in the SBFD time unit, the network device may receive an uplink signal and may also send a downlink signal. Correspondingly, some terminal devices may send uplink signals in the SBFD time unit, and some other terminal devices may receive downlink signals in the SBFD time unit.

It should be noted that in this application, the UCI may include a plurality of types, for example, one or more of a feedback hybrid automatic repeat request-acknowledgment (hybrid automatic repeat request-acknowledgment, HARQ-ACK), a channel state information (channel state information, CSI) part 1 (CSI part 1), a CSI part 2 (CSI part 2), and configured grant uplink control information (configured grant-uplink control information). Correspondingly, the N sets of first indexes and the P sets of second indexes may be used to determine a plurality of code rate compensation parameters corresponding to the UCI. For example, the M first indexes included in one of the N sets of first indexes (or the Q second indexes included in one of the P sets of second indexes) include at least one of the following:

a first HARQ-ACK index, used to determine a code rate compensation parameter of the HARQ-ACK when a quantity of information bits of the HARQ-ACK does not exceed 2 bits, which means that the first parameter (or the second parameter) may include the code rate compensation parameter indicated by the first HARQ-ACK index;

a second HARQ-ACK index, used to determine a code rate compensation parameter of the HARQ-ACK when the quantity of information bits of the HARQ-ACK exceeds 2 bits but does not exceed 11 bits, which means that the first parameter (or the second parameter) may include the code rate compensation parameter indicated by the second HARQ-ACK index;

a third HARQ-ACK index, used to determine a code rate compensation parameter of the HARQ-ACK when the quantity of information bits of the HARQ-ACK exceeds 11 bits, which means that the first parameter (or the second parameter) may include the code rate compensation parameter indicated by the third HARQ-ACK index;

a fourth HARQ-ACK index, used to determine a code rate compensation parameter for multiplexing the HARQ-ACK on a PUSCH associated with a priority 0 when the quantity of information bits of the HARQ-ACK does not exceed 2 bits, which means that the first parameter (or the second parameter) may include the code rate compensation parameter indicated by the fourth HARQ-ACK index;

a fifth HARQ-ACK index, used to determine a code rate compensation parameter for multiplexing the HARQ-ACK on the PUSCH associated with the priority 0 when the quantity of information bits of the HARQ-ACK exceeds 2 bits but does not exceed 11 bits, which means that the first parameter (or the second parameter) may include the code rate compensation parameter indicated by the fifth HARQ-ACK index;

a sixth HARQ-ACK index, used to determine a code rate compensation parameter for multiplexing the HARQ-ACK on the PUSCH associated with the priority 0 when the quantity of information bits of the HARQ-ACK exceeds 11 bits, which means that the first parameter (or the second parameter) may include the code rate compensation parameter indicated by the sixth HARQ-ACK index;

a seventh HARQ-ACK index, used to determine a code rate compensation parameter for multiplexing the HARQ-ACK on a PUSCH associated with a priority 1 when the quantity of information bits of the HARQ-ACK does not exceed 2 bits, which means that the first parameter (or the second parameter) may include the code rate compensation parameter indicated by the seventh HARQ-ACK index;

an eighth HARQ-ACK index, used to determine a code rate compensation parameter for multiplexing the HARQ-ACK on the PUSCH associated with the priority 1 when the quantity of information bits of the HARQ-ACK exceeds 2 bits but does not exceed 11 bits, which means that the first parameter (or the second parameter) may include the code rate compensation parameter indicated by the eighth HARQ-ACK index;

a ninth HARQ-ACK index, used to determine a code rate compensation parameter for multiplexing the HARQ-ACK on the PUSCH associated with the priority 1 when the quantity of information bits of the HARQ-ACK exceeds 11 bits, which means that the first parameter (or the second parameter) may include the code rate compensation parameter indicated by the ninth HARQ-ACK index;

a first CSI part 1 index, used to determine a code rate compensation parameter of the CSI part 1 when a quantity of information bits of the CSI part 1 does not exceed 11 bits, which means that the first parameter (or the second parameter) may include the code rate compensation parameter indicated by the first CSI part 1 index;

a second CSI part 1 index, used to determine a code rate compensation parameter of the CSI part 1 when the quantity of information bits of the CSI part 1 exceeds 11 bits, which means that the first parameter (or the second parameter) may include the code rate compensation parameter indicated by the second CSI part 1 index;

a first CSI part 2 index, used to determine a code rate compensation parameter of the CSI part 2 when a quantity of information bits of the CSI part 2 does not exceed 11 bits, which means that the first parameter (or the second parameter) may include the code rate compensation parameter indicated by the first CSI part 2 index;

a second CSI part 2 index, used to determine a code rate compensation parameter of the CSI part 2 when the quantity of information bits of the CSI part 2 exceeds 11 bits, which means that the first parameter (or the second parameter) may include the code rate compensation parameter indicated by the second CSI part 2 index; and

a CG-UCI index, used to determine a code rate compensation parameter of the CG-UCI, which means that the first parameter (or the second parameter) may include the code rate compensation parameter indicated by the CG-UCI index.

In a possible implementation of the first aspect, that the terminal device sends the UCI and the uplink data based on the first parameter and/or the second parameter includes: the terminal device sends the UCI and the uplink data in the SBFD time unit based on the first parameter and/or sends the UCI and the uplink data in the uplink time unit based on the second parameter.

Based on the foregoing technical solution, after the terminal device receives the first information, in the SBFD time unit, the terminal device may determine the first parameter based on the first information, and send the UCI and the uplink data based on the first parameter; and/or in the uplink time unit, the terminal device may determine the second parameter based on the first information, and send the UCI and the uplink data based on the second parameter. Therefore, the terminal device can perform uplink transmission in the SBFD time unit and/or the uplink time unit based on the code rate compensation parameter that adapts to the channel environments (or channel interference, or the like).

In a possible implementation of the first aspect, the method further includes: the terminal device receives second information, where the second information indicates a third parameter and a fourth parameter, the third parameter indicates an upper limit on a quantity of encoded modulation symbols for the UCI carried on the PUSCH in the SBFD time unit, and the fourth parameter indicates an upper limit on a quantity of encoded modulation symbols for the UCI carried on the PUSCH in the uplink time unit; that the terminal device sends the UCI and the uplink data in the SBFD time unit based on the first parameter includes: the terminal device sends the UCI and the uplink data in the SBFD time unit based on the first parameter and the third parameter; and that the terminal device sends the UCI and the uplink data in the uplink time unit based on the second parameter includes: the terminal device sends the UCI and the uplink data in the uplink time unit based on the second parameter and the fourth parameter.

Based on the foregoing technical solution, the terminal device may further determine, based on the third parameter and the fourth parameter that are indicated by the second information, the upper limit on the quantity of encoded modulation symbols for the UCI carried on the PUSCH in the uplink time unit and the upper limit on the quantity of encoded modulation symbols for the UCI carried on the PUSCH in the SBFD unit. Therefore, the terminal device can perform uplink transmission in the SBFD time unit and/or the uplink time unit based on an encoded modulation symbol parameter that adapts to the channel environments (or channel interference, or the like).

In a possible implementation of the first aspect, both parameters corresponding to the N sets of first indexes and parameters corresponding to the P sets of second indexes are semi-statically configured parameters, and values of both P and N are 1.

Based on the foregoing technical solution, when the values of P and N are 1, the foregoing solution can be applied to a semi-static configuration scenario, to support the network device in configuring a code rate compensation parameter (for example, the first parameter and/or the second parameter) in a semi-static configuration mode.

In a possible implementation of the first aspect, both parameters corresponding to the N sets of first indexes and parameters corresponding to the P sets of second indexes are dynamically configured parameters, and values of both P and N are greater than 1, and the method further includes: the terminal device receives third information, where the third information indicates one of the N sets of first indexes and/or indicates one of the P sets of second indexes.

Based on the foregoing technical solution, when the values of P and N are greater than 1, the foregoing solution can be applied to a dynamic configuration scenario, to support the network device in configuring a code rate compensation parameter (for example, the first parameter and/or the second parameter) in a dynamic configuration mode. In addition, in this scenario, the terminal device may further determine, based on the third information, the code rate compensation parameters in the SBFD time unit and the uplink time unit respectively in the N sets of first indexes and the P sets of second indexes.

In a possible implementation of the first aspect, the third information is carried in downlink control information (download control information, DCI); and one bit in a first field in the DCI indicates one of the N sets of first indexes, and another bit in the first field in the DCI indicates one of the P sets of second indexes; or a first field in the DCI indicates one of the N sets of first indexes, and a second field in the DCI indicates one of the P sets of second indexes.

Optionally, the first field may be a "beta_offset indicator" field corresponding to a DCI format 0_1 (DCI format 0_1), or a "beta_offset indicator" field corresponding to a DCI format 0_2.

Based on the foregoing technical solution, the third information received by the terminal device may indicate one of the N sets of first indexes, and/or the third information received by the terminal device may indicate one of the P sets of second indexes. The third information received by the terminal device may be carried in the DCI. For example, different bits in a same field in the DCI respectively indicate one set of first indexes and one set of second indexes, or different fields in the DCI respectively indicate one set of first indexes and one set of second indexes, to provide a plurality of flexible implementations.

In a possible implementation of the first aspect, the first information includes a first information element and a second information element in a radio resource control (radio resource control, RRC) message, where the first information element indicates the N sets of first indexes, and the second information element indicates the P sets of second indexes.

Based on the foregoing technical solution, the first information received by the terminal device may include the first information element and the second information element in the RRC message, where the first information element indicates the N sets of first indexes corresponding to the SBFD time unit, and the second information element indicates the P sets of second indexes corresponding to the uplink time unit, so that the terminal device can obtain the N sets of first indexes and the P sets of second indexes by using the same RRC message, thereby reducing overheads.

Optionally, the first information element indicating the N sets of first indexes and the second information element indicating the P sets of second indexes may be carried in the same message (for example, the same RRC message), or may be carried in different messages (for example, different RRC messages).

In a possible implementation of the first aspect, the first information element is betaOffsetsCrossPri0, and the second information element is betaOffsetsCrossPri1; or the first information element is betaOffsetsCrossPri0DCI-0-2, and the second information element is betaOffsetsCrossPri1DCI-0-2; or the first information element is cg-betaOffsetsCrossPri0, and the second information element is cg-betaOffsetsCrossPri1; or the second information element is betaOffsetsCrossPri0, and the first information element is betaOffsetsCrossPri1; or the second information element is betaOffsetsCrossPri0DCI-0-2, and the first information element is betaOffsetsCrossPri1DCI-0-2; or the second information element is cg-betaOffsetsCrossPri0, and the first information element is cg-betaOffsetsCrossPri1.

Based on the foregoing technical solution, when the first information element and the second information element included in the first information are located in the RRC message, the first information element and the second information element may reuse other information elements in the RRC message. In the foregoing technical solution, the other information elements may include an information element that is in the RRC message and that indicates a code rate compensation parameter index set used on the PUSCH corresponding to the priority 0, and an information element that is in the RRC message and that indicates a code rate compensation parameter index set used on the PUSCH corresponding to the priority 1. Therefore, the other information elements are reused to indicate the N sets of first indexes and the P sets of second indexes, and implementation complexity can be reduced.

In a possible implementation of the first aspect, the RRC message further includes a third information element, where when a value of the third information element is a target value, the third information element indicates that the first information element indicates the N sets of first indexes, and the third information element indicates that the second information element indicates the P sets of second indexes.

Optionally, when the value of the third information element is another value, the third information element indicates that a function of the first information element is a function (for example, indicating the code rate compensation parameter index set used on the PUSCH corresponding to the priority 0, or indicating the code rate compensation parameter index set used on the PUSCH corresponding to the priority 1) other than indicating the N sets of first indexes. In addition, the third information element indicates that a function of the second information element is a function (for example, indicating the code rate compensation parameter index set corresponding to the priority 1, or indicating the code rate compensation parameter index set corresponding to the priority 0) other than indicating the P sets of second indexes.

Based on the foregoing technical solution, when the first information element and the second information element included in the first information are located in the RRC message, the first information element and the second information element may reuse other information elements in the RRC message. The RRC message may further include the third information element, so that the terminal device determines, based on the third information element, specific meanings of information included in the first information element and the second information element, to avoid behavioral confusion.

In a possible implementation of the first aspect, both the parameters corresponding to the N sets of first indexes and the parameters corresponding to the P sets of second indexes are semi-statically configured parameters; or both the parameters corresponding to the N sets of first indexes and the parameters corresponding to the P sets of second indexes are dynamically configured parameters.

Optionally, the foregoing technical solution may be expressed as follows: It is not expected or not permitted that the parameters corresponding to the N sets of first indexes are semi-statically configured parameters while the parameters corresponding to the P sets of second indexes are dynamically configured parameters; or it is not expected or not permitted that the parameters corresponding to the P sets of second indexes are semi-statically configured parameters while the parameters corresponding to the N sets of first indexes are dynamically configured parameters.

Based on the foregoing technical solution, both the parameters corresponding to the N sets of first indexes and the parameters corresponding to the P sets of second indexes are semi-statically configured (or both are dynamically configured) parameters, to avoid behavioral confusion caused when the two parameters are configured differently (that is, one parameter is a statically configured parameter and the other parameter is a dynamically configured parameter) and reduce implementation complexity.

In a possible implementation of the first aspect, the quantity of encoded modulation symbols for the UCI is determined based on a transport block size (transport block size, TBS) in a time unit in which the UCI is located and a quantity of REs available for transmitting the UCI in the time unit in which the UCI is located; and when the UCI is carried in a first time unit and a TBS in the first time unit is determined based on a second quantity of REs in a second time unit, any one of the following is met: the TBS in the time unit in which the UCI is located is determined based on a first quantity of REs in the first time unit; the quantity of REs available for transmitting the UCI in the time unit in which the UCI is located is determined based on the second quantity of REs; and the quantity of encoded modulation symbols for the UCI is determined based on relative information between the first quantity of REs and the second quantity of REs, where the first time unit is an SBFD time unit and the second time unit is an uplink time unit, or the first time unit is an uplink time unit and the second time unit is an SBFD time unit.

Based on the foregoing technical solution, when the UCI is carried in the first time unit and the TBS in the first time unit is determined based on the second quantity of REs in the second time unit, the terminal device may determine the quantity of encoded modulation symbols for the UCI in any one of the foregoing manners. This can resolve a problem that reliability of UCI transmission or reliability of PUSCH transmission is reduced because a frequency domain resource used for TBS calculation is inconsistent with a frequency domain resource on which UCI multiplexing occurs.

A second aspect of this application provides a communication method. The method is performed by a network device, or the method is performed by some components (for example, a processor, a chip, or a chip system) in the network device, or the method may be implemented by a logic module or software that can implement all or some functions of the network device. In the second aspect and possible implementations of the second aspect, an example in which the method is performed by the network device is used for description. In the method, the network device sends first information, where the first information indicates N sets of first indexes, one of the N sets of first indexes includes M first indexes, the M first indexes include a first index, the first index corresponds to a first parameter, the first parameter is for performing code rate compensation on uplink control information UCI carried in a subband full duplex SBFD time unit, N is a positive integer, and M is a positive integer; and the first information further indicates P sets of second indexes, one of the P sets of second indexes includes Q second indexes, the Q second indexes include a second index, the second index corresponds to a second parameter, the second parameter is for performing code rate compensation on UCI carried in an uplink time unit, P is a positive integer, and Q is a positive integer; and the network device receives UCI and uplink data based on the first parameter and/or the second parameter, where the UCI and the uplink data are carried on a physical uplink shared channel PUSCH.

Based on the foregoing technical solution, the first information sent by the network device indicates the N sets of first indexes and the P sets of second indexes. Then a terminal device can determine, based on the N sets of first indexes, the first parameter used to perform code rate compensation on the UCI carried in the SBFD time unit, and the terminal device can also determine, based on the P sets of second indexes, the second parameter used to perform code rate compensation on the UCI carried in the uplink time unit. Correspondingly, the network device may receive the UCI and the uplink data on the PUSCH based on the first parameter and/or the second parameter. Therefore, when the UCI is carried on the PUSCH, the terminal device can determine the code rate compensation parameter of the UCI in the uplink time unit and/or the code rate compensation parameter of the UCI in the SBFD time unit, so that the terminal device performs uplink transmission in the SBFD time unit and/or the uplink time unit based on the code rate compensation parameter that adapts to channel environments (or channel interference, or the like), thereby improving reliability of UCI transmission and improving communication efficiency.

In a possible implementation of the second aspect, that the network device receives the UCI and the uplink data based on the first parameter and/or the second parameter includes: the network device receives the UCI and the uplink data in the SBFD time unit based on the first parameter; and/or the network device receives the UCI and the uplink data in the uplink time unit based on the second parameter.

Based on the foregoing technical solution, after the network device sends the first information, the network device may receive the UCI and the uplink data in the SBFD time unit based on the first parameter; and/or the network device may send the UCI and the uplink data in the uplink time unit based on the second parameter. Therefore, the terminal device can perform uplink transmission in the SBFD time unit and/or the uplink time unit based on the code rate compensation parameter that adapts to the channel environments (or channel interference, or the like).

In a possible implementation of the second aspect, the method further includes: the network device sends second information, where the second information indicates a third parameter and a fourth parameter, the third parameter indicates an upper limit on a quantity of encoded modulation symbols for the UCI carried on the PUSCH in the SBFD time unit, and the fourth parameter indicates an upper limit on a quantity of encoded modulation symbols for the UCI carried on the PUSCH in the uplink time unit; that the network device receives the UCI and the uplink data in the SBFD time unit based on the first parameter includes: the network device receives the UCI and the uplink data in the SBFD time unit based on the first parameter and the third parameter; and that the network device receives the UCI and the uplink data in the uplink time unit based on the second parameter includes: the network device receives the UCI and the uplink data in the uplink time unit based on the second parameter and the fourth parameter.

Based on the foregoing technical solution, the network device may further send the second information, so that the terminal device can determine, based on the third parameter and the fourth parameter that are indicated by the second information, the upper limit on the quantity of encoded modulation symbols for the UCI carried on the PUSCH in the uplink time unit and the upper limit on the quantity of encoded modulation symbols for the UCI carried on the PUSCH in the SBFD unit. Therefore, the terminal device can perform uplink transmission in the SBFD time unit and/or the uplink time unit based on an encoded modulation symbol parameter that adapts to the channel environments (or channel interference, or the like).

In a possible implementation of the second aspect, both parameters corresponding to the N sets of first indexes and parameters corresponding to the P sets of second indexes are semi-statically configured parameters, and values of both P and N are 1.

Based on the foregoing technical solution, when the values of P and N are 1, the foregoing solution can be applied to a semi-static configuration scenario, to support the network device in configuring a code rate compensation parameter (for example, the first parameter and/or the second parameter) in a semi-static configuration mode.

In a possible implementation of the second aspect, both parameters corresponding to the N sets of first indexes and parameters corresponding to the P sets of second indexes are dynamically configured parameters, and values of both P and N are greater than 1, and the method further includes: the network device sends third information, where the third information indicates one of the N sets of first indexes and/or indicates one of the P sets of second indexes.

Based on the foregoing technical solution, when the values of P and N are greater than 1, the foregoing solution can be applied to a dynamic configuration scenario, to support the network device in configuring a code rate compensation parameter (for example, the first parameter and/or the second parameter) in a dynamic configuration mode. In addition, in this scenario, the terminal device may further determine, based on the third information, the code rate compensation parameters in the SBFD time unit and the uplink time unit respectively in the N sets of first indexes and the P sets of second indexes.

In a possible implementation of the second aspect, the third information is carried in DCI; and one bit in a first field in the DCI indicates one of the N sets of first indexes, and another bit in the first field in the DCI indicates one of the P sets of second indexes; or a first field in the DCI indicates one of the N sets of first indexes, and a second field in the DCI indicates one of the P sets of second indexes.

Optionally, the first field may be a "beta_offset indicator" field corresponding to a DCI format 0_1 (DCI format 0_1), or a "beta_offset indicator" field corresponding to a DCI format 0_2.

Based on the foregoing technical solution, the third information received by the terminal device may indicate one of the N sets of first indexes, and/or the third information received by the terminal device may indicate one of the P sets of second indexes. The third information received by the terminal device may be carried in the DCI. For example, different bits in a same field in the DCI respectively indicate one set of first indexes and one set of second indexes, or different fields in the DCI respectively indicate one set of first indexes and one set of second indexes, to provide a plurality of flexible implementations.

In a possible implementation of the second aspect, the first information includes a first information element and a second information element in an RRC message, where the first information element indicates the N sets of first indexes, and the second information element indicates the P sets of second indexes.

Based on the foregoing technical solution, the first information sent by the network device may include the first information element and the second information element in the RRC message, where the first information element indicates the N sets of first indexes corresponding to the SBFD time unit, and the second information element indicates the P sets of second indexes corresponding to the uplink time unit, so that the terminal device can obtain the N sets of first indexes and the P sets of second indexes by using the same RRC message, thereby reducing overheads.

Optionally, the first information element indicating the N sets of first indexes and the second information element indicating the P sets of second indexes may be carried in the same message (for example, the same RRC message), or may be carried in different messages (for example, different RRC messages).

In a possible implementation of the second aspect, the first information element is betaOffsetsCrossPri0, and the second information element is betaOffsetsCrossPri1; or the first information element is betaOffsetsCrossPri0DCI-0-2, and the second information element is betaOffsetsCrossPri1DCI-0-2; or the first information element is cg-betaOffsetsCrossPri0, and the second information element is cg-betaOffsetsCrossPri1; or the second information element is betaOffsetsCrossPri0, and the first information element is betaOffsetsCrossPri1; or the second information element is betaOffsetsCrossPri0DCI-0-2, and the first information element is betaOffsetsCrossPri1DCI-0-2; or the second information element is cg-betaOffsetsCrossPri0, and the first information element is cg-betaOffsetsCrossPri1.

Based on the foregoing technical solution, when the first information element and the second information element included in the first information are located in the RRC message, the first information element and the second information element may reuse other information elements in the RRC message. In the foregoing technical solution, the other information elements may include an information element that is in the RRC message and that indicates a code rate compensation parameter index set used on a PUSCH corresponding to a priority 0, and an information element that is in the RRC message and that indicates a code rate compensation parameter index set used on a PUSCH corresponding to a priority 1. Therefore, the other information elements are reused to indicate the N sets of first indexes and the P sets of second indexes, and implementation complexity can be reduced.

In a possible implementation of the second aspect, the RRC message further includes a third information element, where when a value of the third information element is a target value, the third information element indicates that the first information element indicates the N sets of first indexes, and the third information element indicates that the second information element indicates the P sets of second indexes.

Optionally, when the value of the third information element is another value, the third information element indicates that a function of the first information element is a function (for example, indicating the code rate compensation parameter index set used on the PUSCH corresponding to the priority 0, or indicating the code rate compensation parameter index set used on the PUSCH corresponding to the priority 1) other than indicating the N sets of first indexes. In addition, the third information element indicates that a function of the second information element is a function (for example, indicating the code rate compensation parameter index set corresponding to the priority 1, or indicating the code rate compensation parameter index set corresponding to the priority 0) other than indicating the P sets of second indexes.

Based on the foregoing technical solution, when the first information element and the second information element included in the first information are located in the RRC message, the first information element and the second information element may reuse other information elements in the RRC message. The RRC message may further include the third information element, so that the terminal device determines, based on the third information element, specific meanings of information included in the first information element and the second information element, to avoid behavioral confusion.

In a possible implementation of the second aspect, both the parameters corresponding to the N sets of first indexes and the parameters corresponding to the P sets of second indexes are semi-statically configured parameters; or both the parameters corresponding to the N sets of first indexes and the parameters corresponding to the P sets of second indexes are dynamically configured parameters.

Optionally, the foregoing technical solution may be expressed as follows: It is not expected or not permitted that the parameters corresponding to the N sets of first indexes are semi-statically configured parameters while the parameters corresponding to the P sets of second indexes are dynamically configured parameters; or it is not expected or not permitted that the parameters corresponding to the P sets of second indexes are semi-statically configured parameters while the parameters corresponding to the N sets of first indexes are dynamically configured parameters.

Based on the foregoing technical solution, both the parameters corresponding to the N sets of first indexes and the parameters corresponding to the P sets of second indexes are semi-statically configured (or both are dynamically configured) parameters, to avoid behavioral confusion caused when the two parameters are configured differently (that is, one parameter is a statically configured parameter and the other parameter is a dynamically configured parameter) and reduce implementation complexity.

In a possible implementation of the second aspect, the quantity of encoded modulation symbols for the UCI is determined based on a TBS in a time unit in which the UCI is located and a quantity of REs available for transmitting the UCI in the time unit in which the UCI is located; and when the UCI is carried in a first time unit and a TBS in the first time unit is determined based on a second quantity of REs in a second time unit, any one of the following is met: the TBS in the time unit in which the UCI is located is determined based on a first quantity of REs in the first time unit; the quantity of REs available for transmitting the UCI in the time unit in which the UCI is located is determined based on the second quantity of REs; and the quantity of encoded modulation symbols for the UCI is determined based on relative information between the first quantity of REs and the second quantity of REs, where the first time unit is an SBFD time unit and the second time unit is an uplink time unit, or the first time unit is an uplink time unit and the second time unit is an SBFD time unit.

Based on the foregoing technical solution, when the UCI is carried in the first time unit and the TBS in the first time unit is determined based on the second quantity of REs in the second time unit, the terminal device may determine the quantity of encoded modulation symbols for the UCI in any one of the foregoing manners. This can resolve a problem that reliability of UCI transmission or reliability of PUSCH transmission is reduced because a frequency domain resource used for TBS calculation is inconsistent with a frequency domain resource on which UCI multiplexing occurs.

A third aspect of this application provides a communication method. The method is performed by a terminal device, or the method is performed by some components (for example, a processor, a chip, or a chip system) in the terminal device, or the method may be implemented by a logic module or software that can implement all or some functions of the terminal device. In the third aspect and possible implementations of the third aspect, an example in which the method is performed by the terminal device is used for description. In the method, the terminal device receives fourth information, where the fourth information indicates P sets of second indexes, one of the P sets of second indexes includes Q second indexes, the Q second indexes include a second index, the second index corresponds to a second parameter, the second parameter is for performing code rate compensation on UCI carried in an uplink time unit, P is a positive integer, and Q is a positive integer; the terminal device receives fifth information, where the fifth information and the second parameter are used to determine a first parameter, and the first parameter is for performing code rate compensation on UCI carried in a subband full duplex SBFD time unit; and the terminal device sends the UCI and uplink data in the SBFD time unit based on the fourth information and the fifth information, and/or sends the UCI and uplink data in the uplink time unit based on the fourth information.

Based on the foregoing technical solution, after the terminal device receives the fourth information indicating the P sets of second indexes, the terminal device can determine, based on the fourth information, the second parameter used to perform code rate compensation on the UCI carried in the uplink time unit. In addition, the terminal device can determine, based on the fifth information and the second parameter, the first parameter used to perform code rate compensation on the UCI carried in the subband full duplex SBFD time unit. Therefore, when the UCI is carried on a PUSCH, the terminal device can determine the code rate compensation parameter of the UCI in the uplink time unit and/or the code rate compensation parameter of the UCI in the SBFD time unit, so that the terminal device performs uplink transmission in the SBFD time unit and/or the uplink time unit based on the code rate compensation parameter that adapts to channel environments (or channel interference, or the like), thereby improving reliability of UCI transmission and improving communication efficiency.

In a possible implementation of the third aspect, a quantity of encoded modulation symbols for the UCI is determined based on a transport block size (transport block size, TBS) in a time unit in which the UCI is located and a quantity of REs available for transmitting the UCI in the time unit in which the UCI is located; and when the UCI is carried in a first time unit and a TBS in the first time unit is determined based on a second quantity of REs in a second time unit, any one of the following is met: the TBS in the time unit in which the UCI is located is determined based on a first quantity of REs in the first time unit; the quantity of REs available for transmitting the UCI in the time unit in which the UCI is located is determined based on the second quantity of REs; and the quantity of encoded modulation symbols for the UCI is determined based on relative information between the first quantity of REs and the second quantity of REs, where the first time unit is an SBFD time unit and the second time unit is an uplink time unit, or the first time unit is an uplink time unit and the second time unit is an SBFD time unit.

Based on the foregoing technical solution, when the UCI is carried in the first time unit and the TBS in the first time unit is determined based on the second quantity of REs in the second time unit, the terminal device may determine the quantity of encoded modulation symbols for the UCI in any one of the foregoing manners. This can resolve a problem that reliability of UCI transmission or reliability of PUSCH transmission is reduced because a frequency domain resource used for TBS calculation is inconsistent with a frequency domain resource on which UCI multiplexing occurs.

A fourth aspect of this application provides a communication method. The method is performed by a network device, or the method is performed by some components (for example, a processor, a chip, or a chip system) in the network device, or the method may be implemented by a logic module or software that can implement all or some functions of the network device. In the fourth aspect and possible implementations of the fourth aspect, an example in which the method is performed by the network device is used for description. In the method, the network device sends fourth information, where the fourth information indicates P sets of second indexes, one of the P sets of second indexes includes Q second indexes, the Q second indexes include a second index, the second index corresponds to a second parameter, the second parameter is for performing code rate compensation on UCI carried in an uplink time unit, P is a positive integer, and Q is a positive integer; the network device sends fifth information, where the fifth information and the second parameter are used to determine a first parameter, and the first parameter is for performing code rate compensation on UCI carried in a subband full duplex SBFD time unit; and the network device receives the UCI and uplink data in the SBFD time unit based on the fourth information and the fifth information, and/or receives the UCI and uplink data in the uplink time unit based on the fourth information.

Based on the foregoing technical solution, the network device may send the fourth information, so that after a terminal device receives the fourth information indicating the P sets of second indexes, the terminal device can determine, based on the fourth information, the second parameter used to perform code rate compensation on the UCI carried in the uplink time unit. In addition, the network device can send the fifth information, so that the terminal device can determine, based on the fifth information and the second parameter, the first parameter used to perform code rate compensation on the UCI carried in the subband full duplex SBFD time unit. Therefore, when the UCI is carried on a PUSCH, the terminal device can determine the code rate compensation parameter of the UCI in the uplink time unit and/or the code rate compensation parameter of the UCI in the SBFD time unit, so that the terminal device performs uplink transmission in the SBFD time unit and/or the uplink time unit based on the code rate compensation parameter that adapts to channel environments (or channel interference, or the like), thereby improving reliability of UCI transmission and improving communication efficiency.

In a possible implementation of the fourth aspect, a quantity of encoded modulation symbols for the UCI is determined based on a transport block size (transport block size, TBS) in a time unit in which the UCI is located and a quantity of REs available for transmitting the UCI in the time unit in which the UCI is located; and when the UCI is carried in a first time unit and a TBS in the first time unit is determined based on a second quantity of REs in a second time unit, any one of the following is met: the TBS in the time unit in which the UCI is located is determined based on a first quantity of REs in the first time unit; the quantity of REs available for transmitting the UCI in the time unit in which the UCI is located is determined based on the second quantity of REs; and the quantity of encoded modulation symbols for the UCI is determined based on relative information between the first quantity of REs and the second quantity of REs, where the first time unit is an SBFD time unit and the second time unit is an uplink time unit, or the first time unit is an uplink time unit and the second time unit is an SBFD time unit.

Based on the foregoing technical solution, when the UCI is carried in the first time unit and the TBS in the first time unit is determined based on the second quantity of REs in the second time unit, the terminal device may determine the quantity of encoded modulation symbols for the UCI in any one of the foregoing manners. This can resolve a problem that reliability of UCI transmission or reliability of PUSCH transmission is reduced because a frequency domain resource used for TBS calculation is inconsistent with a frequency domain resource on which UCI multiplexing occurs.

In a possible implementation of the third aspect or the fourth aspect, the fifth information includes any one of the following:

P sets of factors, where one of the P sets of factors includes Q factors, the second index is a $j^{th}$ second index of an $i^{th}$ set of second indexes in the P sets of second indexes, the second parameter and a $j^{th}$ factor of an $i^{th}$ set of factors in the P sets of factors are used to determine the first parameter, a value of i ranges from 1 to P, and a value of j ranges from 1 to Q; or

P factors, where the second index is located in an $i^{th}$ set of second indexes in the P sets of second indexes, the second parameter and an $i^{th}$ factor in the P factors are used to determine the first parameter, and a value of i ranges from 1 to P; or

a target factor, where the second index is a $j^{th}$ second index of an $i^{th}$ set of second indexes in the P sets of second indexes, the second parameter and the target factor are used to determine the first parameter, a value of i ranges from 1 to P, and a value of j ranges from 1 to Q; or

at least one of a first target factor, a second target factor, a third target factor, and a fourth target factor, where when the second parameter is for performing code rate compensation on a HARQ-ACK, the second parameter and the first target factor are used to determine the first parameter; when the second parameter is for performing code rate compensation on a CSI part 1, the second parameter and the second target factor are used to determine the first parameter; when the second parameter is for performing code rate compensation on a CSI part 2, the second parameter and the third target factor are used to determine the first parameter; or when the second parameter is for performing code rate compensation on CG-UCI, the second parameter and the fourth target factor are used to determine the first parameter; or

at least one of P first factors, P second factors, P third factors, and P fourth factors, where the second index is located in an $i^{th}$ set of second indexes in the P sets of second indexes, and when the second parameter is for performing code rate compensation on a HARQ-ACK, the second parameter and an $i^{th}$ factor in the P first factors are used to determine the first parameter; when the second parameter is for performing code rate compensation on a CSI part 1, the second parameter and an $i^{th}$ factor in the P second factors are used to determine the first parameter; when the second parameter is for performing code rate compensation on a CSI part 2, the second parameter and an $i^{th}$ factor in the P third factors are used to determine the first parameter; or when the second parameter is for performing code rate compensation on CG-UCI, the second parameter and an $i^{th}$ factor in the P third factors are used to determine the first parameter, where a value of i ranges from 1 to P.

Based on the foregoing technical solution, the fifth information received by the terminal device may be implemented in any one of the foregoing manners, so that flexibility of implementing the solution is improved.

A fifth aspect of this application provides a communication method. The method is performed by a terminal device, or the method is performed by some components (for example, a processor, a chip, or a chip system) in the terminal device, or the method may be implemented by a logic module or software that can implement all or some functions of the terminal device. In the fifth aspect and possible implementations of the fifth aspect, an example in which the method is performed by the terminal device is used for description. In the method, the terminal device determines a first quantity of resource elements REs in a first time unit on a PUSCH, and determines a second quantity of REs in a second time unit on the PUSCH, where the first time unit is an SBFD time unit and the second time unit is an uplink time unit, or the first time unit is an uplink time unit and the second time unit is an SBFD time unit; and the terminal device sends UCI and uplink data, where the UCI and the uplink data are carried on the PUSCH, where a quantity of encoded modulation symbols for the UCI is determined based on a TBS in a time unit in which the UCI is located and a quantity of REs available for transmitting the UCI in the time unit in which the UCI is located; and when the UCI is carried in the first time unit and a TBS in the first time unit is determined based on the second quantity of REs, any one of the following is met: the TBS in the time unit in which the UCI is located is determined based on the first quantity of REs; the quantity of REs available for transmitting the UCI in the time unit in which the UCI is located is determined based on the second quantity of REs; and the quantity of encoded modulation symbols for the UCI is determined based on relative information between the first quantity of REs and the second quantity of REs.

Based on the foregoing technical solution, after the terminal device determines the first quantity of REs in the first time unit on the PUSCH and the second quantity of REs in the second time unit on the PUSCH, when the UCI is carried in the first time unit and the TBS in the first time unit is determined based on the second quantity of REs in the second time unit, the terminal device may determine the quantity of encoded modulation symbols for the UCI in any one of the foregoing manners. This can resolve a problem that reliability of UCI transmission or reliability of PUSCH transmission is reduced because a frequency domain resource used for TBS calculation is inconsistent with a frequency domain resource on which UCI multiplexing occurs.

In a possible implementation of the fifth aspect, the method further includes: the terminal device receives sixth information, where the sixth information is for determining the first quantity of REs and the second quantity of REs; and the sixth information includes indication information indicating the first quantity of REs and the sixth information includes indication information indicating the second quantity of REs; or the sixth information includes indication information indicating the first quantity of REs and the sixth information includes an indication about the relative information between the first quantity of REs and the second quantity of REs; or the sixth information includes indication information indicating the second quantity of REs and the sixth information includes an indication about the relative information between the first quantity of REs and the second quantity of REs.

Based on the foregoing technical solution, the terminal device may receive the sixth information used to determine the first quantity of REs and the second quantity of REs, and the sixth information may be implemented in the foregoing plurality of manners, so that flexibility of implementing the solution is improved.

Optionally, the relative information includes a relative difference or a relative ratio.

A sixth aspect of this application provides a communication method. The method is performed by a network device, or the method is performed by some components (for example, a processor, a chip, or a chip system) in the network device, or the method may be implemented by a logic module or software that can implement all or some functions of the network device. In the sixth aspect and possible implementations of the sixth aspect, an example in which the method is performed by the network device is used for description. In the method, the network device determines a first quantity of resource elements REs in a first time unit on a PUSCH, and determines a second quantity of REs in a second time unit on the PUSCH, where the first time unit is an SBFD time unit and the second time unit is an uplink time unit, or the first time unit is an uplink time unit and the second time unit is an SBFD time unit; and the network device receives UCI and uplink data, where the UCI and the uplink data are carried on the PUSCH, where a quantity of encoded modulation symbols for the UCI is determined based on a TBS in a time unit in which the UCI is located and a quantity of REs available for transmitting the UCI in the time unit in which the UCI is located; and when the UCI is carried in the first time unit and a TBS in the first time unit is determined based on the second quantity of REs, any one of the following is met: the TBS in the time unit in which the UCI is located is determined based on the first quantity of REs; the quantity of REs available for transmitting the UCI in the time unit in which the UCI is located is determined based on the second quantity of REs; and the quantity of encoded modulation symbols for the UCI is determined based on relative information between the first quantity of REs and the second quantity of REs.

Based on the foregoing technical solution, after the network device determines the first quantity of REs in the first time unit on the PUSCH and the second quantity of REs in the second time unit on the PUSCH, when the UCI is carried in the first time unit and the TBS in the first time unit is determined based on the second quantity of REs in the second time unit, the network device may determine the quantity of encoded modulation symbols for the UCI in any one of the foregoing manners. This can resolve a problem that reliability of UCI transmission or reliability of PUSCH transmission is reduced because a frequency domain resource used for TBS calculation is inconsistent with a frequency domain resource on which UCI multiplexing occurs.

In a possible implementation of the sixth aspect, the method further includes: the network device sends sixth information, where the sixth information is for determining the first quantity of REs and the second quantity of REs; and the sixth information includes indication information indicating the first quantity of REs and the sixth information includes indication information indicating the second quantity of REs; or the sixth information includes indication information indicating the first quantity of REs and the sixth information includes an indication about the relative information between the first quantity of REs and the second quantity of REs; or the sixth information includes indication information indicating the second quantity of REs and the sixth information includes an indication about the relative information between the first quantity of REs and the second quantity of REs.

Based on the foregoing technical solution, the network device may send the sixth information used to determine the first quantity of REs and the second quantity of REs, and the sixth information may be implemented in the foregoing plurality of manners, so that flexibility of implementing the solution is improved.

Optionally, the relative information includes a relative difference or a relative ratio.

A seventh aspect of this application provides a communication apparatus. The apparatus is a terminal device, or the apparatus is some components (for example, a processor, a chip, or a chip system) in the terminal device, or the apparatus may be a logic module or software that can implement all or some functions of the terminal device. In the seventh aspect and possible implementations of the seventh aspect, an example in which the communication apparatus is the terminal device is used for description.

The apparatus includes a processing unit and a transceiver unit. The transceiver unit is configured to receive first information, where the first information indicates N sets of first indexes, one of the N sets of first indexes includes M first indexes, the M first indexes include a first index, the first index corresponds to a first parameter, the first parameter is for performing code rate compensation on uplink control information UCI carried in a subband full duplex SBFD time unit, N is a positive integer, and M is a positive integer; and the first information further indicates P sets of second indexes, one of the P sets of second indexes includes Q second indexes, the Q second indexes include a second index, the second index corresponds to a second parameter, the second parameter is for performing code rate compensation on UCI carried in an uplink time unit, P is a positive integer, and Q is a positive integer; the processing unit is configured to determine the first parameter and the second parameter; and the transceiver unit is further configured to send UCI and uplink data based on the first parameter and/or the second parameter, where the UCI and the uplink data are carried on a physical uplink shared channel PUSCH.

In a possible implementation of the seventh aspect, the transceiver unit is specifically configured to: send the UCI and the uplink data in the SBFD time unit based on the first parameter; and/or send the UCI and the uplink data in the uplink time unit based on the second parameter.

In a possible implementation of the seventh aspect, the transceiver unit is further configured to receive second information, where the second information indicates a third parameter and a fourth parameter, the third parameter indicates an upper limit on a quantity of encoded modulation symbols for the UCI carried on the PUSCH in the SBFD time unit, and the fourth parameter indicates an upper limit on a quantity of encoded modulation symbols for the UCI carried on the PUSCH in the uplink time unit; the transceiver unit is specifically configured to send the UCI and the uplink data in the SBFD time unit based on the first parameter and the third parameter; and the transceiver unit is specifically configured to send the UCI and the uplink data in the uplink time unit based on the second parameter and the fourth parameter.

In a possible implementation of the seventh aspect, both parameters corresponding to the N sets of first indexes and parameters corresponding to the P sets of second indexes are semi-statically configured parameters, and values of both P and N are 1.

In a possible implementation of the seventh aspect, both parameters corresponding to the N sets of first indexes and parameters corresponding to the P sets of second indexes are dynamically configured parameters, and values of both P and N are greater than 1; and the transceiver unit is further configured to receive third information, where the third information indicates one of the N sets of first indexes and/or indicates one of the P sets of second indexes.

In a possible implementation of the seventh aspect, the third information is carried in DCI; and one bit in a first field in the DCI indicates one of the N sets of first indexes, and another bit in the first field in the DCI indicates one of the P sets of second indexes; or a first field in the DCI indicates one of the N sets of first indexes, and a second field in the DCI indicates one of the P sets of second indexes.

In a possible implementation of the seventh aspect, the first information includes a first information element and a second information element in an RRC message, where the first information element indicates the N sets of first indexes, and the second information element indicates the P sets of second indexes.

In a possible implementation of the seventh aspect, the first information element is betaOffsetsCrossPri0, and the second information element is betaOffsetsCrossPri1; or the first information element is betaOffsetsCrossPri0DCI-0-2, and the second information element is betaOffsetsCrossPri1DCI-0-2; or the first information element is cg-betaOffsetsCrossPri0, and the second information element is cg-betaOffsetsCrossPri1; or the second information element is betaOffsetsCrossPri0, and the first information element is betaOffsetsCrossPri1; or the second information element is betaOffsetsCrossPri0DCI-0-2, and the first information element is betaOffsetsCrossPri1DCI-0-2; or the second information element is cg-betaOffsetsCrossPri0, and the first information element is cg-betaOffsetsCrossPri1.

In a possible implementation of the seventh aspect, the RRC message further includes a third information element, where when a value of the third information element is a target value, the third information element indicates that the first information element indicates the N sets of first indexes, and the third information element indicates that the second information element indicates the P sets of second indexes.

In a possible implementation of the seventh aspect, both the parameters corresponding to the N sets of first indexes and the parameters corresponding to the P sets of second indexes are semi-statically configured parameters; or both the parameters corresponding to the N sets of first indexes and the parameters corresponding to the P sets of second indexes are dynamically configured parameters.

In a possible implementation of the seventh aspect, the quantity of encoded modulation symbols for the UCI is determined based on a TBS in a time unit in which the UCI is located and a quantity of REs available for transmitting the UCI in the time unit in which the UCI is located; and when the UCI is carried in a first time unit and a TBS in the first time unit is determined based on a second quantity of REs in a second time unit, any one of the following is met: the TBS in the time unit in which the UCI is located is determined based on a first quantity of REs in the first time unit; the quantity of REs available for transmitting the UCI in the time unit in which the UCI is located is determined based on the second quantity of REs; and

the quantity of encoded modulation symbols for the UCI is determined based on relative information between the first quantity of REs and the second quantity of REs, where the first time unit is an SBFD time unit and the second time unit is an uplink time unit, or the first time unit is an uplink time unit and the second time unit is an SBFD time unit.

In the seventh aspect of this application, a constituent module of the communication apparatus may be further configured to perform the steps performed in the possible implementations of the first aspect, and achieve corresponding technical effects. For details, refer to the first aspect. Details are not described herein again.

An eighth aspect of this application provides a communication apparatus. The apparatus is a network device, or the apparatus is some components (for example, a processor, a chip, or a chip system) in the network device, or the apparatus may be a logic module or software that can implement all or some functions of the network device. In the eighth aspect and possible implementations of the eighth aspect, an example in which the communication apparatus is the network device is used for description.

The apparatus includes a processing unit and a transceiver unit. The processing unit is configured to determine first information; the transceiver unit is configured to send the first information, where the first information indicates N sets of first indexes, one of the N sets of first indexes includes M first indexes, the M first indexes include a first index, the first index corresponds to a first parameter, the first parameter is for performing code rate compensation on uplink control information UCI carried in a subband full duplex SBFD time unit, N is a positive integer, and M is a positive integer; and the first information further indicates P sets of second indexes, one of the P sets of second indexes includes Q second indexes, the Q second indexes include a second index, the second index corresponds to a second parameter, the second parameter is for performing code rate compensation on UCI carried in an uplink time unit, P is a positive integer, and Q is a positive integer; and the transceiver unit is further configured to receive UCI and uplink data based on the first parameter and/or the second parameter, where the UCI and the uplink data are carried on a physical uplink shared channel PUSCH.

In a possible implementation of the eighth aspect, the transceiver unit is specifically configured to: receive the UCI and the uplink data in the SBFD time unit based on the first parameter; and/or receive the UCI and the uplink data in the uplink time unit based on the second parameter.

In a possible implementation of the eighth aspect, the transceiver unit is further configured to send second information, where the second information indicates a third parameter and a fourth parameter, the third parameter indicates an upper limit on a quantity of encoded modulation symbols for the UCI carried on the PUSCH in the SBFD time unit, and the fourth parameter indicates an upper limit on a quantity of encoded modulation symbols for the UCI carried on the PUSCH in the uplink time unit; the transceiver unit is specifically configured to receive the UCI and the uplink data in the SBFD time unit based on the first parameter and the third parameter; and the transceiver unit is specifically configured to receive the UCI and the uplink data in the uplink time unit based on the second parameter and the fourth parameter.

In a possible implementation of the eighth aspect, both parameters corresponding to the N sets of first indexes and parameters corresponding to the P sets of second indexes are semi-statically configured parameters, and values of both P and N are 1.

In a possible implementation of the eighth aspect, both parameters corresponding to the N sets of first indexes and parameters corresponding to the P sets of second indexes are dynamically configured parameters, and values of both P and N are greater than 1; and the transceiver unit is further configured to send third information, where the third information indicates one of the N sets of first indexes and/or indicates one of the P sets of second indexes.

In a possible implementation of the eighth aspect, the third information is carried in DCI; and one bit in a first field in the DCI indicates one of the N sets of first indexes, and another bit in the first field in the DCI indicates one of the P sets of second indexes; or a first field in the DCI indicates one of the N sets of first indexes, and a second field in the DCI indicates one of the P sets of second indexes.

In a possible implementation of the eighth aspect, the first information includes a first information element and a second information element in an RRC message, where the first information element indicates the N sets of first indexes, and the second information element indicates the P sets of second indexes.

In a possible implementation of the eighth aspect, the first information element is betaOffsetsCrossPri0, and the second information element is betaOffsetsCrossPri1; or the first information element is betaOffsetsCrossPri0DCI-0-2, and the second information element is betaOffsetsCrossPri1DCI-0-2; or the first information element is cg-betaOffsetsCrossPri0, and the second information element is cg-betaOffsetsCrossPri1; or the second information element is betaOffsetsCrossPri0, and the first information element is betaOffsetsCrossPri1; or the second information element is betaOffsetsCrossPri0DCI-0-2, and the first information element is betaOffsetsCrossPri1DCI-0-2; or the second information element is cg-betaOffsetsCrossPri0, and the first information element is cg-betaOffsetsCrossPri1.

In a possible implementation of the eighth aspect, the RRC message further includes a third information element, where when a value of the third information element is a target value, the third information element indicates that the first information element indicates the N sets of first indexes, and the third information element indicates that the second information element indicates the P sets of second indexes.

In a possible implementation of the eighth aspect, both the parameters corresponding to the N sets of first indexes and the parameters corresponding to the P sets of second indexes are semi-statically configured parameters; or both the parameters corresponding to the N sets of first indexes and the parameters corresponding to the P sets of second indexes are dynamically configured parameters.

In a possible implementation of the eighth aspect, the quantity of encoded modulation symbols for the UCI is determined based on a TBS in a time unit in which the UCI is located and a quantity of REs available for transmitting the UCI in the time unit in which the UCI is located; and when the UCI is carried in a first time unit and a TBS in the first time unit is determined based on a second quantity of REs in a second time unit, any one of the following is met: the TBS in the time unit in which the UCI is located is determined based on a first quantity of REs in the first time unit; the quantity of REs available for transmitting the UCI in the time unit in which the UCI is located is determined based on the second quantity of REs; and the quantity of encoded modulation symbols for the UCI is determined based on relative information between the first quantity of REs and the second quantity of REs, where the first time unit is an SBFD time unit and the second time unit is an uplink time unit, or the first time unit is an uplink time unit and the second time unit is an SBFD time unit.

In the eighth aspect of this application, a constituent module of the communication apparatus may be further configured to perform the steps performed in the possible implementations of the second aspect, and achieve corresponding technical effects. For details, refer to the second aspect. Details are not described herein again.

A ninth aspect of this application provides a communication apparatus. The apparatus is a terminal device, or the apparatus is some components (for example, a processor, a chip, or a chip system) in the terminal device, or the apparatus may be a logic module or software that can implement all or some functions of the terminal device. In the ninth aspect and possible implementations of the ninth aspect, an example in which the communication apparatus is the terminal device is used for description.

The apparatus includes a processing unit and a transceiver unit. The transceiver unit is configured to receive fourth information, where the fourth information indicates P sets of second indexes, one of the P sets of second indexes includes Q second indexes, the Q second indexes include a second index, the second index corresponds to a second parameter, the second parameter is for performing code rate compensation on UCI carried in an uplink time unit, P is a positive integer, and Q is a positive integer; the terminal device receives fifth information, where the fifth information and the second parameter are used to determine a first parameter, and the first parameter is for performing code rate compensation on UCI carried in a subband full duplex SBFD time unit; and the processing unit is configured to control the transceiver unit to send the UCI and uplink data in the SBFD time unit based on the fourth information and the fifth information; and/or the processing unit is configured to control the transceiver unit to send the UCI and uplink data in the uplink time unit based on the fourth information.

In a possible implementation of the ninth aspect, a quantity of encoded modulation symbols for the UCI is determined based on a transport block size (transport block size, TBS) in a time unit in which the UCI is located and a quantity of REs available for transmitting the UCI in the time unit in which the UCI is located; and when the UCI is carried in a first time unit and a TBS in the first time unit is determined based on a second quantity of REs in a second time unit, any one of the following is met: the TBS in the time unit in which the UCI is located is determined based on a first quantity of REs in the first time unit; the quantity of REs available for transmitting the UCI in the time unit in which the UCI is located is determined based on the second quantity of REs; and the quantity of encoded modulation symbols for the UCI is determined based on relative information between the first quantity of REs and the second quantity of REs, where the first time unit is an SBFD time unit and the second time unit is an uplink time unit, or the first time unit is an uplink time unit and the second time unit is an SBFD time unit.

In the ninth aspect of this application, a constituent module of the communication apparatus may be further configured to perform the steps performed in the possible implementations of the third aspect, and achieve corresponding technical effects. For details, refer to the third aspect. Details are not described herein again.

A tenth aspect of this application provides a communication apparatus. The apparatus is a network device, or the apparatus is some components (for example, a processor, a chip, or a chip system) in the network device, or the apparatus may be a logic module or software that can implement all or some functions of the network device. In the eighth aspect and possible implementations of the eighth aspect, an example in which the communication apparatus is the network device is used for description.

The apparatus includes a processing unit and a transceiver unit. The transceiver unit is configured to send fourth information, where the fourth information indicates P sets of second indexes, one of the P sets of second indexes includes Q second indexes, the Q second indexes include a second index, the second index corresponds to a second parameter, the second parameter is for performing code rate compensation on UCI carried in an uplink time unit, P is a positive integer, and Q is a positive integer; the transceiver unit is further configured to send fifth information, where the fifth information and the second parameter are used to determine a first parameter, and the first parameter is for performing code rate compensation on UCI carried in a subband full duplex SBFD time unit; and the processing unit is configured to control the transceiver unit to receive the UCI and uplink data in the SBFD time unit based on the fourth information and the fifth information; and/or the processing unit is configured to control the transceiver unit to receive the UCI and uplink data in the uplink time unit based on the fourth information.

In a possible implementation of the tenth aspect, a quantity of encoded modulation symbols for the UCI is determined based on a transport block size (transport block size, TBS) in a time unit in which the UCI is located and a quantity of REs available for transmitting the UCI in the time unit in which the UCI is located; and when the UCI is carried in a first time unit and a TBS in the first time unit is determined based on a second quantity of REs in a second time unit, any one of the following is met: the TBS in the time unit in which the UCI is located is determined based on a first quantity of REs in the first time unit; the quantity of REs available for transmitting the UCI in the time unit in which the UCI is located is determined based on the second quantity of REs; and the quantity of encoded modulation symbols for the UCI is determined based on relative information between the first quantity of REs and the second quantity of REs, where the first time unit is an SBFD time unit and the second time unit is an uplink time unit, or the first time unit is an uplink time unit and the second time unit is an SBFD time unit.

In a possible implementation of the ninth aspect or the tenth aspect, the fifth information includes any one of the following:

P sets of factors, where one of the P sets of factors includes Q factors, the second index is a $j^{th}$ second index of an $i^{th}$ set of second indexes in the P sets of second indexes, the second parameter and a $j^{th}$ factor of an $i^{th}$ set of factors in the P sets of factors are used to determine the first parameter, a value of i ranges from 1 to P, and a value of j ranges from 1 to Q; or

P factors, where the second index is located in an $i^{th}$ set of second indexes in the P sets of second indexes, the second parameter and an $i^{th}$ factor in the P factors are used to determine the first parameter, and a value of i ranges from 1 to P; or

a target factor, where the second index is a $j^{th}$ second index of an $i^{th}$ set of second indexes in the P sets of second indexes, the second parameter and the target factor are used to determine the first parameter, a value of i ranges from 1 to P, and a value of j ranges from 1 to Q; or

at least one of a first target factor, a second target factor, a third target factor, and a fourth target factor, where when the second parameter is for performing code rate compensation on a HARQ-ACK, the second parameter and the first target factor are used to determine the first parameter; when the second parameter is for performing code rate compensation on a CSI part 1, the second parameter and the second target factor are used to determine the first parameter; when the second parameter is for performing code rate compensation on a CSI part 2, the second parameter and the third target factor are used to determine the first parameter; or when the second parameter is for performing code rate compensation on CG-UCI, the second parameter and the fourth target factor are used to determine the first parameter; or

at least one of P first factors, P second factors, P third factors, and P fourth factors, where the second index is located in an $i^{th}$ set of second indexes in the P sets of second indexes, and when the second parameter is for performing code rate compensation on a HARQ-ACK, the second parameter and an $i^{th}$ factor in the P first factors are used to determine the first parameter; when the second parameter is for performing code rate compensation on a CSI part 1, the second parameter and an $i^{th}$ factor in the P second factors are used to determine the first parameter; when the second parameter is for performing code rate compensation on a CSI part 2, the second parameter and an $i^{th}$ factor in the P third factors are used to determine the first parameter; or when the second parameter is for performing code rate compensation on CG-UCI, the second parameter and an $i^{th}$ factor in the P third factors are used to determine the first parameter, where a value of i ranges from 1 to P.

In the tenth aspect of this application, a constituent module of the communication apparatus may be further configured to perform the steps performed in the possible implementations of the fourth aspect, and achieve corresponding technical effects. For details, refer to the fourth aspect. Details are not described herein again.

An eleventh aspect of this application provides a communication apparatus. The apparatus is a terminal device, or the apparatus is some components (for example, a processor, a chip, or a chip system) in the terminal device, or the apparatus may be a logic module or software that can implement all or some functions of the terminal device. In the eleventh aspect and possible implementations of the eleventh aspect, an example in which the communication apparatus is the terminal device is used for description.

The apparatus includes a processing unit and a transceiver unit. The processing unit is configured to determine a first quantity of resource elements REs in a first time unit on a PUSCH, and determine a second quantity of REs in a second time unit on the PUSCH, where the first time unit is an SBFD time unit and the second time unit is an uplink time unit, or the first time unit is an uplink time unit and the second time unit is an SBFD time unit; and the transceiver unit is configured to send UCI and uplink data, where the UCI and the uplink data are carried on the PUSCH, where a quantity of encoded modulation symbols for the UCI is determined based on a TBS in a time unit in which the UCI is located and a quantity of REs available for transmitting the UCI in the time unit in which the UCI is located; and when the UCI is carried in the first time unit and a TBS in the first time unit is determined based on the second quantity of REs, any one of the following is met: the TBS in the time unit in which the UCI is located is determined based on the first quantity of REs; the quantity of REs available for transmitting the UCI in the time unit in which the UCI is located is determined based on the second quantity of REs; and the quantity of encoded modulation symbols for the UCI is determined based on relative information between the first quantity of REs and the second quantity of REs.

In a possible implementation of the eleventh aspect, the transceiver unit is further configured to receive sixth information, where the sixth information is for determining the first quantity of REs and the second quantity of REs; and the sixth information includes indication information indicating the first quantity of REs and the sixth information includes indication information indicating the second quantity of REs; or the sixth information includes indication information indicating the first quantity of REs and the sixth information includes an indication about the relative information between the first quantity of REs and the second quantity of REs; or the sixth information includes indication information indicating the second quantity of REs and the sixth information includes an indication about the relative information between the first quantity of REs and the second quantity of REs.

In a possible implementation of the eleventh aspect, the relative information includes a relative difference or a relative ratio.

In the eleventh aspect of this application, a constituent module of the communication apparatus may be further configured to perform the steps performed in the possible implementations of the fifth aspect, and achieve corresponding technical effects. For details, refer to the fifth aspect. Details are not described herein again.

A twelfth aspect of this application provides a communication apparatus. The apparatus is a network device, or the apparatus is some components (for example, a processor, a chip, or a chip system) in the network device, or the apparatus may be a logic module or software that can implement all or some functions of the network device. In the twelfth aspect and possible implementations of the twelfth aspect, an example in which the communication apparatus is the network device is used for description.

The apparatus includes a processing unit and a transceiver unit. The processing unit is configured to determine a first quantity of resource elements REs in a first time unit on a PUSCH, and determine a second quantity of REs in a second time unit on the PUSCH, where the first time unit is an SBFD time unit and the second time unit is an uplink time unit, or the first time unit is an uplink time unit and the second time unit is an SBFD time unit; and the transceiver unit is configured to receive UCI and uplink data, where the UCI and the uplink data are carried on the PUSCH, where a quantity of encoded modulation symbols for the UCI is determined based on a TBS in a time unit in which the UCI is located and a quantity of REs available for transmitting the UCI in the time unit in which the UCI is located; and when the UCI is carried in the first time unit and a TBS in the first time unit is determined based on the second quantity of REs, any one of the following is met: the TBS in the time unit in which the UCI is located is determined based on the first quantity of REs; the quantity of REs available for transmitting the UCI in the time unit in which the UCI is located is determined based on the second quantity of REs; and the quantity of encoded modulation symbols for the UCI is determined based on relative information between the first quantity of REs and the second quantity of REs.

In a possible implementation of the twelfth aspect, the transceiver unit is further configured to send sixth information, where the sixth information is for determining the first quantity of REs and the second quantity of REs; and the sixth information includes indication information indicating the first quantity of REs and the sixth information includes indication information indicating the second quantity of REs; or the sixth information includes indication information indicating the first quantity of REs and the sixth information includes an indication about the relative information between the first quantity of REs and the second quantity of REs; or the sixth information includes indication information indicating the second quantity of REs and the sixth information includes an indication about the relative information between the first quantity of REs and the second quantity of REs.

In a possible implementation of the twelfth aspect, the relative information includes a relative difference or a relative ratio.

In the twelfth aspect of this application, a constituent module of the communication apparatus may be further configured to perform the steps performed in the possible implementations of the sixth aspect, and achieve corresponding technical effects. For details, refer to the sixth aspect. Details are not described herein again.

A thirteenth aspect of this application provides a communication apparatus, including at least one processor. The at least one processor is coupled to a memory; the memory is configured to store a program or instructions; and the at least one processor is configured to execute the program or instructions, to enable the apparatus to implement the method according to any one of the first aspect to the sixth aspect or the possible implementations thereof.

A fourteenth aspect of embodiments of this application provides a communication apparatus, including at least one logic circuit and an input/output interface. The logic circuit is configured to perform the method according to any one of the first aspect to the sixth aspect or the possible implementations thereof.

A fifteenth aspect of embodiments of this application provides a communication system. The communication system includes the communication apparatus in the seventh aspect and the communication apparatus in the eighth aspect, and/or the communication system includes the communication apparatus in the ninth aspect and the communication apparatus in the tenth aspect, and/or the communication system includes the communication apparatus in the eleventh aspect and the communication apparatus in the twelfth aspect, and/or the communication system includes the communication apparatus in the thirteenth aspect, and/or the communication system includes the communication apparatus in the fourteenth aspect.

A sixteenth aspect of embodiments of this application provides a computer-readable storage medium storing one or more computer-executable instructions. When the computer-executable instructions are executed by a processor, the processor performs the method according to any one of the first aspect to the sixth aspect or the possible implementations thereof.

A seventeenth aspect of embodiments of this application provides a computer program product (or referred to as a computer program) stored in one or more computers. When the computer program product is executed by a processor, the processor performs the method according to any one of the first aspect to the sixth aspect or the possible implementations thereof.

An eighteenth aspect of embodiments of this application provides a chip system. The chip system includes at least one processor, configured to support a communication apparatus in implementing the method according to any one of the first aspect to the sixth aspect or the possible implementations thereof.

In a possible design, the chip system may further include a memory. The memory is configured to store program instructions and data that are necessary for the communication apparatus. The chip system may include a chip, or may include a chip and another discrete component. Optionally, the chip system further includes an interface circuit, and the interface circuit provides program instructions and/or data for the at least one processor.

For technical effects brought by any design in the seventh aspect to the eighteenth aspect, refer to technical effects brought by different designs in the first aspect to the sixth aspect. Details are not described herein again.

It can be learned from the foregoing technical solutions that the solutions provided in this application have the following beneficial effects:

In some implementations, the first information received by the terminal device indicates the N sets of first indexes and the P sets of second indexes. Then the terminal device can determine, based on the N sets of first indexes, the first parameter used to perform code rate compensation on the UCI carried in the SBFD time unit, and the terminal device can also determine, based on the P sets of second indexes, the second parameter used to perform code rate compensation on the UCI carried in the uplink time unit. Correspondingly, the terminal device may send the UCI and the uplink data on the PUSCH based on the first parameter and/or the second parameter. Therefore, when the UCI is carried on the PUSCH, the terminal device can determine the code rate compensation parameter of the UCI in the uplink time unit and/or the code rate compensation parameter of the UCI in the SBFD time unit, so that the terminal device performs uplink transmission in the SBFD time unit and/or the uplink time unit based on the code rate compensation parameter that adapts to the channel environments (or channel interference, or the like), thereby improving reliability of UCI transmission and improving communication efficiency.

In some other implementations, after the terminal device receives the fourth information indicating the P sets of second indexes, the terminal device can determine, based on the fourth information, the second parameter used to perform code rate compensation on the UCI carried in the uplink time unit. In addition, the terminal device can determine, based on the fifth information and the second parameter, the first parameter used to perform code rate compensation on the UCI carried in the subband full duplex SBFD time unit. Therefore, when the UCI is carried on the PUSCH, the terminal device can determine the code rate compensation parameter of the UCI in the uplink time unit and/or the code rate compensation parameter of the UCI in the SBFD time unit, so that the terminal device performs uplink transmission in the SBFD time unit and/or the uplink time unit based on the code rate compensation parameter that adapts to the channel environments (or channel interference, or the like), thereby improving reliability of UCI transmission and improving communication efficiency.

In some other implementations, after the terminal device determines the first quantity of REs in the first time unit on the PUSCH and the second quantity of REs in the second time unit on the PUSCH, when the UCI is carried in the first time unit and the TBS in the first time unit is determined based on the second quantity of REs in the second time unit, the terminal device may determine the quantity of encoded modulation symbols for the UCI in any one of the foregoing manners. This can resolve a problem that reliability of UCI transmission or reliability of PUSCH transmission is reduced because a frequency domain resource used for TBS calculation is inconsistent with a frequency domain resource on which UCI multiplexing occurs.

## BRIEF DESCRIPTION OF DRAWINGS

FIG. 1a is a diagram of a transmission resource according to this application;
FIG. 1b is another diagram of a transmission resource according to this application;
FIG. 1c is another diagram of a transmission resource according to this application;
FIG. 1d is another diagram of a transmission resource according to this application;
FIG. 2 is a diagram of a communication system according to this application;

FIG. 3 is a diagram of a communication method according to this application;
FIG. 4 is another diagram of a communication method according to this application;
FIG. 5a is another diagram of a communication method according to this application;
FIG. 5b is another diagram of a communication method according to this application;
FIG. 6 is a diagram of a communication apparatus according to this application;
FIG. 7 is another diagram of a communication apparatus according to this application;
FIG. 8 is another diagram of a communication apparatus according to this application; and
FIG. 9 is another diagram of a communication apparatus according to this application.

## DESCRIPTION OF EMBODIMENTS

First, some terms in embodiments of this application are described for ease of understanding by a person skilled in the art.

(1) Terminal device: The terminal device may be a wireless terminal device that can receive scheduling and indication information of a network device. A wireless terminal device may be a device providing voice and/or data connectivity for a user, a handheld device having a wireless connection function, or another processing device connected to a wireless modem.

The terminal device may communicate with one or more core networks or the Internet through a RAN. The terminal device may be a mobile terminal device such as a mobile phone (or referred to as a "cellular" phone or a mobile phone (mobile phone)), a computer, or a data card. For example, the terminal device may be a portable, pocket-sized, handheld, computer built-in, or vehicle-mounted mobile apparatus that exchanges voice and/or data with the radio access network. For example, the wireless terminal device may be a device such as a personal communication service (personal communication service, PCS) phone, a cordless phone, a session initiation protocol (SIP) phone, a wireless local loop (wireless local loop, WLL) station, a personal digital assistant (personal digital assistant, PDA), a tablet computer (Pad), or a computer having a wireless transceiver function. The wireless terminal device may also be referred to as a system, a subscriber unit (subscriber unit), a subscriber station (subscriber station), a mobile station (mobile station, MS), a remote station (remote station), an access point (access point, AP), a remote terminal device (remote terminal), an access terminal device (access terminal), a user terminal device (user terminal), a user agent (user agent), a subscriber station device (subscriber station, SS), customer premises equipment (customer premises equipment, CPE), a terminal (terminal), user equipment (user equipment, UE), a mobile terminal (mobile terminal, MT), or the like.

By way of example rather than limitation, in embodiments of this application, the terminal device may alternatively be a wearable device. The wearable device may also be referred to as a wearable smart device, a smart wearable device, or the like, and is a general term for wearable devices that are intelligently designed and developed for daily wear by using a wearable technology, for example, glasses, gloves, watches, clothes, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable smart devices include full-featured and large-sized devices that can implement all or some functions without depending on smartphones, for example, smart watches or smart glasses, and include devices that are dedicated to only one type of application function and need to collaboratively work with other devices such as smartphones, for example, various smart bands, smart helmets, or smart jewelry for monitoring vital signs.

The terminal may alternatively be an uncrewed aerial vehicle, a robot, a terminal in device-to-device (device-to-device, D2D) communication, a terminal in vehicle-to-everything (vehicle to everything, V2X), a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like.

In addition, the terminal device may be a terminal device in an evolved communication system (for example, a sixth generation (6th generation, 6G) communication system) after a fifth generation (5th generation, 5G) communication system, a terminal device in a future evolved public land mobile network (public land mobile network, PLMN), or the like. For example, a 6G network may further extend a form and a function of a 5G communication terminal, and a 6G terminal includes but is not limited to a vehicle, a cellular network terminal (integrating a function of a satellite terminal), an uncrewed aerial vehicle, and an Internet of Things (internet of things, IoT) device.

(2) Network device: The network device may be a device in a wireless network. For example, the network device may be a RAN node (or device) connecting a terminal device to the wireless network, and may also be referred to as a base station. Currently, some examples of RAN devices are: a base station gNB (gNodeB) in a 5G communication system, a transmission reception point (transmission reception point, TRP), an evolved NodeB (evolved NodeB, eNB), a radio network controller (radio network controller, RNC), a NodeB (NodeB, NB), a home base station (for example, a home evolved NodeB or a home NodeB, HNB), a base band unit (base band unit, BBU), or a Wireless Fidelity (wireless fidelity, Wi-Fi) access point AP. In addition, in a network structure, a network device may include a central unit (central unit, CU) node, a distributed unit (distributed unit, DU) node, a CU-control plane (control plane, CP), a CU-user plane (user plane, UP), a radio unit (radio unit, RU), or a RAN device including a CU node and a DU node. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). In different systems, the CU (or the CU-CP and the CU-UP), the DU, or the RU may also have different names, but a person skilled in the art may understand meanings thereof. For example, in an ORAN system, the CU may also be referred to as an open CU (O-CU), the DU may also be referred to as an open DU (O-DU), the CU-CP may also be referred to as an open CU-CP (O-CU-CP), the CU-UP may also be referred to as an open CU-UP (O-CU-UP), and the RU may also be referred to as an open RU (O-RU). Any one of the CU (or the CU-CP or the CU-UP), the DU, and the RU may be implemented by using a software module, a hardware module, or a combination of a software module and a hardware module.

The network device may be another apparatus that provides a wireless communication function for the terminal device. A specific technology and a specific device form that are used by the network device are not limited in embodiments of this application. For ease of description, this is not limited in embodiments of this application.

The network device may further include a core network device. For example, the core network device includes network elements such as a mobility management entity (mobility management entity, MME), a home subscriber server (home subscriber server, HSS), a serving gateway (serving gateway, S-GW), a policy and charging rules function (policy and charging rules function, PCRF), and a public data network gateway (public data network gateway, PDN gateway, P-GW) in a 4th generation (4th generation, 4G) network, and an access and mobility management function (access and mobility management function, AMF), a user plane function (user plane function, UPF), and a session management function (session management function, SMF) in a 5G network. In addition, the core network device may further include another core network device in the 5G network and a next generation network of the 5G network.

In embodiments of this application, an apparatus configured to implement a function of the network device may be the network device, or may be an apparatus that can support the network device in implementing the function, for example, a chip system. The apparatus may be installed in the network device. In the technical solutions provided in embodiments of this application, an example in which the apparatus configured to implement the function of the network device is the network device is used for describing the technical solutions provided in embodiments of this application.

(3) Configuration and preconfiguration: In this application, both the configuration and the preconfiguration are used. The configuration means that a network device/server sends configuration information of some parameters or values of parameters to a terminal by using a message or signaling, so that the terminal determines, based on the values or the information, a communication parameter or a resource used for transmission. Similar to the configuration, the preconfiguration may be parameter information or a parameter value negotiated by a network device/server with a terminal device in advance, or may be parameter information or a parameter value used by a base station/network device or a terminal device as specified in a standard protocol, or may be parameter information or a parameter value prestored in a base station/server or a terminal device. This is not limited in this application.

Further, these values and parameters may be changed or updated.

(4) Uplink control information (uplink control information, UCI) includes one or more of the following: a hybrid automatic repeat request acknowledgment (hybrid automatic repeat request-acknowledgement, HARQ-ACK), a channel state information (channel state information, CSI) part 1 (CSI part 1), a CSI part 2 (CSI part 2), configured grant uplink control information (configured grant-uplink control information, CG-UCI), or a HARQ-ACK jointly encoded with CG-UCI (HARQ and CG-UCI for short). It may be understood that the CSI may include the CSI part 1 (CSI part 1) and/or the CSI part 2 (CSI part 2).

For different types of UCI, formulas for calculating a quantity of encoded modulation symbols may be different, and some examples are provided below for description.

1. A quantity $Q'_{ACK}$ of encoded modulation symbols per layer for the HARQ-ACK satisfies formula (1):

$$Q'_{ACK} = \min\left\{ \left\lceil \frac{(O_{ACK}+L_{ACK})\beta^{PUSCH}_{offset} \cdot \sum_{l=0}^{N^{PUSCH}_{symb,all}-1} M^{UCI}_{sc}(l)}{\sum_{r=0}^{C_{UL-SCH}-1} K_r} \right\rceil, \left\lceil \alpha \cdot \sum_{l=l_0}^{N^{PUSCH}_{symb,all}-1} M^{UCI}_{sc}(l) \right\rceil \right\},$$

where

$O_{ACK}$ is a quantity of bits of the HARQ-ACK; $L_{ACK}$ is a quantity of CRC bits of the HARQ-ACK; $\beta_{offset}^{PUSCH} = \beta_{offset}^{HARQ-ACK}$, where $\beta_{offset}^{HARQ-ACK}$ is configured by using RRC signaling and indicated by RRC signaling or DCI signaling; $C_{UL-SCH}$ is a quantity of code blocks of an uplink shared channel (Uplink Shared Channel, UL-SCH) transmitted on a PUSCH; $K_r$ is a size of an $r^{th}$ code block of the UL-SCH transmitted on the PUSCH; $M_{sc}^{UCI}(l)$ is a quantity of REs that can be used to transmit UCI on an orthogonal frequency division multiplexing (Orthogonal Frequency Division Multiplexing, OFDM) symbol 1, where $l = 0, 1, 2, \ldots, N_{symb,all}^{PUSCH}$; $N_{symb,all}^{PUSCH}$ is a total quantity of OFDM symbols of the PUSCH, including an OFDM symbol used for a demodulation reference signal (Demodulation Reference Signal, DMRS): for any OFDM symbol that is of the PUSCH and that carries a DMRS, $M_{sc}^{UCI}(l) = 0$; for any OFDM symbol that is of the PUSCH and that does not carry a DMRS, $M_{sc}^{UCI}(l) = M_{sc}^{PUSCH} - M_{sc}^{PT-RS}(l)$, where $M_{sc}^{PUSCH}$ represents a scheduled bandwidth (represented by a quantity of subcarriers) for PUSCH transmission, and $M_{sc}^{PT-RS}(l)$ represents a quantity of subcarriers that carry a phase tracking reference signal (Phase Tracking Reference Signal, PTRS) on the OFDM symbol 1 in PUSCH transmission; $\alpha$ is a configured scaling (scaling) factor; and $l_0$ is an index of a first OFDM symbol that is after a first DRMS symbol in PUSCH transmission and that does not carry a DMRS.

2. A quantity $Q_{CSI-1}'$ of encoded modulation symbols per layer for the CSI part 1 satisfies formula (2):

$$Q_{CSI-1}' = \min\left\{ \left\lceil \frac{(O_{CSI-1}+L_{CSI-1})\beta_{offset}^{PUSCH} \cdot \sum_{l=0}^{N_{symb,all}^{PUSCH}-1} M_{sc}^{UCI}(l)}{\sum_{r=0}^{C_{UL-SCH}-1} K_r} \right\rceil, \left\lceil \alpha \cdot \sum_{l=0}^{N_{symb,all}^{PUSCH}-1} M_{sc}^{UCI}(l) \right\rceil - Q_{ACK/CG-UCI}' \right\},$$

where

$O_{CSI-1}$ is a quantity of bits of the CSI part 1; $L_{CSI-1}$ is a quantity of CRC bits of the CSI part 1; $\beta_{offset}^{PUSCH} = \beta_{offset}^{CSI-part1}$, where $\beta_{offset}^{CSI-part1}$ is configured by using RRC signaling and is indicated by using RRC signaling or DCI signaling; $C_{UL-SCH}$ is a quantity of code blocks of a UL-SCH transmitted on a PUSCH; $K_r$ is a size of an $r^{th}$ code block of the UL-SCH transmitted on the PUSCH; $M_{sc}^{UCI}(l)$ is a quantity of REs that can be used to transmit UCI on an OFDM symbol l, where $l = 0, 1, 2, \ldots, N_{symb,all}^{PUSCH}$; $N_{symb,all}^{PUSCH}$ is a total quantity of OFDM symbols of the PUSCH, including an OFDM symbol used for a DMRS: for any OFDM symbol that is of the PUSCH and that carries a DMRS, $M_{sc}^{UCI}(l) = 0$; for any OFDM symbol that is of the PUSCH and that does not carry a DMRS, $M_{sc}^{UCI}(l) = M_{sc}^{PUSCH} - M_{sc}^{PT-RS}(l)$, where $M_{sc}^{PUSCH}$ represents a scheduled bandwidth (represented by a quantity of subcarriers) for PUSCH transmission, and $M_{sc}^{PT-RS}(l)$ represents a quantity of subcarriers that carry a PTRS on the OFDM symbol l in PUSCH transmission; for $Q_{ACK/CGSCH}'$, if the HARQ-ACK and the UL-SCH are transmitted on a same PUSCH, and there is no CG-USCI, $Q_{ACK/CG-UCI}' = Q_{ACK}'$, where if a quantity of information bits of the HARQ-ACK is greater than 2 bits, $Q_{ACK}'$ is shown in formula (1); otherwise,

$$Q_{ACK}' = \sum_{l=0}^{N_{symb,all}^{PUSCH}-1} \overline{M}_{sc,rvd}^{ACK}(l),$$ where $\overline{M}_{sc,rvd}^{ACK}(l)$ is a quantity of reserved REs for potential HARQ-ACK transmission on the OFDM symbol l; or if the HARQ-ACK, the CG-UCI, and the UL-SCH are transmitted on a same PUSCH, $Q'_{ACK/CG-UCI} = Q'_{ACK}$, where $Q'_{ACK}$ is shown in formula (5); or if the CG-UCI and the UL-SCH are transmitted on a same PUSCH and there is no HARQ-ACK, $Q'_{ACK/CG-UCI} = Q'_{CG-UCI}$, where Q'$_{CG-UCI}$ is shown in formula (4); and $\alpha$ is a configured higher layer parameter scaling.

3. A quantity $Q'_{CSI-2}$ of encoded modulation symbols per layer for the CSI part 2 satisfies formula (3):

$$Q'_{CSI-2} = \min\left\{\left\lceil\frac{(O_{CSI-2}+L_{CSI-2})\beta_{offset}^{PUSCH}\cdot\Sigma_{l=0}^{N_{symb,all}^{PUSCH}-1}M_{sc}^{UCI}(l)}{\Sigma_{r=0}^{C_{UL-SCH}-1}K_r}\right\rceil, \left\lceil\alpha\cdot\Sigma_{l=0}^{N_{symb,all}^{PUSCH}-1}M_{sc}^{UCI}(l)\right\rceil - Q'_{ACK/CG-UCI} - Q'_{CSI-1}\right\},$$

where

$O_{CSI-2}$ is a quantity of bits of the CSI part 2; $L_{CSI-2}$ is a quantity of CRC bits of the CSI part 2; $\beta_{offset}^{PUSCH} = \beta_{offset}^{CSI-part2}$, where $\beta_{offset}^{CSI-part2}$ is configured by using RRC signaling and is indicated by using RRC signaling or DCI signaling; $C_{UL-SCH}$ is a quantity of code blocks of a UL-SCH transmitted on a PUSCH; $K_r$ is a size of an r$^{th}$ code block of the UL-SCH transmitted on the PUSCH; $M_{sc}^{UCI}(l)$ is a quantity of REs that can be used to transmit UCI on an OFDM symbol 1, where $l = 0, 1, 2, ..., N_{symb,all}^{PUSCH}$; $N_{symb,all}^{PUSCH}$ is a total quantity of OFDM symbols of the PUSCH, including an OFDM symbol used for a DMRS: for any OFDM symbol that is of the PUSCH and that carries a DMRS, $M_{sc}^{UCI}(l) = 0$; for any OFDM symbol that is of the PUSCH and that does not carry a DMRS, $M_{sc}^{UCI}(l) = M_{sc}^{PUSCH} - M_{sc}^{PT-RS}(l)$, where $M_{sc}^{PUSCH}$ represents a scheduled bandwidth (represented by a quantity of subcarriers) for PUSCH transmission, and $M_{sc}^{PT-RS}(l)$ represents a quantity of subcarriers that carry a PTRS on the OFDM symbol l in PUSCH transmission; for $Q'_{ACK/CGSCH}$, if the HARQ-ACK and the UL-SCH are transmitted on a same PUSCH, and there is no CG-USCI, $Q'_{ACK/CG-UCI} = Q'_{ACK}$, where if a quantity of information bits of the HARQ-ACK is greater than 2 bits, Q'$_{ACK}$ is shown in formula (1); otherwise, Q'$_{ACK}$ = 0; or if the HARQ-ACK, the CG-UCI, and the UL-SCH are transmitted on a same PUSCH, $Q'_{ACK/CG-UCI} = Q'_{ACK}$, where $Q'_{ACK}$ is shown in formula (5); or if the CG-UCI and the UL-SCH are transmitted on a same PUSCH and there is no HARQ-ACK, $Q'_{ACK/CG-UCI} = Q'_{CG-UCI}$, where Q'$_{CG-UCI}$ is shown in formula (4); $Q'_{CSI-1}$ is a quantity of encoded modulation symbols per layer for the CSI part 1 sent on the PUSCH; and $\alpha$ is a configured higher layer parameter scaling.

4. A quantity Q'$_{CG-UCI}$ of encoded modulation symbols per layer for the CG-UCI satisfies formula (4):

$$Q'_{CG-UCI} = \min\left\{\left\lceil\frac{(O_{CG-UCI}+L_{CG-UCI})\beta_{offset}^{PUSCH}\cdot\Sigma_{l=0}^{N_{symb,all}^{PUSCH}-1}M_{sc}^{UCI}(l)}{\Sigma_{r=0}^{C_{UL-SCH}-1}K_r}\right\rceil, \left\lceil\alpha\cdot\Sigma_{l=l_0}^{N_{symb,all}^{PUSCH}-1}M_{sc}^{UCI}(l)\right\rceil\right\},$$

where

$O_{CG-UCI}$ is a quantity of bits of the CG-UCI; $L_{CG-UCI}$ is a quantity of CRC bits of the CG-UCI; $\beta_{offset}^{PUSCH} = \beta_{offset}^{CG-UCI}$,

where $\beta_{offset}^{CG-UCI}$ is configured by using RRC signaling and indicated by using RRC signaling; $C_{UL-SCH}$ is a quantity of code blocks of a UL-SCH transmitted on a PUSCH; $K_r$ is a size of an $r^{th}$ code block of the UL-SCH transmitted on the PUSCH; $M_{sc}^{UCI}(l)$ is a quantity of REs that can be used to transmit UCI on an OFDM symbol 1, where $l = 0, 1, 2, ..., N_{symb,all}^{PUSCH}$; $N_{symb,all}^{PUSCH}$ is a total quantity of OFDM symbols of the PUSCH, including an OFDM symbol used for a DMRS: for any OFDM symbol that is of the PUSCH and that carries a DMRS, $M_{sc}^{UCI}(l) = 0$; for any OFDM symbol that is of the PUSCH and that does not carry a DMRS, $M_{sc}^{UCI}(l) = M_{sc}^{PUSCH} - M_{sc}^{PT-RS}(l)$, where $M_{sc}^{PUSCH}$ represents a scheduled bandwidth (represented by a quantity of subcarriers) for PUSCH transmission, and $M_{sc}^{PT-RS}(l)$ represents a quantity of subcarriers that carry a PTRS on the OFDM symbol 1 in PUSCH transmission; $\alpha$ is a configured higher layer parameter scaling; and $l_0$ is an index of a first OFDM symbol that is after a first DRMS symbol in PUSCH transmission and that does not carry a DMRS.

5. A quantity $Q'_{ACK}$ of encoded modulation symbols per layer for the HARQ-ACK jointly encoded with the CG-UCI satisfies formula (5):

$$Q'_{ACK} = min\left\{ \left\lceil \frac{(O_{ACK}+O_{CG-UCI}+L_{ACK})\beta_{offset}^{PUSCH} \cdot \sum_{l=0}^{N_{symb,all}^{PUSCH}-1} M_{sc}^{UCI}(l)}{\sum_{r=0}^{C_{UL-SCH}-1} K_r} \right\rceil , \left\lceil \alpha \cdot \sum_{l=l_0}^{N_{symb,all}^{PUSCH}-1} M_{sc}^{UCI}(l) \right\rceil \right\},$$

where
$O_{ACK}$ is a quantity of bits of the HARK-ACK; $O_{CG-UCI}$ is a quantity of bits of the CG-UCI; $L_{ACK}$ is a quantity of CRC bits of the HARK-ACK and the CG-UCI; $\beta_{offset}^{PUSCH} = \beta_{offset}^{HARQ-ACK}$, where $\beta_{offset}^{HARQ-ACK}$ is configured by using RRC signaling and indicated by using RRC signaling; $C_{UL-SCH}$ is a quantity of code blocks of a UL-SCH transmitted on a PUSCH; $K_r$ is a size of an $r^{th}$ code block of the UL-SCH transmitted on the PUSCH; $M_{sc}^{UCI}(l)$ is a quantity of REs that can be used to transmit UCI on an OFDM symbol 1, where $l = 0, 1, 2, ..., N_{symb,all}^{PUSCH}$; $N_{symb,all}^{PUSCH}$ is a total quantity of OFDM symbols of the PUSCH, including an OFDM symbol used for a DMRS: for any OFDM symbol that is of the PUSCH and that carries a DMRS, $M_{sc}^{UCI}(l) = 0$; for any OFDM symbol that is of the PUSCH and that does not carry a DMRS, $M_{sc}^{UCI}(l) = M_{sc}^{PUSCH} - M_{sc}^{PT-RS}(l)$, where $M_{sc}^{PUSCH}$ represents a scheduled bandwidth (represented by a quantity of subcarriers) for PUSCH transmission, and $M_{sc}^{PT-RS}(l)$ represents a quantity of subcarriers that carry a PTRS on the OFDM symbol 1 in PUSCH transmission; $\alpha$ is a configured higher layer parameter scaling; and $l_0$ is an index of a first OFDM symbol that is after a first DRMS symbol in PUSCH transmission and that does not carry a DMRS.

(5) Uplink time unit and subband full duplex (subband full duplex, SBFD) time unit. It is generally considered that a frequency resource (or referred to as a frequency domain resource, a frequency band resource, or the like) in an uplink time unit is an uplink frequency resource, and that a frequency resource in a downlink time unit is a downlink frequency resource. A frequency resource in an SBFD time unit includes an uplink frequency resource and a downlink frequency resource. The uplink frequency resource is used for uplink transmission, and the downlink frequency resource is used for downlink transmission.

In a possible implementation, a terminal device may perform communication in a time division duplex (time division duplex, TDD) mode. To be specific, based on scheduling of the terminal device by a network device, time domain resources are divided into uplink (uplink, UL) resources and downlink (downlink, DL) resources.

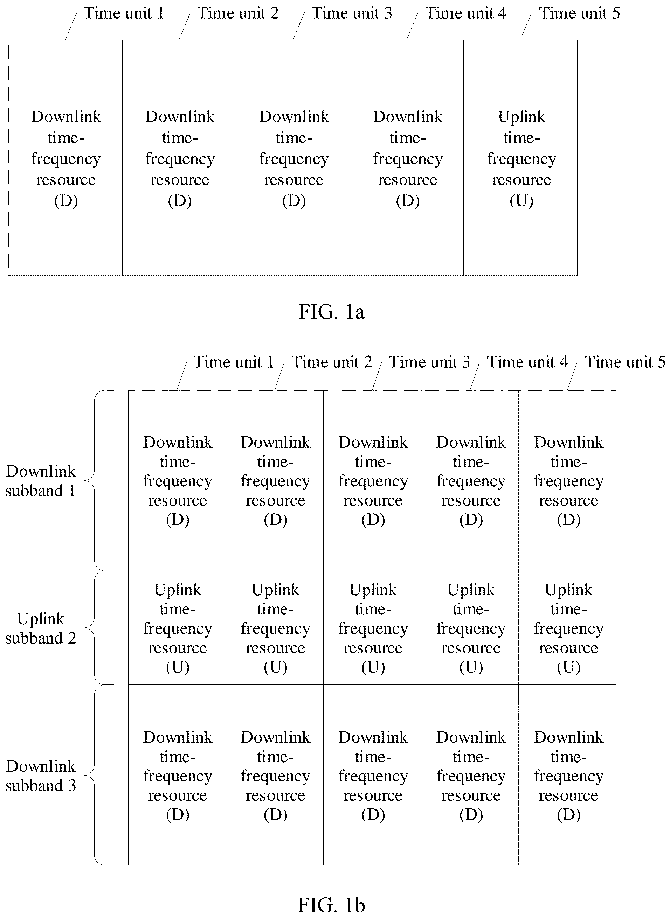

For example, an example of a transmission resource in a TDD communication process is shown in FIG. 1a. In FIG. 1a, for example, a transmission time domain resource scheduled by the network device includes a time unit 1, a time unit 2, a time unit 3, a time unit 4, and a time unit 5 in FIG. 1a. In FIG. 1a, the time unit 1 to the time unit 4 are downlink (download, DL) transmission time units, a time-frequency resource in the downlink transmission time unit is a downlink time-frequency resource (D for short), and the terminal device can receive a downlink signal in the time unit 1 to the time unit 4. The time unit 5 is an uplink transmission time unit, a time-frequency resource in the uplink transmission time unit is an uplink time-frequency resource (U for short), and the terminal device can send an uplink signal in the time unit 5. Correspondingly, the network device may send a transmission parameter in the time unit 5 to the terminal device in advance, for example, a code rate compensation parameter $\beta$ of UCI carried on a PUSCH, or a parameter (for example, an uplink frequency domain resource in the time unit 5) for determining a quantity of encoded modulation symbols. In other words, in the time units 1 to 4, because the network device does not schedule the terminal device to send an uplink signal, the network device does not need to deliver uplink transmission parameters of the time units 1 to 4.

It should be noted that, in the example shown in FIG. 1a (and FIG. 1b to FIG. 1d below), the time unit may include a frame, a subframe, a slot, a symbol, or the like. Optionally, in this example, the time unit may be a slot.

In a TDD communication process, a limitation on uplink time domain resource allocation may lead to reduced uplink coverage and increased latency in TDD. For example, in a scenario shown in FIG. 1a, in the time units 1 to 4, the terminal device cannot transmit an uplink signal, and the terminal device can send an uplink signal only after waiting for the time unit 5.

A possible enhancement method is to perform communication in a subband full duplex (subband full duplex, SBFD) mode. In a process in which the terminal device is scheduled to perform uplink transmission in an SBFD time unit, the terminal device can send uplink signals in some frequency bands, and the network device may send downlink signals in some frequency bands and receive uplink signals in some other frequency bands. This can improve uplink coverage performance and can provide more uplink transmission opportunities to reduce communication latency. In other words, a network device supporting full duplex (full duplex, FD) may simultaneously send a downlink signal in a frequency band and receive an uplink signal in another frequency band in an SBFD time unit. Generally, for terminal devices supporting half duplex (half duplex, HF), some terminal devices may send uplink signals in an SBFD time unit, and some other terminal devices may receive uplink signals in the SBFD time unit. For example, the following provides descriptions with reference to the implementation examples shown in FIG. 1b to FIG. 1d. In the following implementation examples shown in FIG. 1b to FIG. 1d, an example in which the transmission time domain resource scheduled by the network device includes the time unit 1 to the time unit 5 in FIG. 1a is still used for description.

For example, in FIG. 1b, in comparison with the implementation example shown in FIG. 1a, the terminal device that supports communication in an uplink subband 2 can send an uplink signal in one or more of the time unit 1 to the time unit 5 based on scheduling by the network device.

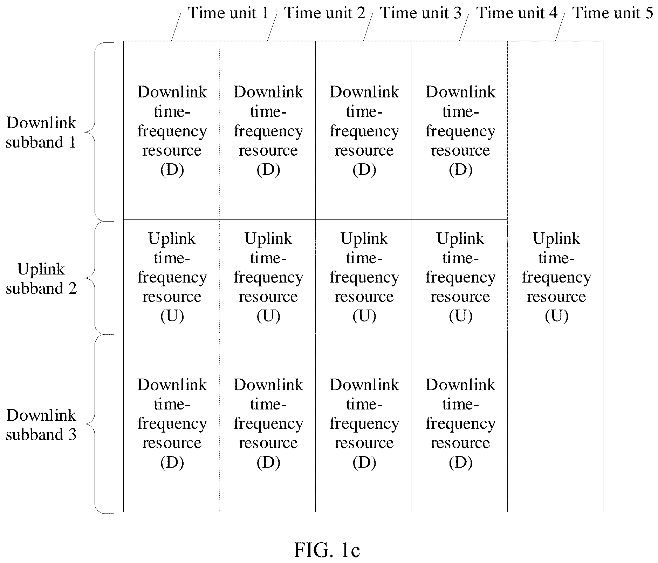

For another example, in FIG. 1c, in comparison with the implementation example shown in FIG. 1a, the terminal device that supports communication in the uplink subband 2 can send an uplink signal in one or more of the time unit 1 to the time unit 4 based on scheduling by the network device.

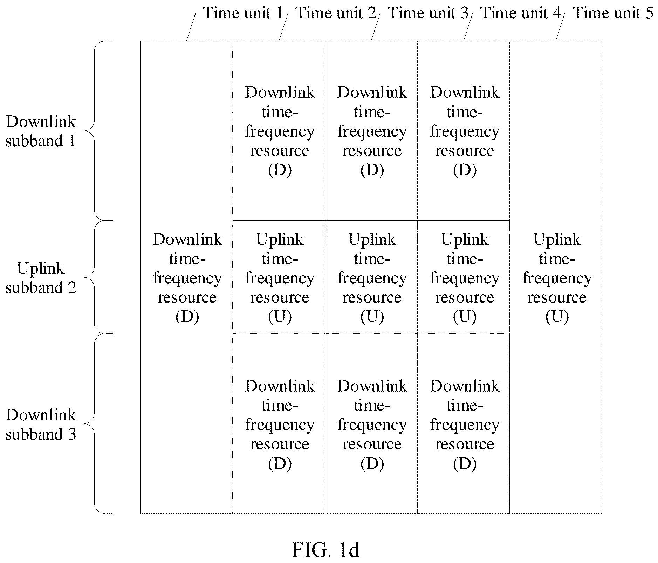

For another example, in FIG. 1d, in comparison with the implementation example shown in FIG. 1a, the terminal device that supports communication in the uplink subband 2 can send an uplink signal in one or more of the time unit 2 to the time unit 5 based on scheduling by the network device.

It can be learned from the foregoing implementation examples that, in comparison with a process of communication based on an uplink time unit (for example, FIG. 1a), in a process of communication based on an SBFD time unit (for example, FIG. 1b to FIG. 1d), the terminal device is supported in sending an uplink signal in more time units, so that uplink coverage performance can be improved, and that more uplink transmission opportunities can be provided to reduce communication latency.

(6) The terms "system" and "network" in embodiments of this application may be used interchangeably. "A plurality of" refers to two or more than two. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between associated objects. The term "at least one of the following items (pieces)" or an expression similar to the term indicates any combination of these items, including any combination of singular items (pieces) or plural items (pieces). For example, "at least one of A, B, and C" includes A, B, C, AB, AC, BC, or ABC. In addition, unless otherwise specified, ordinal numbers such as "first" and "second" in embodiments of this application are used for distinguishing between a plurality of objects, instead of limiting an order, a time sequence, a priority, or importance of the plurality of objects.

(7) To clearly describe the technical solutions in embodiments of this application, terms such as "first" and "second" are used in embodiments of this application to distinguish between same items or similar items having basically same functions and purposes. For example, first information and second information are merely used to distinguish between different information. A person skilled in the art may understand that the terms such as "first" and "second" do not limit a quantity and an execution sequence.

(8) "Sending" and "receiving" in embodiments of this application represent signal transmission directions. For example, "sending information to a terminal device" may be understood as a destination of the information being the terminal device, and may include direct sending through an air interface, or indirect sending by another unit or module through an air interface. "Receiving information from a network device" may be understood as a source of the information being the network device, and may include direct receiving from the network device through an air interface, or indirect receiving from the network device from another unit or module through an air interface. "Sending" may also be understood as "outputting" from a chip interface, and "receiving" may also be understood as "inputting" into the chip interface. In other words, sending and receiving may be performed between devices, for example, between the network device and the terminal device, or may be performed in a device, for example, sending or receiving is performed between components, modules, chips, software modules, or hardware modules in a device through a bus, a cable, or an interface. It may be understood that necessary processing, such as encoding and modulation, may be performed on the information between the source at which the information is sent and the destination, but the destination may understand valid information from the source. Similar descriptions in this application may be understood similarly, and details are not described again.

In this application, unless otherwise specified, mutual reference may be made between same or similar parts of different embodiments. In embodiments of this application and methods/designs/implementations in embodiments, unless otherwise specified or logic conflicts occur, terms and/or descriptions between different embodiments and between the methods/designs/implementations in embodiments are consistent and may be mutually referenced, and different embodiments and technical features in the methods/designs/implementations in embodiments may be combined to form a new embodiment, method, or implementation based on an internal logic relationship thereof. The following implementations of this application are not intended to limit the protection scope of this application.

This application may be applied to a long term evolution (long term evolution, LTE) system, a new radio (new radio, NR) system, or a communication system (for example, 6G) evolved after 5G. The communication system includes at least one network device and/or at least one terminal device.

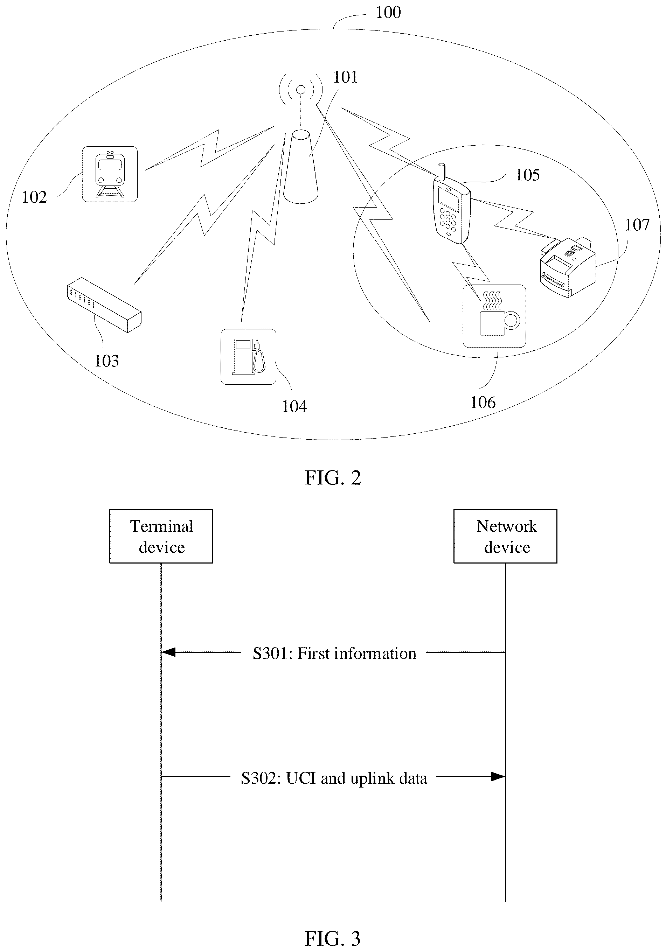

FIG. 2 is a diagram of a communication system according to this application. FIG. 2 shows an example of one network device 101 and six terminal devices. The six terminal devices are respectively a terminal device 102, a terminal device 103, a terminal device 104, a terminal device 105, a terminal device 106, and a terminal device 107. In the example shown in FIG. 2, an example in which the terminal device 102 is a vehicle, the terminal device 103 is a smart air conditioner, the terminal device 104 is a smart fuel dispenser, the terminal device 105 is a mobile phone, the terminal device 106 is a smart teacup, and the terminal device 107 is a printer is used for description.

The communication system shown in FIG. 2 is used as an example. In an uplink communication process, when uplink control information (uplink control information, UCI) sent by the terminal device is carried on a physical uplink shared channel (physical uplink shared channel, PUSCH), the network device may send, to the terminal device in advance, a transmission parameter of the UCI carried on the PUSCH in an uplink time unit, for example, one or more parameters in the foregoing formula (1) to formula (5).

However, due to relatively large differences between an uplink time unit and an SBFD time unit in channel environments and channel interference, if a transmission parameter of the uplink time unit is reused in the SBFD time unit, reliability of UCI transmission may be reduced, and communication efficiency is affected. For example, when the network device configures the transmission parameter of the UCI in the time unit 5 based on the uplink time unit shown in FIG. 1a, if the time unit 5 in which the network device actually schedules the terminal device is the SBFD time unit shown in FIG. 1b, the terminal device uses the transmission parameter corresponding to the uplink time unit in the SBFD time unit. Because the terminal device uses a transmission parameter that does not adapt to the channel environments (or channel interference, or the like), reliability of UCI is reduced.

With reference to some implementation examples, the following describes a problem that may be caused by reusing a transmission parameter of an uplink time unit in an SBFD time unit.

In an implementation example, the transmission parameter of the uplink time unit, reused in the SBFD time unit, may include a code rate compensation parameter of UCI.

Specifically, because factors such as high-order modulation are introduced in a PUSCH, reliability of PUSCH transmission is lower than reliability of physical uplink control channel (physical uplink control channel, PUCCH) transmission. To ensure reliability of UCI transmission on the PUSCH, a protocol defines different code rate compensation parameters (denoted as $\beta_{\text{offset}}^{\text{PUSCH}}$) for different UCI types. $\beta_{\text{offset}}^{\text{PUSCH}}$ may adjust a quantity of encoded modulation symbols (as shown in the foregoing formula (1) to formula (5)) per layer for the UCI, to adjust a UCI code rate, thereby achieving an objective of adjusting reliability of UCI multiplexing in PUSCH transmission.

Steps of determining $\beta_{\text{offset}}^{\text{PUSCH}}$ by a terminal device are briefly described as follows:

Step 1: A network device configures, for the terminal device by using higher layer signaling, one semi-static UCI-multiplexing code rate compensation parameter index set, or two or four dynamic UCI-multiplexing code rate compensation parameter index sets.

Step 2: For a semi-static configuration, the terminal device looks up, based on an index in a semi-statically configured UCI-multiplexing code rate compensation parameter index set, a UCI-multiplexing code rate compensation parameter table predefined in a standard, to obtain a corresponding UCI-multiplexing code rate compensation parameter

$\beta_{offset}^{PUSCH}$; or for a dynamic configuration, the network device includes a code rate compensation parameter indication field beta_offset indicator into downlink control information (Downlink control information, DCI) signaling, where the field indicates that one set is selected from two or four dynamically configured UCI-multiplexing code rate compensation parameter index sets and used to look up a UCI-multiplexing code rate compensation parameter table predefined in a standard, to obtain a corresponding UCI-multiplexing code rate compensation parameter $\beta_{offset}^{PUSCH}$.

For step 1, details in different cases are as follows:

Case 1: dynamic-grant (dynamic grant, DG) PUSCH and semi-statically configured $\beta_{offset}^{PUSCH}$.

For the DG-PUSCH, it is assumed that DCI signaling (DCI format 0_0/0_1/0_2) for scheduling the PUSCH does not include a beta_offset indicator field, and that a semi-static UCI-multiplexing code rate compensation parameter index set is configured for the terminal device by using higher layer signaling. For example, "DCI format 0_0/0_1": Field betaOffsets in an information element UCI-OnPUSCH in the higher layer signaling = 'semiStatic'. For another example, "DCI format 0_2": Field betaOffsetsDCI-0-2 in an information element UCI-OnPUSCH-DCI-0-2 in the higher layer signaling = 'semiStaticDCI-0-2'.

Correspondingly, code rate compensation parameters $\beta_{offset}^{HARQ-ACK}$, $\beta_{offset}^{CSI-1}$, and $\beta_{offset}^{CSI-2}$ are indicated by BetaOffsets associated with betaOffsets = 'semiStatic'. For example, "DCI format 0_0/0_1": Field betaOffsets in an information element UCI-OnPUSCH in the higher layer signaling = BetaOffsets indication associated with 'semiStatic'. For another example, "DCI format 0_2": Field betaOffsetsDCI-0-2 in an information element UCI-OnPUSCH-DCI-0-2 in the higher layer signaling = BetaOffsets indication associated with 'semiStaticDCI-0-2'.

Optionally, if the PUSCH is associated with a priority 0 or a priority 1, and the higher layer signaling configures the terminal device to enable a multiplexing function for HARQ-ACK information with different priorities, that is, Higher layer signaling field uci-MuxWithDiffPrio = 'enabled (enabled)', where the function indicates that HARQ-ACK information with the priority 1 or HARQ-ACK information with the priority 0 is multiplexed on the PUSCH with the priority 0 or the PUSCH with the priority 1 respectively, a code rate compensation parameter for UCI multiplexing is determined according to the following method:

For the HARQ-ACK information with the priority 1, for example, "DCI format 0_0/0_1": If the higher layer signaling configures a semi-static UCI-multiplexing code rate compensation parameter index set for the terminal device, that is, Higher layer signaling field betaOffsetsCrossPri1 = 'semiStatic', the code rate compensation parameter $\beta_{offset}^{HARQ-ACK,1}$ is indicated by BetaOffsetsCrossPri associated with betaOffsetsCrossPri1 = 'semiStatic'. For another example, "DCI format 0_2": If the higher layer signaling configures a semi-static UCI-multiplexing code rate compensation parameter index set for the terminal device, that is, Higher layer signaling field betaOffsetsCrossPri1DCI-0-2 = 'semiStaticDCI-0-2', the code rate compensation parameter $\beta_{offset}^{HARQ-ACK,1}$ is indicated by BetaOffsetsCrossPri associated with betaOffsetsCrossPri1DCI-0-2 = 'semiStaticDCI-0-2'.

For the HARQ-ACK information with the priority 0, for example, "DCI format 0_0/0_1": If the higher layer signaling configures a semi-static UCI-multiplexing code rate compensation parameter index set for the terminal device, that is, Higher layer signaling field betaOffsetCrossPri0 = 'semiStatic', the code rate compensation parameter $\beta_{offset}^{HARQ-ACK,0}$ is indicated by BetaOffsetsCrossPri associated with betaOffsetCrossPri0 = 'semiStatic'. For another example, "DCI format 0_2": If the higher layer signaling configures a semi-static UCI-multiplexing code rate compensation parameter index set for the terminal device, that is, Higher layer signaling field betaOffsetsCrossPri0DCI-0-2 = 'semiStati DCI-0-2', the code rate compensation parameter $\beta_{offset}^{HARQ-ACK,0}$ is indicated by BetaOffsetsCrossPri associated with betaOffsetsCrossPri0DCI-0-2 = 'semiStaticDCI-0-2'.

Case 2: configured-grant (Configured grant, CG) PUSCH and semi-statically configured $\beta_{offset}^{PUSCH}$.

For the CG-PUSCH, if the higher layer signaling configures a semi-static UCI-multiplexing code rate compensation parameter index set for the terminal device, that is, Higher layer signaling field CG-UCI-OnPUSCH = 'semiStatic', the code rate compensation parameters $\beta_{offset}^{HARQ-ACK}$, $\beta_{offset}^{CSI-1}$, and $\beta_{offset}^{CSI-2}$ are indicated by BetaOffsets associated with CG-UCI-OnPUSCH = 'semiStatic'.

Optionally, if the PUSCH is associated with a priority 0 or a priority 1, and the higher layer signaling configures the terminal device to enable a multiplexing function for HARQ-ACK information with different priorities, that is, Higher layer signaling field uci-MuxWithDiffPrio = 'enabled', a code rate compensation parameter for UCI multiplexing is determined according to the following method:

For HARQ-ACK information with the priority 1, if the higher layer signaling configures a semi-static UCI-multiplexing code rate compensation parameter index set for the terminal device, that is, Higher layer signaling field cg-betaOffsetsCrossPri1 = 'semiStatic', the code rate compensation parameter $\beta_{offset}^{HARQ-ACK,1}$ is indicated by BetaOffsetsCrossPri associated with cg-betaOffsetsCrossPri1 = 'semiStatic'.

For HARQ-ACK information with the priority 0, if the higher layer signaling configures a semi-static UCI-multiplexing code rate compensation parameter index set for the terminal device, that is, Higher layer signaling field cg-betaOffsetsCrossPri0 = 'semiStatic', the code rate compensation parameter $\beta_{offset}^{HARQ-ACK,0}$ is indicated by BetaOffsetsCrossPri associated with cg-betaOffsetsCrossPri0 = 'semiStatic'.


Case 3: CG Type 2 PUSCH and dynamically configured $\beta_{offset}^{PUSCH}$.

For the CG Type 2 PUSCH, the higher layer signaling configures a dynamic UCI-multiplexing code rate compensation parameter index set for the terminal device, that is, Higher layer signaling field CG-UCI-OnPUSCH = 'dynamic'. In this case, code rate compensation parameters $\beta_{offset}^{HARQ-ACK}$, $\beta_{offset}^{CSI-1}$, and $\beta_{offset}^{CSI-2}$ are indicated by a first set among a plurality of sets of BetaOffsets associated with CG-UCI-OnPUSCH = 'dynamic'.

Optionally, if the PUSCH is associated with a priority 0 or a priority 1, and the higher layer signaling configures the terminal device to enable a multiplexing function for HARQ-ACK information with different priorities, that is, Higher layer signaling field uci-MuxWithDiffPrio = 'enabled', a code rate compensation parameter for UCI multiplexing is determined according to the following method.

For HARQ-ACK information with the priority 1, if the higher layer signaling configures a dynamic UCI-multiplexing code rate compensation parameter index set for the terminal device, that is, Higher layer signaling field cg-betaOffsetsCrossPri11 = 'dynamic', the code rate compensation parameter $\beta_{offset}^{HARQ-ACK,1}$ is indicated by a first set among a plurality of sets of BetaOffsetsCrossPri associated with cg-betaOffsetsCrossPri1 = 'dynamic'

For HARQ-ACK information with the priority 0, if the higher layer signaling configures a dynamic UCI-multiplexing code rate compensation parameter index set for the terminal device, that is, Higher layer signaling field cg-betaOffsetsCrossPri0 = 'dynamic', the code rate compensation parameter $\beta_{offset}^{HARQ-ACK,0}$ is indicated by a first set among a plurality of sets of BetaOffsetsCrossPri associated with cg-betaOffsetsCrossPri0 = 'dynamic'.


Case 4: DG-PUSCH scheduled by DCI format 0_0 and dynamically configured $\beta_{offset}^{PUSCH}$.

For the PUSCH scheduled by the DCI format 0_0, if the higher layer signaling configures a dynamic UCI-multiplexing code rate compensation parameter index set for the terminal device, that is, Field betaOffsets in an information element UCI-OnPUSCH in the higher layer signaling = 'dynamic', code rate compensation parameters $\beta_{offset}^{HARQ-ACK}$, $\beta_{offset}^{CSI-1}$, and $\beta_{offset}^{CSI-2}$ are indicated by a first set among a plurality of sets of BetaOffsets associated with the field betaOffsets = 'dynamic' in the information element UCI-OnPUSCH in the higher layer signaling.

Optionally, if the higher layer signaling configures the terminal device to enable a multiplexing function for HARQ-ACK information with different priorities, that is, Higher layer signaling field uci-MuxWithDiffPrio = 'enabled', for HARQ-ACK information with the priority 1, the higher layer signaling configures a dynamic UCI-multiplexing code rate compensation parameter index set for the terminal device, that is, Higher layer signaling field betaOffsetsCrossPri1 = 'dynamic', and the code rate compensation parameter $\beta_{offset}^{HARQ-ACK,1}$ is indicated by a first set among a plurality of sets of BetaOffsetsCrossPri associated with betaOffsetsCrossPri1 = 'dynamic'.


Case 5: DG-PUSCH scheduled by DCI format 0_1 and dynamically configured $\beta_{offset}^{PUSCH}$.

For the PUSCH scheduled by the DCI format 0_1, if the DCI signaling includes a code rate compensation parameter indication field beta_offset indicator (2 bits), and the higher layer signaling configures a dynamic UCI-multiplexing code rate compensation parameter index set for the terminal device, that is, Field betaOffsets in an information element UCI-OnPUSCH in the higher layer signaling = 'dynamic', code rate compensation parameters $\beta_{offset}^{HARQ-ACK}$, $\beta_{offset}^{CSI-1}$, and $\beta_{offset}^{CSI-2}$ are indicated by one of a plurality of sets of BetaOffsets associated with betaOffsets = 'dynamic' indicated by the beta_offset indicator field in the DCI signaling.

Optionally, if the higher layer signaling configures the terminal device to enable a multiplexing function for HARQ-ACK information with different priorities, that is, Higher layer signaling field uci-MuxWithDiffPrio = 'enabled':

For HARQ-ACK information with the priority 1, if the higher layer signaling configures a dynamic UCI-multiplexing code rate compensation parameter index set for the terminal device, that is, Higher layer signaling field betaOffsetsCrossPri1 = 'dynamic', the code rate compensation parameter $\beta_{offset}^{HARQ-ACK,1}$ is indicated by one of a plurality of sets of BetaOffsetsCrossPri associated with betaOffsetsCrossPri1= 'dynamic' indicated by the beta_offset indicator field in the DCI signaling.

For HARQ-ACK information with the priority 0, if the higher layer signaling configures a dynamic UCI-multiplexing code rate compensation parameter index set for the terminal device, that is, Higher layer signaling field betaOffsetsCrossPri0 = 'dynamic', the code rate compensation parameter $\beta_{offset}^{HARQ-ACK,0}$ is indicated by one of a plurality of sets of BetaOffsetsCrossPri associated with betaOffsetsCrossPri0 = 'dynamic' indicated by the beta_offset indicator field in the DCI signaling.

Case 6: DG-PUSCH scheduled by DCI format 0_2 and dynamically configured $\beta_{offset}^{PUSCH}$.

For the PUSCH scheduled by the DCI format 0_2, it is assumed that the DCI signaling includes the code rate compensation parameter indication field beta_offset indicator.

Note: A length of beta_offset indicator is 1 bit (bit) or 2 bits, which is indicated by a dynamicDCI-0-2 field in a betaOffsetsDCI-0-2 information element in an information element UCI-OnPUSCH-DCI-0-2 in the higher layer signaling. If dynamicDCI-0-2 = 'oneBit', the length of beta_offset indicator is 1 bit. If dynamicDCI-0-2 = 'twoBits', the length of beta_offset indicator is 2 bits. In addition, if the higher layer signaling configures a dynamic UCI-multiplexing code rate compensation parameter index set for the terminal device, that is, Higher layer signaling field betaOffsetsDCI-0-2 = 'dynamicDCI-0-2', code rate compensation parameters $\beta_{offset}^{HARQ-ACK}$, $\beta_{offset}^{CSI-1}$, and $\beta_{offset}^{CSI-2}$ are indicated by one of a plurality of sets of BetaOffsets associated with betaOffsetsDCI-0-2 = 'dynamicDCI-0-2' indicated by the beta_offset indicator field in the DCI signaling.

Optionally, if the higher layer signaling configures the terminal device to enable a multiplexing function for HARQ-ACK information with different priorities, that is, Higher layer signaling field uci-MuxWithDiffPrio = 'enabled':

For HARQ-ACK information with the priority 1, if the higher layer signaling configures a dynamic UCI-multiplexing code rate compensation parameter index set for the terminal device, that is, Higher layer signaling field betaOffsetsCrossPri1DCI-0-2 ='dynamicDCI-0-2', the code rate compensation parameter $\beta_{offset}^{HARQ-ACK,1}$ is indicated by one of a plurality of sets of BetaOffsetsCrossPri associated with betaOffsetsCrossPri1CI-0-2 = 'dynamicDCI-0-2' indicated by the beta_offset indicator field in the DCI signaling.

For HARQ-ACK information with the priority 0, if the higher layer signaling configures a dynamic UCI-multiplexing code rate compensation parameter index set for the terminal device, that is, Higher layer signaling field betaOffsetsCrossPri0DCI-0-2 = 'dynamicDCI-0-2', the code rate compensation parameter $\beta_{offset}^{HARQ-ACK,0}$ is indicated by one of a plurality of sets of BetaOffsetsCrossPri associated with betaOffsetsCrossPri1DCI-0-2 = 'dynamicDCI-0-2' indicated by the beta_offset indicator field in the DCI signaling.

For step 2, an implementation process of the terminal device is as follows:

(1) Method for determining $\beta_{offset}^{HARQ-ACK}$. In the UCI-multiplexing code rate compensation parameter index set BetaOffsets, fields betaOffsetACK-Index1, betaOffsetACK-Index2, and betaOffsetACK-Index3 respectively indicate indexes $I_{offset,0}^{HARQ-ACK}$, $I_{offset,1}^{HARQ-ACK}$, and $I_{offset,2}^{HARQ-ACK}$.

Optionally, if a quantity of information bits of the HARQ-ACK does not exceed 2 bits, the terminal device uses the index $I_{offset,0}^{HARQ-ACK}$ to determine $\beta_{offset}^{HARQ-ACK}$.

Optionally, if a quantity of information bits of the HARQ-ACK exceeds 2 bits but does not exceed 11 bits, the terminal device uses the index $I_{offset,1}^{HARQ-ACK}$ to determine $\beta_{offset}^{HARQ-ACK}$.

Optionally, if a quantity of information bits of the HARQ-ACK exceeds 11 bits, the terminal device uses the index $I_{offset,2}^{HARQ-ACK}$ to determine $\beta_{offset}^{HARQ-ACK}$.

(2) Method for determining $\beta_{offset}^{CSI-1}$ and $\beta_{offset}^{CSI-2}$. In the UCI-multiplexing code rate compensation parameter index set BetaOffsets, fields betaOffsetCSI-Part1-Index1, betaOffsetCSI-Part2-Index1, betaOffsetCSI-Part1-Index2, and betaOffsetCSI-Part2-Index2 respectively indicate indexes $I_{offset,0}^{CSI-1}$, $I_{offset,0}^{CSI-2}$, $I_{offset,1}^{CSI-1}$, and $I_{offset,1}^{CSI-2}$.

Optionally, if a quantity of information bits of the CSI part 1 does not exceed 11 bits, the terminal device uses the index $I_{offset,0}^{CSI-1}$ to look up Table 3 to determine $\beta_{offset}^{CSI-1}$.

Optionally, if a quantity of information bits of the CSI part 2 does not exceed 11 bits, the terminal device uses the index $I_{offset,0}^{CSI-2}$ to look up Table 3 to determine $\beta_{offset}^{CSI-2}$.

Optionally, if a quantity of information bits of the CSI part 1 exceeds 11 bits, the terminal device uses the index $I_{offset,1}^{CSI-1}$ to look up Table 3 to determine $\beta_{offset}^{CSI-1}$.

Optionally, if a quantity of information bits of the CSI part 2 exceeds 11 bits, the terminal device uses the index $I_{offset,1}^{CSI-2}$ to look up Table 3 to determine $\beta_{offset}^{CSI-2}$.

(3) Method for determining $\beta_{offset}^{HARQ-ACK,0}$. A first value, a second value, and a third value in a UCI-multiplexing code rate compensation parameter index set BetaOffsetsCrossPri0, betaOffsetsCrossPri0DCI-0-2, or cg-betaOffsetsCrossPri0 respectively indicate indexes $I_{offset,0}^{HARQ-ACK,0}$, $I_{offset,1}^{HARQ-ACK,0}$, and $I_{offset,2}^{HARQ-ACK,0}$.

Optionally, if a quantity of information bits of the HARQ-ACK does not exceed 2 bits, the terminal device uses the index $I_{offset,0}^{HARQ-ACK,0}$ to determine $\beta_{offset}^{HARQ-ACK,0}$.

Optionally, if a quantity of information bits of the HARQ-ACK exceeds 2 bits but does not exceed 11 bits, the terminal device uses the index $I_{offset,1}^{HARQ-ACK,0}$ to determine $\beta_{offset}^{HARQ-ACK,0}$.

Optionally, if a quantity of information bits of the HARQ-ACK exceeds 11 bits, the terminal device uses the index $I_{offset,2}^{HARQ-ACK,0}$ to determine $\beta_{offset}^{HARQ-ACK,0}$.

(4) Method for determining $\beta_{offset}^{HARQ-ACK,1}$. A first value, a second value, and a third value in a UCI-multiplexing code rate compensation parameter index set BetaOffsetsCrossPri1, betaOffsetsCrossPri1DCI-0-2, or cg-betaOffsetsCrossPri1 respectively indicate indexes $I_{offset,0}^{HARQ-ACK,1}$, $I_{offset,1}^{HARQ-ACK,1}$, and $I_{offset,2}^{HARQ-ACK,1}$.

Optionally, if a quantity of information bits of the HARQ-ACK does not exceed 2 bits, the terminal device uses the index $I_{offset,0}^{HARQ-ACK,1}$ to determine $\beta_{offset}^{HARQ-ACK,1}$.

Optionally, if a quantity of information bits of the HARQ-ACK exceeds 2 bits but does not exceed 11 bits, the terminal device uses the index $I_{offset,1}^{HARQ-ACK,1}$ to determine $\beta_{offset}^{HARQ-ACK,1}$.

Optionally, if a quantity of information bits of the HARQ-ACK exceeds 11 bits, the terminal device uses the index $I_{offset,2}^{HARQ-ACK,1}$ to determine $\beta_{offset}^{HARQ-ACK,1}$.

However, channel environments in an SBFD slot differ greatly from channel environments in an uplink slot. In the SBFD slot, the network device is subject to cross link interference (cross link interference, CLI) from another network device, and uplink performance is severely affected. However, in the uplink slot, uplink performance is relatively good because there is no CLI. Therefore, if the UCI is multiplexed in the SBFD slot, reliability of UCI transmission is severely affected.

However, in the foregoing implementation process, reliability and flexibility of UCI multiplexing in the SBFD slot cannot be ensured. A specific analysis is as follows:

For case 1 and case 2, there is only one semi-statically configured UCI-multiplexing code rate compensation parameter index set. This means that UCI-multiplexing code rate compensation parameters used for UCI multiplexing in the uplink slot and UCI multiplexing in the SBFD slot are consistent. However, in comparison with the uplink slot, the SBFD slot is subject to more severe and complex interference. Therefore, it is difficult to ensure reliability of UCI multiplexing in the SBFD slot by using the UCI-multiplexing code rate compensation parameter corresponding to the uplink slot.

For case 3 and case 4, although there are a plurality of sets of dynamically configured UCI code rate compensation parameters, only the first set of parameters can be used. Therefore, the problem in case 1 and case 2 also exists.

For case 5 and case 6, although there are a plurality of sets of dynamically configured UCI code rate compensation parameters, if the plurality of sets of parameters are allocated for UCI multiplexing in the SBFD slot and the uplink slot, a quantity of candidate UCI-multiplexing code rate compensation parameter index sets for UCI multiplexing in each type of slot is reduced, and flexibility of UCI multiplexing is reduced. (For example, currently, a maximum of four sets are supported. If the four sets are allocated to the uplink slot and the SBFD slot, two sets are allocated to each type of slot, which reduces flexibility.)

For case 5 and case 6, if the PUSCH is a multislot PUSCH, and the multislot PUSCH can be allocated to both an uplink symbol and an SBFD symbol, because the DCI includes only one beta_offset indicator, and only one set can be selected from a plurality of sets of UCI code rate compensation parameters, the problem in case 1 and case 2 also exists.

In another implementation example, a transmission parameter of the uplink time unit, reused in the SBFD time unit, may include a quantity of encoded modulation symbols for the UCI.

Specifically, if the multislot PUSCH may be allocated to the SBFD slot and the uplink slot, and frequency domain resources of the multislot PUSCH allocated to the SBFD slot and the uplink slot are different, the multislot PUSCH may include: a physical uplink shared channel repetition type A (PUSCH repetition type A), a physical uplink shared channel repetition type B (PUSCH repetition type B), a PUSCH with transport block processing over multiple slots (transport block processing over multiple slots, TBoMS), multiple PUSCHs scheduled by using single DCI, and the like.

For example, the HARQ-ACK is used as an example, and a quantity of encoded modulation symbols per layer for the HARQ-ACK may be determined by using the foregoing formula (1). The following problems exist:

If the parameter $\sum_{r=0}^{C_{UL-SCH}-1} K_r$ in the denominator is calculated based on the frequency domain resource in the uplink slot, but UCI multiplexing occurs in the SBFD slot, the parameter $\sum_{l=0}^{N_{symb,all}^{PUSCH}-1} M_{sc}^{UCI}(l)$ in the numerator is a total quantity of available time-frequency resources in the SBFD slot. As a result, $\sum_{l=0}^{N_{symb,all}^{PUSCH}-1} M_{sc}^{UCI}(l)$ and $\sum_{r=0}^{C_{UL-SCH}-1} K_r$ do not match, the calculated $Q'_{ACK}$ is excessively small, and a UCI code rate is excessively high. Therefore, reliability of UCI multiplexing is reduced.

Conversely, if the parameter $\sum_{r=0}^{C_{UL-SCH}-1} K_r$ in the denominator is calculated based on the frequency domain resource in the SBFD slot, but UCI occurs in the uplink slot, the parameter $\sum_{l=0}^{N_{symb,all}^{PUSCH}-1} M_{sc}^{UCI}(l)$ in the numerator is a total quantity of available time-frequency resources in the uplink slot. As a result, $\sum_{l=0}^{N_{symb,all}^{PUSCH}-1} M_{sc}^{UCI}(l)$ and $\sum_{r=0}^{C_{UL-SCH}-1} K_r$ do not match, and the calculated $Q'_{ACK}$ is excessively large. Therefore, a code rate of the PUSCH is increased, and reliability of the PUSCH is reduced.

In conclusion, due to relatively large differences between the uplink time unit and the SBFD time unit in the channel environments and channel interference, if the transmission parameter of the uplink time unit is reused in the SBFD time unit, reliability of UCI transmission may be reduced. The foregoing implementation process is used as an example. The following two problems may be caused:

Problem 1: Due to relatively large differences between the SBFD slot and the uplink slot in the channel environments and interference levels, the foregoing implementation process cannot ensure reliability and flexibility of UCI multiplexing on the SBFD symbol.

Problem 2: If the multislot PUSCH can be allocated to both the SBFD slot and the uplink slot, and frequency domain resources of the multislot PUSCH that are allocated to the SBFD slot and the uplink slot are different, the quantity of encoded modulation symbols per layer for the multiplexed UCI is calculated incorrectly. As a result, the UCI code rate is excessively high or excessively low, and reliability of UCI multiplexing or reliability of PUSCH transmission is reduced.

To resolve the foregoing technical problems, this application provides a communication method and a related device, to improve reliability of UCI transmission and improve communication efficiency. The following provides detailed descriptions with reference to more accompanying drawings.

It should be noted that in the following FIG. 3, FIG. 4, FIG. 5a, and FIG. 5b, an example in which a terminal device and a network device serve as execution bodies of an interaction example is used to illustrate the method. However, an execution body of the interaction example is not limited in this application. For example, in the following embodiments, the execution body may be the terminal device, or the execution body may be a chip, a chip system, or a processor that supports the terminal device in implementing the method, or may be a logical module or software that can implement all or some functions of the terminal device. For another example, in the following embodiments, the execution body may be the network device, or the execution body may be a chip, a chip system, or a processor that supports the network device in implementing the method, or may be a logical module or software that can implement all or some functions of the network device.

FIG. 3 is a diagram of a communication method according to this application.

S301: A network device sends first information, and correspondingly, a terminal device receives the first information.

In step S301, the first information sent by the network device indicates N sets of first indexes, one of the N sets of first indexes includes M first indexes, the M first indexes include a first index, the first index corresponds to a first parameter, the first parameter is for performing code rate compensation on UCI carried in an SBFD time unit, N is a positive integer, and M is a positive integer; and the first information further indicates P sets of second indexes, one of the P sets of second indexes includes Q second indexes, the Q second indexes include a second index, the second index corresponds to a second parameter, the second parameter is for performing code rate compensation on UCI carried in an uplink time unit, P is a positive integer, and Q is a positive integer.

It should be noted that in this application, the time unit may include a frame, a subframe, a slot, a symbol, or the like.

It should be noted that in this application, the SBFD time unit may include a subband non-overlapping full duplex (subband non-overlapping full duplex, SBFD) time unit and/or a subband overlapping full duplex (subband overlapping full duplex, SBFD) time unit.

It should be understood that in the uplink time unit (for example, an uplink transmission resource shown in FIG. 1a), the terminal device may send an uplink signal, and the network device may receive the uplink signal. However, in the SBFD time unit (for example, an uplink transmission resource shown in FIG. 1b, FIG. 1c, or FIG. 1d), the network device may receive an uplink signal and may also send a downlink signal. Correspondingly, some terminal devices may send uplink signals in the SBFD time unit, and some other terminal devices may receive downlink signals in the SBFD time unit.

It should be noted that in this application, the UCI may include a plurality of types, for example, one or more of a feedback hybrid automatic repeat request-acknowledgment (hybrid automatic repeat request-acknowledgment, HARQ-ACK), a channel state information (channel state information, CSI) part 1 (CSI part 1), a CSI part 2 (CSI part 2), configured grant uplink control information (configured grant-uplink control information, CG-UCI), and a HARQ-ACK jointly encoded with CG-UCI. Correspondingly, the N sets of first indexes and the P sets of second indexes may be used to determine a plurality of code rate compensation parameters corresponding to the UCI. For example, the M first indexes included in one of the N sets of first indexes (or the Q second indexes included in one of the P sets of second indexes) include at least one of the following:

a first HARQ-ACK index, used to determine a code rate compensation parameter of the HARQ-ACK when a quantity of information bits of the HARQ-ACK does not exceed 2 bits, which means that the first parameter (or the second parameter) may include the code rate compensation parameter indicated by the first HARQ-ACK index;

a second HARQ-ACK index, used to determine a code rate compensation parameter of the HARQ-ACK when the quantity of information bits of the HARQ-ACK exceeds 2 bits but does not exceed 11 bits, which means that the first parameter (or the second parameter) may include the code rate compensation parameter indicated by the second HARQ-ACK index;

a third HARQ-ACK index, used to determine a code rate compensation parameter of the HARQ-ACK when the quantity of information bits of the HARQ-ACK exceeds 11 bits, which means that the first parameter (or the second parameter) may include the code rate compensation parameter indicated by the third HARQ-ACK index;

a fourth HARQ-ACK index, used to determine a code rate compensation parameter for multiplexing the HARQ-ACK on a PUSCH associated with a priority 0 when the quantity of information bits of the HARQ-ACK does not exceed 2 bits, which means that the first parameter (or the second parameter) may include the code rate compensation parameter indicated by the fourth HARQ-ACK index;

a fifth HARQ-ACK index, used to determine a code rate compensation parameter for multiplexing the HARQ-ACK on the PUSCH associated with the priority 0 when the quantity of information bits of the HARQ-ACK exceeds 2 bits but does not exceed 11 bits, which means that the first parameter (or the second parameter) may include the code rate compensation parameter indicated by the fifth HARQ-ACK index;

a sixth HARQ-ACK index, used to determine a code rate compensation parameter for multiplexing the HARQ-ACK on the PUSCH associated with the priority 0 when the quantity of information bits of the HARQ-ACK exceeds 11 bits, which means that the first parameter (or the second parameter) may include the code rate compensation parameter indicated by the sixth HARQ-ACK index;

a seventh HARQ-ACK index, used to determine a code rate compensation parameter for multiplexing the HARQ-ACK on a PUSCH associated with a priority 1 when the quantity of information bits of the HARQ-ACK does not exceed 2 bits, which means that the first parameter (or the second parameter) may include the code rate compensation parameter indicated by the seventh HARQ-ACK index;

an eighth HARQ-ACK index, used to determine a code rate compensation parameter for multiplexing the HARQ-ACK on the PUSCH associated with the priority 1 when the quantity of information bits of the HARQ-ACK exceeds 2 bits but does not exceed 11 bits, which means that the first parameter (or the second parameter) may include the code rate compensation parameter indicated by the eighth HARQ-ACK index;

a ninth HARQ-ACK index, used to determine a code rate compensation parameter for multiplexing the HARQ-ACK on the PUSCH associated with the priority 1 when the quantity of information bits of the HARQ-ACK exceeds 11 bits, which means that the first parameter (or the second parameter) may include the code rate compensation parameter indicated by the ninth HARQ-ACK index;

a first CSI part 1 index, used to determine a code rate compensation parameter of the CSI part 1 when a quantity of information bits of the CSI part 1 does not exceed 11 bits, which means that the first parameter (or the second parameter) may include the code rate compensation parameter indicated by the first CSI part 1 index;

a second CSI part 1 index, used to determine a code rate compensation parameter of the CSI part 1 when the quantity of information bits of the CSI part 1 exceeds 11 bits, which means that the first parameter (or the second parameter) may include the code rate compensation parameter indicated by the second CSI part 1 index;

a first CSI part 2 index, used to determine a code rate compensation parameter of the CSI part 2 when a quantity of information bits of the CSI part 2 does not exceed 11 bits, which means that the first parameter (or the second parameter) may include the code rate compensation parameter indicated by the first CSI part 2 index;

a second CSI part 2 index, used to determine a code rate compensation parameter of the CSI part 2 when the quantity of information bits of the CSI part 2 exceeds 11 bits, which means that the first parameter (or the second parameter) may include the code rate compensation parameter indicated by the second CSI part 2 index; and

a CG-UCI index, used to determine a code rate compensation parameter of the CG-UCI, which means that the first parameter (or the second parameter) may include the code rate compensation parameter indicated by the CG-UCI index.

Optionally, the UCI may include a plurality of types. Correspondingly, the N sets of first indexes (or P sets of second indexes) indicated by the network device by using the first information may include indexes corresponding to one or more types of UCI. In other words, any one of the N sets of first indexes (or any one of the P sets of second indexes) may include one or more of the HARQ-ACK indexes (including the first HARQ-ACK index to the third HARQ-ACK index, or including the first HARQ-ACK index to the ninth HARQ-ACK index), the CSI part 1 indexes (including the first CSI part 1 index and the CSI part 1 index), the CSI part 2 indexes (including the first CSI part 2 index and the CSI part 2 index), and the CG-UCI index.

Optionally, both parameters corresponding to the N sets of first indexes indicated by the first information and parameters corresponding to the P sets of second indexes indicated by the first information are semi-statically configured parameters, and values of P and N are 1. Specifically, when the values of P and N are 1, the foregoing solution can be applied to a semistatic configuration scenario, to support the network device in configuring a code rate compensation parameter (for example, the first parameter and/or the second parameter) in a semistatic configuration mode.

Optionally, both parameters corresponding to the N sets of first indexes indicated by the first information and parameters corresponding to the P sets of second indexes indicated by the first information are dynamically configured parameters, and values of P and N are both greater than 1. Specifically, when the values of P and N are greater than 1, the foregoing solution can be applied to a dynamic configuration scenario, to support the network device in configuring a code rate compensation parameter (for example, the first parameter and/or the second parameter) in a dynamic configuration mode.

Further optionally, both the parameters corresponding to the N sets of first indexes indicated by the first information and the parameters corresponding to the P sets of second indexes indicated by the first information are semi-statically configured parameters; or both the parameters corresponding to the N sets of first indexes and the parameters corresponding to the P sets of second indexes are dynamically configured parameters. Specifically, both the parameters corresponding to the N sets of first indexes and the parameters corresponding to the P sets of second indexes are semi-statically configured (or both are dynamically configured) parameters, to avoid behavioral confusion caused when the two parameters are configured differently (that is, one parameter is a statically configured parameter and the other parameter is a dynamically configured parameter) and reduce implementation complexity.

Optionally, the foregoing technical solution may be expressed as follows: It is not expected or not permitted that the parameters corresponding to the N sets of first indexes are semi-statically configured parameters while the parameters corresponding to the P sets of second indexes are dynamically configured parameters; or it is not expected or not permitted that the parameters corresponding to the P sets of second indexes are semi-statically configured parameters while the parameters corresponding to the N sets of first indexes are dynamically configured parameters.

In a possible implementation, when the first information sent by the network device in step S301 includes a first information element and a second information element in an RRC message, the first information element and the second information element may be implemented in any one of the following manners:

> the first information element is betaOffsetsCrossPri0, and the second information element is betaOffsetsCrossPri1; or
> the first information element is betaOffsetsCrossPri0DCI-0-2, and the second information element is betaOffsetsCrossPri1DCI-0-2; or
> the first information element is cg-betaOffsetsCrossPri0, and the second information element is cg-betaOffsetsCrossPri1; or
> the second information element is betaOffsetsCrossPri0, and the first information element is betaOffsetsCrossPri1; or
> the second information element is betaOffsetsCrossPri0DCI-0-2, and the first information element is betaOffsetsCrossPri1DCI-0-2; or
> the second information element is cg-betaOffsetsCrossPri0, and the first information element is cg-betaOffsetsCrossPri1.

Specifically, when the first information element and the second information element included in the first information are located in the RRC message, the first information element and the second information element may reuse other information elements in the RRC message. In the foregoing technical solution, the other information elements may include an information element that is in the RRC message and that indicates a code rate compensation parameter index set used on the PUSCH corresponding to the priority 0, and an information element that is in the RRC message and that indicates a code rate compensation parameter index set used on the PUSCH corresponding to the priority 1. Therefore, the other information elements are reused to indicate the N sets of first indexes and the P sets of second indexes, and implementation complexity can be reduced.

In a possible implementation, when the first information sent by the network device in step S301 is included in the RRC message, the RRC message may further include a third information element, where when a value of the third information element is a target value, the third information element indicates that the first information element indicates the N sets of first indexes, and the third information element indicates that the second information element indicates the P sets of second indexes. Specifically, when the first information element and the second information element included in the first information are located in the RRC message, the first information element and the second information element may reuse other information elements in the RRC message. The RRC message may further include the third information element, so that the terminal device determines, based on the third information element, specific meanings of information included in the first information element and the second information element, to avoid behavioral confusion.

Optionally, when the value of the third information element is another value, the third information element indicates that a function of the first information element is a function (for example, indicating the code rate compensation parameter index set used on the PUSCH corresponding to the priority 0, or indicating the code rate compensation parameter index set used on the PUSCH corresponding to the priority 1) other than indicating the N sets of first indexes. In addition, the third information element indicates that a function of the second information element is a function (for example, indicating the code rate compensation parameter index set corresponding to the priority 1, or indicating the code rate compensation parameter index set corresponding to the priority 0) other than indicating the P sets of second indexes.

S302: The terminal device sends UCI and uplink data, and correspondingly, the network device receives the UCI and the uplink data.

In step S302, the terminal device sends the UCI and the uplink data based on the first parameter and/or the second parameter. Correspondingly, the network device receives the UCI and the uplink data based on the first parameter and/or the second parameter. The UCI and the uplink data are carried on a PUSCH.

In a possible implementation, that the terminal device sends the UCI and the uplink data based on the first parameter and/or the second parameter in step S302 includes: the terminal device sends the UCI and the uplink data in the SBFD time unit based on the first parameter and/or sends the UCI and the uplink data in the uplink time unit based on the second parameter. Specifically, after the terminal device receives the first information, in the SBFD time unit, the terminal device may determine the first parameter based on the first information, and send the UCI and the uplink data based on the first parameter; and/or in the uplink time unit, the terminal device may determine the second parameter based on the first information, and send the UCI and the uplink data based on the second parameter. Therefore, the terminal device can perform uplink transmission in the SBFD time unit and/or the uplink time unit based on the code rate compensation parameter that adapts to channel environments (or channel interference, or the like).

In a possible implementation, before step S302, the method further includes: the terminal device receives second information, where the second information indicates a third parameter and a fourth parameter, the third parameter indicates an upper limit on a quantity of encoded modulation symbols for the UCI carried on the PUSCH in the SBFD time unit, and the fourth parameter indicates an upper limit on a quantity of encoded modulation symbols for the UCI carried on the PUSCH in the uplink time unit; that the terminal device sends the UCI and the uplink data in the SBFD time unit based on the first parameter includes: the terminal device sends the UCI and the uplink data in the SBFD time unit based on the first parameter and the third parameter; and that the terminal device sends the UCI and the uplink data in the uplink time unit based on the second parameter includes: the terminal device sends the UCI and the uplink data in the uplink time unit based on the second parameter and the fourth parameter. Specifically, the terminal device may further determine, based on the third parameter and the fourth parameter that are indicated by the second information, the upper limit on the quantity of encoded modulation symbols for the UCI carried on the PUSCH in the uplink time unit and the upper limit on the quantity of encoded modulation symbols for the UCI carried on the PUSCH in the SBFD unit. Therefore, the terminal device can perform uplink transmission in the SBFD time unit and/or the uplink time unit based on an encoded modulation symbol parameter that adapts to the channel environments (or channel interference, or the like).

In a possible implementation, to simplify a process of indicating the upper limit on the quantity of encoded modulation symbols, the upper limit on the quantity of encoded modulation symbols for the UCI carried on the PUSCH in the SBFD time unit of the terminal device may reuse the upper limit on the quantity of encoded modulation symbols for the UCI carried on the PUSCH in the uplink time unit of the terminal device. Alternatively, the upper limit on the quantity of encoded modulation symbols for the UCI carried on the PUSCH in the SBFD time unit of the terminal device configured by the network device is the same as the upper limit on the quantity of encoded modulation symbols for the UCI carried on the PUSCH in the uplink time unit of the terminal device configured by the network device. In this case, the network device may configure the third parameter without configuring the fourth parameter (or the network device may configure the fourth parameter without configuring the third parameter), to simplify the configuration and reduce overheads.

In a possible implementation, both parameters corresponding to the N sets of first indexes and parameters corresponding to the P sets of second indexes that are indicated by the network device in step S301 are dynamically configured parameters, and values of P and N are both greater than 1. Correspondingly, before step S302, the method further includes: the terminal device receives third information, where the third information indicates one of the N sets of first indexes and/or indicates one of the P sets of second indexes. Specifically, when the values of P and N are greater than 1, the foregoing solution can be applied to a dynamic configuration scenario, to support the network device in configuring a code rate compensation parameter (for example, the first parameter and/or the second parameter) in a dynamic configuration mode. In addition, in this scenario, the terminal device may further determine, based on the third information, the code rate compensation parameters in the SBFD time unit and the uplink time unit respectively in the N sets of first indexes and the P sets of second indexes.

In a possible implementation, the third information is carried in downlink control information (download control information, DCI); and one bit in a first field in the DCI indicates one of the N sets of first indexes, and another bit in the first field in the DCI indicates one of the P sets of second indexes; or a first field in the DCI indicates one of the N sets of first indexes, and a second field in the DCI indicates one of the P sets of second indexes. Specifically, the third information received by the terminal device may indicate one of the N sets of first indexes, and/or the third information received by the terminal device may indicate one of the P sets of second indexes. The third information received by the terminal device may be carried in the DCI. For example, different bits in a same field in the DCI respectively indicate one set of first indexes and one set of second indexes, or different fields in the DCI respectively indicate one set of first indexes and one set of second indexes, to provide a plurality of flexible implementations.

Optionally, the first field may be a "beta_offset indicator" field corresponding to a DCI format 0_1 (DCI format 0_1), or a "beta_offset indicator" field corresponding to a DCI format 0_2. The following describes the foregoing implementation process by using an example in which the third information is carried in the DCI format 0_1/0_2.

Solution 1: The third information is the DCI format 0_1/0_2 and includes a beta_offset indicator, 2 bits, where one of the first bit and the second bit indicates one of the N sets of first indexes, and the other of the first bit and the second bit indicates one of the P sets of second indexes.

Solution 2: The third information is the DCI format 0_1/0_2 and includes a beta_offset indicator field and a beta_offset_SBFD indicator field. The beta_offset indicator field indicates one of the N sets of first indexes, and the beta_offset_SBFD indicator field indicates one of the P sets of second indexes.

Optionally, both the beta_offset indicator field and the beta_offset_SBFD indicator field that are indicated by the DCI format 0_1 are 2 bits. Similarly, the beta_offset indicator field and the beta_offset_SBFD indicator field that are indicated by the DCI format 0_2 are 1 bit or 2 bits. A quantity of bits of the beta_offset indicator field and a quantity of bits of the beta_offset_SBFD indicator field may be indicated by using higher layer signaling (for example, the higher layer signaling may include one or more information elements in an RRC message). For example, the quantity of bits of the beta_offset indicator field may be indicated by using a "dynamicDCI-0-2" information element in an RRC message. For another example, the quantity of bits of the beta_offset_SBFD indicator field may be indicated by using a "dynamicDCI-0-2-SBFD" information element in an RRC message. For example, the foregoing length determining method is as follows:

If a value of the "dynamicDCI-0-2" information element is 'oneBit', the quantity of bits of the beta_offset indicator field is 1 bit;

if a value of the "dynamicDCI-0-2" information element is 'twoBits', the quantity of bits of the beta_offset indicator field is 2 bits;
if a value of the "dynamicDCI-0-2-SBFD" information element is 'oneBit', the quantity of bits of the beta_offset_SBFD indicator field is 1 bit; or
if a value of the "dynamicDCI-0-2-SBFD" information element is 'twoBits', the quantity of bits of the beta_offset_SBFD indicator field is 2 bits.

It may be understood that in step S302 of the method shown in FIG. 3, the terminal device may trigger, based on a signaling indication of the network device, sending of the UCI and the uplink data. For example, the signaling may include first signaling indicating the terminal device to send the uplink data and second signaling indicating the terminal device to send the UCI. That the uplink data scheduled by the first signaling and the UCI scheduled by the second signaling overlap in time domain includes: the uplink data scheduled by the first signaling and the UCI scheduled by the second signaling overlap in the SBFD time unit, and/or the uplink data scheduled by the first signaling and the UCI scheduled by the second signaling overlap in the uplink time unit.

Optionally, in step S302, the PUSCH carrying the UCI and the uplink data may be a single-slot PUSCH or a multislot PUSCH. When the PUSCH carrying the UCI and the uplink data is a multislot PUSCH, the PUSCH may be any one of the following PUSCHs, for example, a PUSCH repetition type A, a PUSCH repetition type B, a TBoMS PUSCH, or a plurality of PUSCHs scheduled by single DCI.

Further optionally, the multislot PUSCH may include a first-type multislot PUSCH and a second-type multislot PUSCH.

It should be understood that the first-type multislot PUSCH refers to a multislot PUSCH transmitted in a same type of time unit. In an implementation example, the first-type multislot PUSCH is a PUSCH repetition type A, a PUSCH repetition type B, a TBoMS PUSCH, or a plurality of PUSCHs scheduled by single DCI, transmitted in the uplink time unit. In another implementation example, the first-type multislot PUSCH is a PUSCH repetition type A, a PUSCH repetition type B, a TBoMS PUSCH, or a plurality of PUSCHs scheduled by single DCI, transmitted in the SBFD time unit.

It should be understood that the second-type multislot PUSCH refers to a multislot PUSCH that may be simultaneously transmitted in the uplink time unit and the SBFD time unit. For example, the second-type multislot PUSCH is a PUSCH repetition type A, a PUSCH repetition type B, a TBoMS PUSCH, or a plurality of PUSCHs scheduled by single DCI, simultaneously transmitted in the uplink time unit and the SBFD time unit.

In addition, before the terminal device sends the UCI and the uplink data in step S302, the terminal device may further determine a code rate compensation parameter (for example, the foregoing first parameter and/or second parameter) of the UCI based on the N sets of first indexes and the P sets of second indexes that are indicated by the first information. The following describes, for a plurality of different implementations of the PUSCH, an example of an implementation process in which the terminal device determines the code rate compensation parameter.

Implementation scenario 1: In step S302, the UCI and the uplink data are carried on the single-slot PUSCH or the first-type multislot PUSCH, and the terminal device may determine the code rate compensation parameter in the following implementations.

Specifically, if the UCI and the uplink data overlap in the SBFD time unit, the terminal device sends the UCI and the uplink data in the uplink time unit based on a first parameter corresponding to one of the M first indexes included in one of the N sets of first indexes. If the UCI and the uplink data overlap in the uplink time unit, the terminal device sends the UCI and the uplink data in the SBFD time unit based on a second parameter corresponding to one of the Q second indexes included in one of the P sets of second indexes.

Optionally, when the first information includes the first information element and the second information element in the DCI, the terminal device determines the code rate compensation parameter in any one of the following manners:
Manner 1: For a DG PUSCH, the DCI format 0_0/0_1 may indicate a betaOffsetsCrossPri0 information element and a betaOffsetsCrossPri1 information element.

When the first information element is betaOffsetsCrossPri0 and the second information element is betaOffsetsCrossPri1, the terminal device determines the N sets of first indexes based on betaOffsetsCrossPri0, or the terminal device determines the P sets of second indexes based on betaOffsetsCrossPri1. Alternatively, when the first information element is betaOffsetsCrossPri1 and the second information element is betaOffsetsCrossPri0, the terminal device determines the N sets of first indexes based on betaOffsetsCrossPri1, or the terminal device determines the P sets of second indexes based on betaOffsetsCrossPri0.

Manner 2: For a DG PUSCH, the DCI format 0_2 may indicate a betaOffsetsCrossPri0DCI-0-2 information element and a betaOffsetsCrossPri1DCI-0-2 information element.

When the first information element is betaOffsetsCrossPri0DCI-0-2 and the second information element is betaOffsetsCrossPri1DCI-0-2, the terminal device determines the N sets of first indexes based on betaOffsetsCrossPri0DCI-0-2, or the terminal device determines the P sets of second indexes based on betaOffsetsCrossPri1DCI-0-2. Alternatively, when the first information element is betaOffsetsCrossPri1DCI-0-2 and the second information element is betaOffsetsCrossPri0DCI-0-2, the terminal device determines the N sets of first indexes based on betaOffsetsCrossPri1DCI-0-2, or the terminal device determines the P sets of second indexes based on betaOffsetsCrossPri0DCI-0-2.

Manner 3: For a CG-PUSCH, higher layer signaling (for example, RRC signaling) may indicate a cg-betaOffsetsCrossPri0 information element and a cg-betaOffsetsCrossPri1 information element.

When the first information element is cg-betaOffsetsCrossPri0 and the second information element is cg-betaOffsetsCrossPri1, the terminal device determines the N sets of first indexes based on cg-betaOffsetsCrossPri0, or the terminal device determines the P sets of second indexes based on cg-betaOffsetsCrossPri1. Alternatively, when the first information element is cg-betaOffsetsCrossPri1 and the second information element is cg-betaOffsetsCrossPri0, the terminal device determines the N sets of first indexes based on cg-betaOffsetsCrossPri1, or the terminal device determines the P sets of second indexes based on cg-betaOffsetsCrossPri0.

Implementation scenario 2: In step S302, the UCI and the uplink data are carried on the second-type multislot PUSCH, and the terminal device may determine the code rate compensation parameter in either of the following manners A and B.

Manner A: If the first information indicates only K sets of indexes in step S301, the terminal device may determine the K sets of indexes as the N sets of first indexes, or may determine the K sets of indexes as the P sets of second indexes. In other words, the terminal device may determine the first parameter and/or the second parameter at the same time by using the K sets of indexes.

In an implementation example of the manner A, if the UCI and the uplink data are carried on the PUSCH in the uplink time unit, the terminal device determines a set of indexes from the K sets of indexes based on the first bit (or the second bit) of beta_offset indicator, and determines a UCI-multiplexing code rate compensation parameter based on the set of indexes. In addition, if the UCI and the uplink data are carried on the PUSCH in the SBFD time unit, the terminal device determines a set of indexes from the K sets of indexes based on the second bit (or the first bit) of beta_offset indicator, and determines a UCI-multiplexing code rate compensation parameter based on the set of indexes.

In another implementation example of the manner A, if the UCI and the uplink data are carried on the PUSCH in the uplink time unit, the terminal device determines a set of indexes from the K sets of indexes based on beta_offset indicator, and determines a UCI-multiplexing code rate compensation parameter based on the set of indexes. Alternatively, if the UCI and the uplink data are carried on the PUSCH in the SBFD time unit, the terminal device determines a set of indexes from the K sets of indexes based on beta_offset_SBFD indicator, and determines a UCI-multiplexing code rate compensation parameter based on the set of indexes.

In another implementation example of the manner A, when the first information includes the first information element and the second information element in the DCI, the terminal device may determine the N sets of first indexes and the P sets of second indexes by using an information element (for example, betaOffsetsCrossPri0, betaOffsetsCrossPri0DCI-0-2, or cg-betaOffsetsCrossPri0) indicating the priority 0 and an information element (betaOffsetsCrossPri1, betaOffsetsCrossPri1DCI-0-2, or cg-betaOffsetsCrossPri1) indicating the priority 1. For an implementation process of the terminal device, refer to the implementation processes of the foregoing manner 1 to manner 3.

Manner B: If the first information indicates the N sets of first indexes and the P sets of second indexes in step S301, the terminal device may determine the first parameter by using the N sets of indexes, and/or the terminal device may determine the second parameter by using the P sets of second indexes.

In an implementation example of the manner B, if the UCI and the uplink data are carried on the PUSCH in the uplink time unit, the terminal device determines a set of indexes from the P sets of second indexes based on the first bit (or the second bit) of beta_offset indicator, and determines a UCI-multiplexing code rate compensation parameter based on the set of indexes. In addition, if the UCI and the uplink data are carried on the PUSCH in the SBFD time unit, the terminal device determines a set of indexes from the N sets of first indexes based on the second bit (or the first bit) of beta_offset indicator, and determines a UCI-multiplexing code rate compensation parameter based on the set of indexes.

In another implementation example of the manner B, if the UCI and the uplink data are carried on the PUSCH in the uplink time unit, the terminal device determines a set of indexes from the P sets of second indexes based on beta_offset indicator, and determines a UCI-multiplexing code rate compensation parameter based on the set of indexes. Alternatively, if the UCI and the uplink data are carried on the PUSCH in the SBFD time unit, the terminal device determines a set of indexes from the N sets of first indexes based on beta_offset_SBFD indicator, and determines a UCI-multiplexing code rate compensation parameter based on the set of indexes.

In another implementation example of the manner B, when the first information includes the first information element and the second information element in the DCI, the terminal device may determine the N sets of first indexes and the P sets of second indexes by using an information element (for example, betaOffsetsCrossPri0, betaOffsetsCrossPri0DCI-0-2, or cg-betaOffsetsCrossPri0) indicating the priority 0 and an information element (betaOffsetsCrossPril, betaOffsetsCrossPri1DCI-0-2, or cg-betaOffsetsCrossPri1) indicating the priority 1. For an implementation process of the terminal device, refer to the implementation processes of the foregoing manner 1 to manner 3.

In a possible implementation, the first information sent by the network device in step S301 may be carried in higher layer signaling sent by the network device to the terminal device. For example, the higher layer signaling may include a radio resource control (radio resource control, RRC) message.

For example, the first information is carried in an RRC message. The first information may include a first information element and a second information element in the RRC message, where the first information element indicates the N sets of first indexes, and the second information element indicates the P sets of second indexes. Specifically, the first information received by the terminal device may include the first information element and the second information element in the RRC message, where the first information element indicates the N sets of first indexes corresponding to the SBFD time unit, and the second information element indicates the P sets of second indexes corresponding to the uplink time unit, so that the terminal device can obtain the N sets of first indexes and the P sets of second indexes by using the same RRC message, thereby reducing overheads.

Optionally, the first information element indicating the N sets of first indexes and the second information element indicating the P sets of second indexes may be carried in the same message (for example, the same RRC message), or may be carried in different messages (for example, different RRC messages).

Optionally, the first information and the second information may be carried in the same message (for example, the same RRC message), or may be carried in different messages (for example, different RRC messages). This is not limited herein. The following provides some implementation examples to describe an implementation process in which the first information element and the second information element included in the first information and a part or all of the second information are carried in the same RRC message.

Implementation example 1: For the PUSCH scheduled by the DCI format 0_0/0_1, the first information and the second information carried in the RRC message may be implemented in any one of the following implementations in Table 1 to Table 3.

Table 1

| UCI-OnPUSCH ::= | SEQUENCE { |
|---|---|
| betaOffsets | CHOICE { |
| dynamic | SEQUENCE (SIZE (4)) OF BetaOffsets, |

| semiStatic | BetaOffsets |
|---|---|
| } | |
| betaOffsets-SBFD | CHOICE { |
| semiStatic-SBFD | BetaOffsets |
| } | |
| scaling | |

It should be understood that, in Table 1 (and any other table that may appear later, for example, any one of Table 2 to Table 18), a quantity of rows, a quantity of columns, an order of different rows, or an order of different columns, as well as values of different fields and an order between different fields are not limited, and an implementation shown in the table is merely an implementation example. The quantity of rows, the quantity of columns, the order of different rows, or the order of different columns in the table may alternatively be implemented in other manners, and values of different fields in the table may alternatively be other values. This is not limited herein. In addition, different fields in the table may be independently implemented by using one or more tables.

In Table 1, both the first information and the second information are included in the "UCI-OnPUSCH" information element.

In the example shown in Table 1, the "dynamic" information element in the "betaOffsets" information element is an implementation example in which parameters corresponding to the P sets of second indexes indicated by the second information element in the first information include four sets (SIZE (4)) of dynamically configured parameters, and the "semiStatic" information element in the "betaOffsets" information element is an implementation example in which parameters corresponding to the P sets of second indexes indicated by the second information element in the first information include one set of semi-statically configured parameters.

In the example shown in Table 1, the "semiStatic-SBFD" information element in the "betaOffsets-SBFD" information element is an implementation example in which parameters corresponding to the N sets of first indexes indicated by the first information element in the first information include one set of semi-statically configured parameters.

In the example shown in Table 1, the "scaling" information element is an implementation example of the third parameter carried in the second information.

Table 2

| UCI-OnPUSCH ::= | SEQUENCE { |
|---|---|

| betaOffsets | CHOICE { |
|---|---|
| dynamic | SEQUENCE (SIZE (4)) OF BetaOffsets, |
| semiStatic | BetaOffsets |
| } | |
| betaOffsets-SBFD | CHOICE { |
| dynamic-SBFD | SEQUENCE (SIZE (4)) OF BetaOffsets, |
| semiStatic-SBFD | BetaOffsets |
| } | |
| scaling | |
| } | |

In Table 2, both the first information and the second information are included in the "UCI-OnPUSCH" information element.

In the example shown in Table 2, the "dynamic" information element in the "betaOffsets" information element is an implementation example in which parameters corresponding to the P sets of second indexes indicated by the second information element in the first information include four sets (SIZE (4)) of dynamically configured parameters, and the "semiStatic" information element in the "betaOffsets" information element is an implementation example in which parameters corresponding to the P sets of second indexes indicated by the second information element in the first information include one set of semi-statically configured parameters.

In the example shown in Table 2, the "dynamic-SBFD" information element in the "betaOffsets-SBFD" information element is an implementation example in which parameters corresponding to the N sets of first indexes indicated by the first information element in the first information include four sets (SIZE (4)) of dynamically configured parameters, and the "semiStatic-SBFD" information element in the "betaOffsets-SBFD" information element is an implementation example in which parameters corresponding to the N sets of first indexes indicated by the first information element in the first information include one set of semi-statically configured parameters.

In the example shown in Table 2, the "scaling" information element is an implementation example of the third parameter carried in the second information.

Table 3

| | |
|---|---|
| UCI-OnPUSCH ::= | SEQUENCE { |
| betaOffsets | CHOICE { |
| dynamic | SEQUENCE (SIZE (4)) OF |
| BetaOffsets, | |
| semiStatic | BetaOffsets |
| } | |
| scaling | } |
| UCI-OnPUSCH-SBFD ::= | SEQUENCE { |
| betaOffsets-SBFD | CHOICE { |
| dynamic-SBFD | SEQUENCE (SIZE (4)) OF |
| BetaOffsets, | |
| semiStatic-SBFD | BetaOffsets |
| } | |
| scaling-SBFD | |
| } | |

In Table 3, the first information element in the first information and the third parameter indicated by the second information are included in the "UCI-OnPUSCH-SBFD" information element, and the second information element in the first information and the fourth parameter indicated by the second information are included in the "UCI-OnPUSCH" information element.

In the example shown in Table 3, in the "UCI-OnPUSCH" information element, the "dynamic" information element in the "betaOffsets" information element is an implementation example in which parameters corresponding to the P sets of second indexes indicated by the second information element in the first information include four sets (SIZE (4)) of dynamically configured parameters, and the "semiStatic" information element in the "betaOffsets" information element is an implementation example in which parameters corresponding to the P sets of second indexes indicated by the second information element in the first information include one set of semi-statically configured parameters. The "scaling" information element is an implementation example of the third parameter carried in the second information.

In the example shown in Table 3, in the "UCI-OnPUSCH-SBFD" information element, the "dynamic-SBFD" information element in the "betaOffsets-SBFD" information element is an implementation example in which parameters corresponding to the N sets of first indexes indicated by the first information element in the first information include four sets (SIZE (4)) of dynamically configured parameters, and the "semiStatic-SBFD" information element in the "betaOffsets-SBFD" information element is an implementation example in which parameters corresponding to the N sets of first indexes indicated by the first information element in the first information include one set of semi-statically configured parameters. The "scaling-SBFD" information element is an implementation example of the fourth parameter carried in the second information.

Implementation example 2: For the PUSCH scheduled by the DCI format 0_2, the first information and the second information carried in the RRC message may be implemented in any one of the following implementations in Table 4 to Table 6.

Table 4

```
UCI-OnPUSCH-DCI-0-2 ::=               SEQUENCE {
        betaOffsetsDCI-0-2                    CHOICE {
            dynamicDCI-0-2                        CHOICE {
                oneBit                                SEQUENCE (SIZE (2)) OF
BetaOffsets,
                twoBits                               SEQUENCE (SIZE (4)) OF
BetaOffsets
            },
            semiStaticDCI-0-2             BetaOffsets
        }
        betaOffsetsDCI-0-2-SBFD               CHOICE {
            semiStaticDCI-0-2-SBFD       BetaOffsets
        }
        scalingDCI-0-2
}
```

In Table 4, both the first information and the second information are included in the "UCI-OnPUSCH-DCI-0-2" information element.

In the example shown in Table 4, in the "betaOffsetsDCI-0-2" information element, "oneBit" in the "dynamicDCI-0-2" information element is an implementation example in which parameters corresponding to the P sets of second indexes indicated by the second information element in the first information include two sets (SIZE (2)) of dynamically configured parameters, "twoBits" in the "dynamicDCI-0-2" information element is an implementation example in which parameters corresponding to the P sets of second indexes indicated by the second information element in the first information include four sets (SIZE (4)) of dynamically configured parameters, and the "semiStaticDCI-0-2" information element is an implementation example in which parameters corresponding to the P sets of second indexes indicated by the second information element in the first information include one set of semi-statically configured parameters. The "scalingDCI-0-2" information element is an implementation example of the third parameter carried in the second information.

In the example shown in Table 4, the "semiStaticDCI-0-2" information element in the "betaOffsetsDCI-0-2-SBFD" information element is an implementation example in which parameters corresponding to the N sets of first indexes indicated by the first information element in the first information include one set of semi-statically configured parameters. The "scalingDCI-0-2" information element is an implementation example of the fourth parameter carried in the second information.

Table 5

```
UCI-OnPUSCH-DCI-0-2 ::=            SEQUENCE {
      betaOffsetsDCI-0-2                    CHOICE {
            dynamicDCI-0-2                        CHOICE {
                  oneBit                              SEQUENCE (SIZE (2)) OF
BetaOffsets,
                  twoBits                             SEQUENCE (SIZE (4)) OF
BetaOffsets
            },
            semiStaticDCI-0-2          BetaOffsets
      }
      betaOffsetsDCI-0-2-SBFD              CHOICE {
            dynamicDCI-0-2-SBFD                  CHOICE {
                  oneBit                              SEQUENCE (SIZE (2)) OF
BetaOffsets,
                  twoBits                             SEQUENCE (SIZE (4)) OF
BetaOffsets
            },
            semiStaticDCI-0-2-SBFD     BetaOffsets
      }
      scalingDCI-0-2
}
```

In Table 5, both the first information and the second information are included in the "UCI-OnPUSCH-DCI-0-2" information element.

In the example shown in Table 5, in the "betaOffsetsDCI-0-2" information element, "oneBit" in the "dynamicDCI-0-2" information element is an implementation example in which parameters corresponding to the P sets of second indexes indicated by the second information element in the first information include two sets (SIZE (2)) of dynamically configured parameters, "twoBits" in the "dynamicDCI-0-2" information element is an implementation example in which parameters corresponding to the P sets of second indexes indicated by the second information element in the first information include four sets (SIZE (4)) of dynamically configured parameters, and the "semiStaticDCI-0-2" information element is an implementation example in which parameters corresponding to the P sets of second indexes indicated by the second information element in the first information include one set of semi-statically configured parameters. The "scalingDCI-0-2" information element is an implementation example of the third parameter carried in the second information.

In the example shown in Table 5, in the "betaOffsetsDCI-0-2-SBFD" information element, "oneBit" in the "dynamicDCI-0-2-SBFD" information element is an implementation example in which parameters corresponding to the N sets of first indexes indicated by the first information element in the first information include two sets (SIZE (2)) of dynamically configured parameters, "twoBits" in the "dynamicDCI-0-2-SBFD" information element is an implementation example in which parameters corresponding to the N sets of first indexes indicated by the first information element in the first information include four sets (SIZE (4)) of dynamically configured parameters, and the "semiStaticDCI-0-2-SBFD" information element is an implementation example in which parameters corresponding to the N sets of first indexes indicated by the first information element in the first information include one set of semi-statically configured parameters. The "scalingDCI-0-2-SBFD" information element is an implementation example of the fourth parameter carried in the second information.

Table 6

| UCI-OnPUSCH-DCI-0-2 ::= | SEQUENCE { |
|---|---|
| betaOffsetsDCI-0-2 | CHOICE { |
| dynamicDCI-0-2 | CHOICE { |
| oneBit | SEQUENCE (SIZE (2)) OF BetaOffsets, |
| twoBits | SEQUENCE (SIZE (4)) OF BetaOffsets |

| }, | |
|---|---|
| semiStaticDCI-0-2 | BetaOffsets |
| } | |
| scalingDCI-0-2 | |
| } | |
| UCI-OnPUSCH-DCI-0-2-SBFD ::= | SEQUENCE { |
| betaOffsetsDCI-0-2-SBFD | CHOICE { |
| dynamicDCI-0-2-SBFD | CHOICE { |
| oneBit | SEQUENCE (SIZE (2)) OF BetaOffsets, |
| twoBits | SEQUENCE (SIZE (4)) OF BetaOffsets |
| }, | |
| semiStaticDCI-0-2-SBFD | BetaOffsets |
| } | |
| scalingDCI-0-2-SBFD | |
| } | |

In Table 6, the first information element in the first information is included in the "UCI-OnPUSCH-DCI-0-2-SBFD" information element, and the second information element in the first information is included in the "UCI-OnPUSCH-DCI-0-2" information element.

In the example shown in Table 6, in the "betaOffsetsDCI-0-2" information element in the "UCI-OnPUSCH-DCI-0-2" information element, "oneBit" in the "dynamicDCI-0-2" information element is an implementation example in which parameters corresponding to the P sets of second indexes indicated by the second information element in the first information include two sets (SIZE (2)) of dynamically configured parameters, "twoBits" in the "dynamicDCI-0-2" information element is an implementation example in which parameters corresponding to the P sets of second indexes indicated by the second information element in the first information include four sets (SIZE (4)) of dynamically configured parameters, and the "semiStaticDCI-0-2" information element is an implementation example in which parameters corresponding to the P sets of second indexes indicated by the second information element in the first information include one set of semi-statically configured parameters. The "scalingDCI-0-2" information element is an implementation example of the third parameter carried in the second information.

In the example shown in Table 6, in the "betaOffsetsDCI-0-2-SBFD" information element in the "UCI-OnPUSCH-DCI-0-2-SBFD" information element, "oneBit" in the "dynamicDCI-0-2-SBFD" information element is an implementation example in which parameters corresponding to the N sets of first indexes indicated by the first information element in the first information include two sets (SIZE (2)) of dynamically configured parameters, "twoBits" in the "dynamicDCI-0-2-SBFD" information element is an implementation example in which parameters corresponding to the N sets of first indexes indicated by the first information element in the first information include four sets (SIZE (4)) of dynamically configured parameters, and the "semiStaticDCI-0-2-SBFD" information element is an implementation example in which parameters corresponding to the N sets of first indexes indicated by the first information element in the first information include one set of semi-statically configured parameters. The "scalingDCI-0-2-SBFD" information element is an implementation example of the fourth parameter carried in the second information.

Implementation example 3: For the CG-PUSCH, the first information and the second information carried in the RRC message may be implemented in any one of the following implementations in Table 7 and Table 8.

Table 7

```
CG-UCI-OnPUSCH ::= CHOICE {
        dynamic                              SEQUENCE (SIZE (1..4)) OF
BetaOffsets,
        semiStatic                           BetaOffsets
}
CG-UCI-OnPUSCH-SBFD ::= CHOICE {
        semiStatic-SBFD                      BetaOffsets
}
```

In Table 7, the first information element in the first information is included in the "CG-UCI-OnPUSCH-SBFD" information element, and the second information element in the first information is included in "CG-UCI-OnPUSCH".

In the example shown in Table 7, the "dynamic" information element is an implementation example in which parameters corresponding to the P sets of second indexes indicated by the second information element in the first information include one to four sets (SIZE (1, ..., 4)) of dynamically configured parameters, and the "semiStatic" information element is an implementation example in which parameters corresponding to the P sets of second indexes indicated by the second information element in the first information include one set of semi-statically configured parameters.

In the example shown in Table 7, the "semiStatic-SBFD" information element is an implementation example in which parameters corresponding to the N sets of first indexes indicated by the first information element in the first information include one set of semi-statically configured parameters.

Table 8

```
    CG-UCI-OnPUSCH ::= CHOICE {
        dynamic                                    SEQUENCE (SIZE (1..4)) OF
BetaOffsets,
        semiStatic                                 BetaOffsets
    }
    CG-UCI-OnPUSCH-SBFD ::= CHOICE {
        dynamic-SBFD                               SEQUENCE (SIZE (1..4)) OF
BetaOffsets,
        semiStatic-SBFD                            BetaOffsets
    }
```

In Table 8, the first information element in the first information is included in the "CG-UCI-OnPUSCH-SBFD" information element, and the second information element in the first information is included in the "CG-UCI-OnPUSCH" information element.

In the example shown in Table 8, the "dynamic" information element in the "CG-UCI-OnPUSCH" information element is an implementation example in which parameters corresponding to the P sets of second indexes indicated by the second information element in the first information include one to four sets (SIZE (1, ..., 4)) of dynamically configured parameters, and the "semiStatic" information element is an implementation example in which parameters corresponding to the P sets of second indexes indicated by the second information element in the first information include one set of semi-statically configured parameters.

In the example shown in Table 8, the "dynamic-SBFD" information element in the "CG-UCI-OnPUSCH-SBFD" information element is an implementation example in which parameters corresponding to the P sets of second indexes indicated by the second information element in the first information include one to four sets (SIZE (1, ..., 4)) of dynamically configured parameters, and the "semiStatic-SBFD" information element is an implementation example in which parameters corresponding to the N sets of first indexes indicated by the first information element in the first information include one set of semi-statically configured parameters.

Implementation example 4: For PUSCHs scheduled by the DCI format 0_0/0_1 and associated with the priority 0 and the priority 1, the first information and the second information carried in the RRC message may be implemented in any one of the following implementations in Table 9 and Table 10.

Table 9

```
    betaOffsetsCrossPri0    SetupRelease { BetaOffsetsCrossPriSel }

    betaOffsetsCrossPri1    SetupRelease { BetaOffsetsCrossPriSel }

    betaOffsetsCrossPri0-SBFD SetupRelease { BetaOffsetsCrossPriSel-SBFD }

    betaOffsetsCrossPri1-SBFD SetupRelease { BetaOffsetsCrossPriSel-SBFD }


    BetaOffsetsCrossPriSel ::= CHOICE {

        dynamic                SEQUENCE (SIZE (4)) OF BetaOffsetsCrossPri,

        semiStatic             BetaOffsetsCrossPri

    }

    BetaOffsetsCrossPriSel-SBFD ::= CHOICE {

        semiStatic-SBFD        BetaOffsetsCrossPri

    }
```

In Table 9, the first information element in the first information is included in the "BetaOffsetsCrossPriSel-SBFD" information element, and the second information element in the first information is included in the "BetaOffsetsCrossPriSel" information element.

In the example shown in Table 9, the "dynamic" information element in the "BetaOffsetsCrossPriSel" information element is an implementation example in which parameters corresponding to the P sets of second indexes indicated by the second information element in the first information include four sets (SIZE (4)) of dynamically configured parameters, and the "semiStatic" information element in the "BetaOffsetsCrossPriSel" information element is an implementation example in which parameters corresponding to the P sets of second indexes indicated by the second information element in the first information include one set of semi-statically configured parameters.

In the example shown in Table 9, the "semiStatic-SBFD" information element in the "BetaOffsetsCrossPriSel-SBFD" information element is an implementation example in which parameters corresponding to the N sets of first indexes indicated by the first information element in the first information include one set of semi-statically configured parameters.

Table 10

```
betaOffsetsCrossPri0    SetupRelease { BetaOffsetsCrossPriSel }

betaOffsetsCrossPri1    SetupRelease { BetaOffsetsCrossPriSel }

betaOffsetsCrossPri0-SBFD SetupRelease { BetaOffsetsCrossPriSel-SBFD }

betaOffsetsCrossPri1-SBFD SetupRelease { BetaOffsetsCrossPriSel-SBFD }


BetaOffsetsCrossPriSel ::= CHOICE {

    dynamic              SEQUENCE (SIZE (4)) OF BetaOffsetsCrossPri,

    semiStatic             BetaOffsetsCrossPri

}

BetaOffsetsCrossPriSel-SBFD ::= CHOICE {

    dynamic-SBFD       SEQUENCE (SIZE (4)) OF BetaOffsetsCrossPri,

    semiStatic-SBFD        BetaOffsetsCrossPri

}
```

In Table 10, the first information element in the first information is included in the "BetaOffsetsCrossPriSel-SBFD" information element, and the second information element in the first information is included in the "BetaOffsetsCrossPriSel" information element.

In the example shown in Table 10, the "dynamic" information element in the "BetaOffsetsCrossPriSel" information element is an implementation example in which parameters corresponding to the P sets of second indexes indicated by the second information element in the first information include four sets (SIZE (4)) of dynamically configured parameters, and the "semiStatic" information element in the "BetaOffsetsCrossPriSel" information element is an implementation example in which parameters corresponding to the P sets of second indexes indicated by the second information element in the first information include one set of semi-statically configured parameters.

In the example shown in Table 10, the "dynamic-SBFD" information element in the "BetaOffsetsCrossPriSel-SBFD" information element is an implementation example in which parameters corresponding to the N sets of first indexes indicated by the first information element in the first information include four sets (SIZE (4)) of dynamically configured parameters, and the "semiStatic-SBFD" information element in the "BetaOffsetsCrossPriSel-SBFD" information element is an implementation example in which parameters corresponding to the N sets of first indexes indicated by the first information element in the first information include one set of semi-statically configured parameters.

Implementation example 5: For the PUSCH scheduled by the DCI format 0_2 and associated with the priority 0 and the priority 1, the first information and the second information carried in the RRC message may be implemented in any one of the following implementations in Table 11 and Table 12.

Table 11

```
        betaOffsetsCrossPri0DCI-0-2    SetupRelease    {    BetaOffsetsCrossPriSelDCI-0-2    }
betaOffsetsCrossPri1DCI-0-2    SetupRelease    {    BetaOffsetsCrossPriSelDCI-0-2    }
betaOffsetsCrossPri0DCI-0-2-SBFD SetupRelease { BetaOffsetsCrossPriSelDCI-0-2-SBFD }
        betaOffsetsCrossPri1DCI-0-2-SBFD  SetupRelease  {  BetaOffsetsCrossPriSelDCI-0-2-
SBFD }


    BetaOffsetsCrossPriSelDCI-0-2 ::= CHOICE {
        dynamicDCI-0-2          CHOICE {
            oneBit                  SEQUENCE (SIZE (2)) OF BetaOffsetsCrossPri,
            twoBits                 SEQUENCE (SIZE (4)) OF BetaOffsetsCrossPri
        },
        semiStaticDCI-0-2     BetaOffsetsCrossPri
    }
    BetaOffsetsCrossPriSelDCI-0-2-SBFD ::= CHOICE {
        semiStaticDCI-0-2-SBFD     BetaOffsetsCrossPri
    }
```

In Table 11, the first information element in the first information is included in the "BetaOffsetsCrossPriSelDCI-0-2-SBFD" information element, and the second information element in the first information is included in the "BetaOffsetsCrossPriSelDCI-0-2" information element.

In the example shown in Table 11, in the "BetaOffsetsCrossPriSelDCI-0-2" information element, "oneBit" in the "dynamicDCI-0-2" information element is an implementation example in which parameters corresponding to the P sets of second indexes indicated by the second information element in the first information include two sets (SIZE (2)) of dynamically configured parameters, "twoBits" in the "dynamicDCI-0-2" information element is an implementation example in which parameters corresponding to the P sets of second indexes indicated by the second information element in the first information include four sets (SIZE (4)) of dynamically configured parameters, and the "semiStaticDCI-0-2" information element is an implementation example in which parameters corresponding to the P sets of second indexes indicated by the second information element in the first information include one set of semi-statically configured parameters.

In the example shown in Table 11, the "semiStaticDCI-0-2-SBFD" information element in the "BetaOffsetsCrossPriSelDCI-0-2-SBFD" information element is an implementation example in which parameters corresponding to the N sets of first indexes indicated by the first information element in the first information include one set of semi-statically configured parameters.

Table 12

```
        betaOffsetsCrossPri0DCI-0-2    SetupRelease    {    BetaOffsetsCrossPriSelDCI-0-2    }
betaOffsetsCrossPri1DCI-0-2            SetupRelease         {         BetaOffsetsCrossPriSelDCI-0-
2  }betaOffsetsCrossPri0DCI-0-2-SBFD  SetupRelease  {  BetaOffsetsCrossPriSelDCI-0-2-
SBFD }
        betaOffsetsCrossPri1DCI-0-2-SBFD  SetupRelease  {  BetaOffsetsCrossPriSelDCI-0-2-
SBFD }


        BetaOffsetsCrossPriSelDCI-0-2 ::= CHOICE {
                dynamicDCI-0-2          CHOICE {
                        oneBit                  SEQUENCE (SIZE (2)) OF BetaOffsetsCrossPri,
                        twoBits                 SEQUENCE (SIZE (4)) OF BetaOffsetsCrossPri
                },
                semiStaticDCI-0-2     BetaOffsetsCrossPri
        }
        BetaOffsetsCrossPriSelDCI-0-2-SBFD ::= CHOICE {
                dynamicDCI-0-2-SBFD          CHOICE {
                        oneBit                              SEQUENCE  (SIZE  (2))  OF
BetaOffsetsCrossPri,
                        twoBits                             SEQUENCE (SIZE (4)) OF BetaOffsetsCrossPri
                },
                semiStaticDCI-0-2-SBFD     BetaOffsetsCrossPri
        }
```

In Table 12, the first information element in the first information is included in the "BetaOffsetsCrossPriSelDCI-0-2-SBFD" information element, and the second information element in the first information is included in the "BetaOffsetsCrossPriSelDCI-0-2" information element.

In the example shown in Table 12, in the "BetaOffsetsCrossPriSelDCI-0-2" information element, "oneBit" in the "dynamicDCI-0-2" information element is an implementation example in which parameters corresponding to the P sets of second indexes indicated by the second information element in the first information include two sets (SIZE (2)) of dynamically configured parameters, "twoBits" in the "dynamicDCI-0-2" information element is an implementation example in which parameters corresponding to the P sets of second indexes indicated by the second information element in the first information include four sets (SIZE (4)) of dynamically configured parameters, and the "semiStaticDCI-0-2" information element is an implementation example in which parameters corresponding to the P sets of second indexes indicated by the second information element in the first information include one set of semi-statically configured parameters.

In the example shown in Table 12, in the "BetaOffsetsCrossPriSelDCI-0-2-SBFD" information element, "oneBit" in the "dynamicDCI-0-2-SBFD" information element is an implementation example in which parameters corresponding to the N sets of first indexes indicated by the first information element in the first information include two sets (SIZE (2)) of dynamically configured parameters, "twoBits" in the "dynamicDCI-0-2-SBFD" information element is an implementation example in which parameters corresponding to the N sets of first indexes indicated by the first information element in the first information include four sets (SIZE (4)) of dynamically configured parameters, and the "semiStaticDCI-0-2-SBFD" information element is an implementation example in which parameters corresponding to the N sets of first indexes indicated by the first information element in the first information include one set of semi-statically configured parameters.

Implementation example 6: For the CG-PUSCH associated with the priority 0 and the priority 1, the first information and the second information carried in the RRC message may be implemented in any one of the following implementations in Table 13 and Table 14.

Table 13

| |
|---|
| cg-betaOffsetsCrossPri0 SetupRelease { BetaOffsetsCrossPriSelCG } |
| cg-betaOffsetsCrossPri1 SetupRelease { BetaOffsetsCrossPriSelCG } |
| cg-betaOffsetsCrossPri0-SBFD SetupRelease { BetaOffsetsCrossPriSelCG-SBFD } cg-betaOffsetsCrossPri1-SBFD SetupRelease { BetaOffsetsCrossPriSelCG-SBFD } |
| BetaOffsetsCrossPriSelCG ::= CHOICE { |
|     dynamic            SEQUENCE (SIZE (1..4)) OF BetaOffsetsCrossPri, |

| |
|---|
|     semiStatic        BetaOffsetsCrossPri |
| } |
| |
| BetaOffsetsCrossPriSelCG-SBFD ::= CHOICE { |
|     semiStatic-SBFD        BetaOffsetsCrossPri |
| } |

In Table 13, the first information element in the first information is included in the "BetaOffsetsCrossPriSelCG-SBFD" information element, and the second information element in the first information is included in the "BetaOffsetsCrossPriSelCG" information element.

In the example shown in Table 13, the "dynamic" information element in the "BetaOffsetsCrossPriSelCG" information element is an implementation example in which parameters corresponding to the P sets of second indexes indicated by the second information element in the first information include one to four sets (SIZE (1, ..., 4)) of dynamically configured parameters, and the "semiStatic" information element is an implementation example in which parameters corresponding to the P sets of second indexes indicated by the second information element in the first information include one set of semi-statically configured parameters.

In the example shown in Table 13, the "semiStatic-SBFD" information element in the "BetaOffsetsCrossPriSelCG-SBFD" information element is an implementation example in which parameters corresponding to the N sets of first indexes indicated by the first information element in the first information include one set of semi-statically configured parameters.

Table 14

```
cg-betaOffsetsCrossPri0 SetupRelease { BetaOffsetsCrossPriSelCG }

cg-betaOffsetsCrossPri1 SetupRelease { BetaOffsetsCrossPriSelCG }

cg-betaOffsetsCrossPri0-SBFD SetupRelease { BetaOffsetsCrossPriSelCG-SBFD }

cg-betaOffsetsCrossPri1-SBFD SetupRelease { BetaOffsetsCrossPriSelCG-SBFD }


BetaOffsetsCrossPriSelCG ::= CHOICE {
        dynamic               SEQUENCE (SIZE (1..4)) OF BetaOffsetsCrossPri,
        semiStatic            BetaOffsetsCrossPri
    }


BetaOffsetsCrossPriSelCG-SBFD ::= CHOICE {
        dynamic-SBFD          SEQUENCE (SIZE (1..4)) OF BetaOffsetsCrossPri,
```

```
        semiStatic-SBFD         BetaOffsetsCrossPri
    }
```

In Table 14, the first information element in the first information is included in the "BetaOffsetsCrossPriSelCG-SBFD" information element, and the second information element in the first information is included in the "BetaOffsetsCrossPriSelCG" information element.

In the example shown in Table 14, the "dynamic" information element in the "BetaOffsetsCrossPriSelCG" information element is an implementation example in which parameters corresponding to the P sets of second indexes indicated by the second information element in the first information include one to four sets (SIZE (1, ..., 4)) of dynamically configured parameters, and the "semiStatic" information element is an implementation example in which parameters corresponding to the P sets of second indexes indicated by the second information element in the first information include one set of semi-statically configured parameters.

In the example shown in Table 14, the "dynamic-SBFD" information element in the "BetaOffsetsCrossPriSelCG-SBFD" information element is an implementation example in which parameters corresponding to the N sets of first indexes indicated by the first information element in the first information include one to four sets (SIZE (1, ..., 4)) of dynamically configured parameters, and the "semiStatic-SBFD" information element is an implementation example in which parameters corresponding to the N sets of first indexes indicated by the first information element in the first information include one set of semi-statically configured parameters.

It should be understood that signaling format designs for the N sets of first indexes and the P sets of second indexes that are indicated by the first information may be the same or may be different. For example, when the PUSCH is not associated with the priority 0 and the priority 1, any one of the N sets of first indexes and the P sets of second indexes may be implemented by using any one of the following Table 15 to Table 17. When the PUSCH is associated with the priority 0 or the priority 1, any one of the N sets of first indexes and the P sets of second indexes may be implemented by using the following Table 18.

Table 15

| BetaOffsets ::= | SEQUENCE { |
|---|---|
| betaOffsetACK-Index1 | INTEGER(0..31) |
| betaOffsetACK-Index2 | INTEGER(0..31) |
| betaOffsetACK-Index3 | INTEGER(0..31) |
| betaOffsetCSI-Part1-Index1 | INTEGER(0..31) |
| betaOffsetCSI-Part1-Index2 | INTEGER(0..31) |

| betaOffsetCSI-Part2-Index1 | INTEGER(0..31) |
|---|---|
| betaOffsetCSI-Part2-Index2 | INTEGER(0..31) |
| } | |

Table 16

| BetaOffsets ::= | SEQUENCE { |
|---|---|
| betaOffsetACK-Index1 | INTEGER(0..31) |
| betaOffsetACK-Index2 | INTEGER(0..31) |
| betaOffsetACK-Index3 | INTEGER(0..31) |
| } | |

Table 17

| BetaOffsets ::= | SEQUENCE { |
|---|---|
| betaOffsetCSI-Part1-Index1 | INTEGER(0..31) |
| betaOffsetCSI-Part1-Index2 | INTEGER(0..31) |
| betaOffsetCSI-Part2-Index1 | INTEGER(0..31) |
| betaOffsetCSI-Part2-Index2 | INTEGER(0..31) |
| } | |

Table 18

| BetaOffsetsCrossPri ::= SEQUENCE (SIZE(3)) OF INTEGER(0..31) |
|---|

Meanings of parameters included in Table 15 to Table 17 are as follows:

betaOffsetACK-Index1: a code rate compensation parameter index 1 for multiplexing the HARQ-ACK (that is, the first HARQ-ACK index mentioned above);

betaOffsetACK-Index2: a code rate compensation parameter index 2 for multiplexing the HARQ-ACK (that is, the second HARQ-ACK index mentioned above);

betaOffsetACK-Index3: a code rate compensation parameter index 3 for multiplexing the HARQ-ACK (that is, the third HARQ-ACK index mentioned above);

betaOffsetCSI-Part1-Index1: a code rate compensation parameter index 1 for multiplexing the CSI part 1 (that is, the first CSI part 1 index mentioned above);

betaOffsetCSI-Part1-Index2: a code rate compensation parameter index 2 for multiplexing the CSI part 1 (that is, the second CSI part 1 index mentioned above);

betaOffsetCSI-Part2-Index1: a code rate compensation parameter index 1 for multiplexing the CSI part 2 (that is, the second CSI part 2 index mentioned above); and

betaOffsetCSI-Part2-Index2: a code rate compensation parameter index 2 for multiplexing the CSI part 2 (that is, the second CSI part 2 index mentioned above).

Meanings of parameters included in Table 18 are as follows:

a first value of BetaOffsetsCrossPri: a code rate compensation parameter index 1 for multiplexing the HARQ-ACK (that is, the fourth HARQ-ACK index or the seventh HARQ-ACK index mentioned above);

a second value of BetaOffsetsCrossPri: a code rate compensation parameter index 2 for multiplexing the HARQ-ACK (that is, the fifth HARQ-ACK index or the eighth HARQ-ACK index mentioned above); and

a third value of BetaOffsetsCrossPri: a code rate compensation parameter index 3 for multiplexing the HARQ-ACK (that is, the sixth HARQ-ACK index or the ninth HARQ-ACK index mentioned above).

Based on the technical solution shown in FIG. 3, the first information received by the terminal device in step S301 indicates the N sets of first indexes and the P sets of second indexes. Then the terminal device can determine, based on the N sets of first indexes, the first parameter used to perform code rate compensation on the UCI carried in the SBFD time unit, and the terminal device can also determine, based on the P sets of second indexes, the second parameter used to perform code rate compensation on the UCI carried in the uplink time unit. Correspondingly, the terminal device may send the UCI and the uplink data on the PUSCH based on the first parameter and/or the second parameter in step S302. Therefore, when the UCI is carried on the PUSCH, the terminal device can determine the code rate compensation parameter of the UCI in the uplink time unit and/or the code rate compensation parameter of the UCI in the SBFD time unit, so that the terminal device performs uplink transmission in the SBFD time unit and/or the uplink time unit based on the code rate compensation parameter that adapts to the channel environments (or channel interference, or the like), thereby improving reliability of UCI transmission and resolving the foregoing problem (1), to improve communication efficiency.

In a possible implementation of the technical solution shown in FIG. 3, the quantity of encoded modulation symbols for the UCI sent by the terminal device in step S302 is determined based on a transport block size (transport block size, TBS) in a time unit in which the UCI is located and a quantity of REs available for transmitting the UCI in the time unit in which the UCI is located; and when the UCI is carried in a first time unit and a TBS in the first time unit is determined based on a second quantity of REs in a second time unit, any one of the following is met: the TBS in the time unit in which the UCI is located is determined based on a first quantity of REs in the first time unit; the quantity of REs available for transmitting the UCI in the time unit in which the UCI is located is determined based on the second quantity of REs; and the quantity of encoded modulation symbols for the UCI is determined based on relative information between the first quantity of REs and the second quantity of REs, where the first time unit is an SBFD time unit and the second time unit is an uplink time unit, or the first time unit is an uplink time unit and the second time unit is an SBFD time unit. Specifically, when the UCI is carried in the first time unit and the TBS in the first time unit is determined based on the second quantity of REs in the second time unit, the terminal device may determine the quantity of encoded modulation symbols for the UCI based on any one of the foregoing manners. This can resolve a problem that reliability of UCI transmission or reliability of PUSCH transmission is reduced because a frequency domain resource used for TBS calculation is inconsistent with a frequency domain resource on which UCI multiplexing occurs.

For example, a method for determining the TBS by the terminal device is as follows:

First, the terminal device determines a quantity $N_{info}$ of information bits based on the following formula:

$$N_{info} = K \cdot N_{RE} \cdot R \cdot Q_m \cdot v,$$

where

$N_{RE}$ indicates a quantity of REs allocated for PUSCH transmission in one slot, R indicates a code rate, $Q_m$ indicates a modulation order, v indicates a quantity of layers, K indicates a quantity of slots for one TBoMS PUSCH transmission, and for the PUSCH repetition type A and the PUSCH repetition type B, K = 1. It should be understood that these parameters may be indicated by using the RRC message that carries the first information.

If $N_{info} \leq 3824$, a quantized intermediate value of the quantity of information bits is calculated by using a formula

$$N'_{info} = \max\left(24, 2^n \cdot \left\lceil \frac{N_{info}}{2^n} \right\rceil\right),$$ where $n = \max(3, \lfloor \log_2(N_{info}) \rfloor - 6)$, and a value that is close to and not less than $N'_{info}$ is obtained by looking up a table in a protocol and is used as the TBS.

If $N_{info} > 3824$, a quantized intermediate value $N'_{info} = \max\left(3840, 2^n \cdot \text{round}\left(\frac{N_{info}-24}{2^n}\right)\right)$ of the quantity of information bits is calculated by using a formula, where n = $\lfloor \log_2(N_{info} - 24) \rfloor - 5$; and if the code rate R

$\leq 1/4$, $TBS = 8 \cdot C \cdot \left\lceil \frac{N'_{info}+24}{8 \cdot C} \right\rceil - 24$, where $C = \left\lceil \frac{N'_{info}+24}{3816} \right\rceil$.

Otherwise, if $N'_{info} > 8424$, $TBS = 8 \cdot C \cdot \left\lceil \frac{N'_{info}+24}{8 \cdot C} \right\rceil - 24$, and $C = \left\lceil \frac{N'_{info}+24}{8424} \right\rceil$; otherwise,

$$TBS = 8 \cdot \left\lceil \frac{N'_{info}+24}{8} \right\rceil - 24.$$

Optionally, for the second-type multislot PUSCH, $N_{RE}$ of the SBFD time unit and $N_{RE}$ of the uplink time unit are different, and are respectively denoted as $N_{RE,SBFD}$ and $N_{RE,UL}$.

Optionally, $N_{RE,UL}$ is indicated by signaling carrying the first information (for example, the signaling may include an RRC message, DCI, or the like), and $N_{RE,SBFD}$ is determined based on both a frequency domain resource range indicated by the RRC message and a frequency domain range of an uplink subband. For example, $N_{RE,SBFD}$ is determined by an intersection set of the frequency domain range indicated by the signaling carrying the first information and the frequency domain range of the uplink subband.

Optionally, $N_{RE,SBFD}$ and $N_{RE,UL}$ are indicated by signaling (for example, the signaling may include an RRC message, DCI, or the like) that carries the first information.

Optionally, a method for determining the TBS may include: determining the TBS based on $N_{RE,UL}$, that is, replacing $N_{RE}$ with $N_{RE,UL}$; or determining the TBS based on $N_{RE,SBFD}$, that is, replacing $N_{RE}$ with $N_{RE,SBFD}$.

Then the terminal device further determines a quantity of encoded modulation symbols per layer for the UCI.

Optionally, in an example in which the HARQ-ACK is multiplexed on the PUSCH repetition type A, a quantity $Q'_{ACK}$ of encoded modulation symbols per layer for the HARQ-ACK meets the foregoing formula (1).

In a possible implementation, the denominator $\sum_{r=0}^{C_{UL-SCH}-1} K_r$ in formula (1) is obtained through calculation based on $N_{RE}$ corresponding to the type of the time unit in which UCI multiplexing occurs. For example, if UCI multiplexing occurs in the uplink time unit, the denominator $\sum_{r=0}^{C_{UL-SCH}-1} K_r$ is obtained through calculation based on $N_{RE,UL}$; or if UCI multiplexing occurs in the SBFD time unit, the denominator $\sum_{r=0}^{C_{UL-SCH}-1} K_r$ is obtained through calculation based on $N_{RE,SBFD}$.

In another possible implementation, the numerator $\sum_{l=0}^{N^{PUSCH}_{symb,all}-1} M^{UCI}_{sc}(l)$ in formula (1) is determined based on a slot type used for calculating the TBS. For example, if the TBS is obtained through calculation based on $N_{RE,UL}$, $\sum_{l=0}^{N^{PUSCH}_{symb,all}-1} M^{UCI}_{sc}(l)$ is a total of available time-frequency resources corresponding to the uplink time unit; or if the TBS is obtained through calculation based on $N_{RE,SBFD}$, $\sum_{l=0}^{N^{PUSCH}_{symb,all}-1} M^{UCI}_{sc}(l)$ is a total of available time-frequency resources corresponding to the SBFD time unit.

In another possible implementation, formula (1) is modified to:

$$Q'_{ACK} = \min\left\{\left\lceil \frac{(O_{ACK}+L_{ACK})\beta^{PUSCH}_{offset} \cdot \sum_{l=0}^{N^{PUSCH}_{symb,all}-1} M^{UCI}_{sc}(l)}{\delta \times \sum_{r=0}^{C_{UL-SCH}-1} K_r} \right\rceil, \left\lceil \alpha \cdot \sum_{l=l_0}^{N^{PUSCH}_{symb,all}-1} M^{UCI}_{sc}(l) \right\rceil\right\},$$

where

a scaling factor $\delta$ may be defined as follows: if the TBS is obtained through calculation based on $N_{RE,UL}$, but UCI multiplexing occurs in the SBFD slot, $\delta = N_{RE,SBFD}/N_{RE,UL}$; or if the TBS is obtained through calculation based on $N_{RE,SBFD}$, but UCI multiplexing occurs in the SBFD slot, $\delta = N_{RE,UL}/N_{RE,SBFD}$.

Optionally, in other cases, $\delta = 1$.

Alternatively, $\delta$ may be determined by using a unified formula: $\delta = N_{RE,UCI}/N_{RE,TBS}$, where $N_{RE,TBS}$ indicates $N_{RE}$ used during TBS calculation, and $N_{RE,UCI}$ indicates $N_{RE}$ in the time unit in which UCI multiplexing occurs.

Alternatively, formula (1) may be modified to:

$$Q'_{ACK} = \min\left\{\left\lceil \frac{(O_{ACK}+L_{ACK}) \cdot \delta \cdot \beta^{HARQ-ACK}_{offset} \cdot \sum_{l=0}^{N^{PUSCH}_{symb,all}-1} M^{UCI}_{sc}(l)}{\sum_{r=0}^{C_{UL-SCH}-1} K_r} \right\rceil, \left\lceil \alpha \cdot \sum_{l=l_0}^{N^{PUSCH}_{symb,all}-1} M^{UCI}_{sc}(l) \right\rceil\right\}.$$

In the foregoing formula, $\delta = N_{RE,TBS}/N_{RE,UCI}$.

Alternatively, formula (1) is not modified, but $\beta^{PUSCH}_{offset}$ in the numerator of formula (1) is modified to

$\beta^{PUSCH}_{offset} = \delta \text{ x } \beta^{HARQ-ACK}_{offset}$, where $\delta$ $N_{RE,TBS}/N_{RE,UCI}$.

It may be understood that, in the foregoing implementation process, parameter optimization in formula (1) is described by using the quantity $Q'_{ACK}$ of encoded modulation symbols per layer for the HARQ-ACK as an example. Similarly, the quantity $Q'_{CSI-1}$ of encoded modulation symbols per layer for the CSI part 1 is determined by using formula (2), the quantity $Q'_{CSI-2}$ of encoded modulation symbols per layer for the CSI part 2 is determined by using formula (3), the quantity $Q'_{CG-UCI}$ of encoded modulation symbols per layer for the CG-UCI is determined by using formula (4), and the quantity $Q'_{ACK}$ of encoded modulation symbols per layer for the HARQ-ACK jointly encoded with the CG-UCI is determined by using formula (5), and parameter optimization may be performed on the formula based on any one of the foregoing or by using the foregoing implementation process. For details, refer to the foregoing implementation process.

Then the terminal device determines the quantity of encoded modulation symbols for the UCI in the foregoing manner, and further sends the UCI and the uplink data in step S302 based on the quantity of encoded modulation symbols for the UCI. This resolves a problem (the foregoing problem 2) that reliability of UCI transmission or reliability of PUSCH transmission is reduced because a frequency domain resource used for TBS calculation is inconsistent with a frequency domain resource on which UCI multiplexing occurs when a multislot PUSCH can be allocated to an SBFD slot and an uplink slot.

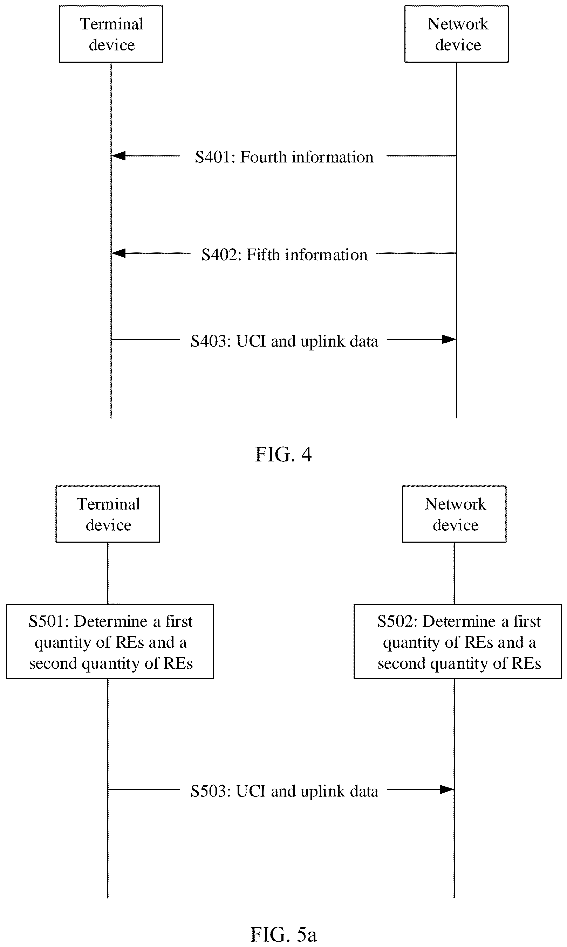

FIG. 4 is another diagram of a communication method according to this application.

S401: A network device sends fourth information, and correspondingly, a terminal device receives the fourth information.

The fourth information indicates P sets of second indexes, one of the P sets of second indexes includes Q second indexes, the Q second indexes include a second index, the second index corresponds to a second parameter, the second parameter is for performing code rate compensation on UCI carried in an uplink time unit, P is a positive integer, and Q is a positive integer.

It should be noted that, for implementations of the P sets of second indexes and the second parameter, refer to the foregoing descriptions in the FIG. 3 and related embodiments.

S402: The network device sends fifth information, and correspondingly, the terminal device receives the fifth information.

The fifth information and the second parameter are used to determine a first parameter, and the first parameter is for performing code rate compensation on UCI carried in a subband full duplex SBFD time unit.

Optionally, the fourth information sent by the network device in step S401 and the fifth information sent by the network device in step S402 may be carried in a same message (for example, a same RRC message), or may be carried in different messages (for example, different RRC messages). In addition, when the fourth information and the fifth information are carried in the same RRC message, the fourth information and the fifth information may be carried in a same information element or different information elements in the RRC message.

It should be noted that, for an implementation process of the fourth information used to indicate the P sets of second indexes, refer to the foregoing implementation process of the second information elements used to indicate the P sets of second indexes in FIG. 3 and related embodiments. For example, the fourth information may be carried in any one of the "UCI-OnPUSCH" information element, the "UCI-OnPUSCH-DCI-0-2" information element, the "CG-UCI-OnPUSCH" information element, the "BetaOffsetsCrossPriSel" information element, the "BetaOffsetsCrossPriSelDCI-0-2" information element, and the "BetaOffsetsCrossPriSelCG" information element in the foregoing Table 1 to Table 14.

Similarly, for the fifth information used to determine the second parameter, refer to the foregoing implementation process of the first information element used to indicate the N sets of first indexes in FIG. 3 and related embodiments. For example, the fifth information may be carried in any one of the "UCI-OnPUSCH" information element, the "UCI-OnPUSCH-SBFD" information element, the "UCI-OnPUSCH-DCI-0-2-SBFD" information element, the "CG-UCI-OnPUSCH-SBFD" information element, the "BetaOffsetsCrossPriSel-SBFD" information element, the "BetaOffsetsCrossPriSelDCI-0-2-SBFD" information element, and the "BetaOffsetsCrossPriSelCG-SBFD" information element in the foregoing Table 1 to Table 14.

In a possible implementation, the fifth information includes at least one of the following:

P sets of factors, where one of the P sets of factors includes Q factors, the second index is a $j^{th}$ second index of an $i^{th}$ set of second indexes in the P sets of second indexes, the second parameter and a $j^{th}$ factor of an $i^{th}$ set of factors in the P sets of factors are used to determine the first parameter, a value of i ranges from 1 to P, and a value of j ranges from 1 to Q; or

P factors, where the second index is located in an $i^{th}$ set of second indexes in the P sets of second indexes, the second parameter and an $i^{th}$ factor in the P factors are used to determine the first parameter, and a value of i ranges from 1 to P; or

a target factor, where the second index is a $j^{th}$ second index of an $i^{th}$ set of second indexes in the P sets of second indexes, the second parameter and the target factor are used to determine the first parameter, a value of i ranges from 1 to P, and a value of j ranges from 1 to Q; or

at least one of a first target factor, a second target factor, a third target factor, and a fourth target factor, where when the second parameter is for performing code rate compensation on a HARQ-ACK, the second parameter and the first target factor are used to determine the first parameter; when the second parameter is for performing code rate compensation on a CSI part 1, the second parameter and the second target factor are used to determine the first parameter; when the second parameter is for performing code rate compensation on a CSI part 2, the second parameter and the third target factor are used to determine the first parameter; or when the second parameter is for performing code rate compensation on CG-UCI, the second parameter and the fourth target factor are used to determine the first parameter; or

at least one of P first factors, P second factors, P third factors, and P fourth factors, where the second index is located in an $i^{th}$ set of second indexes in the P sets of second indexes, and when the second parameter is for performing code rate compensation on a HARQ-ACK, the second parameter and an $i^{th}$ factor in the P first factors are used to determine the first parameter; when the second parameter is for performing code rate compensation on a CSI part 1, the second parameter and an $i^{th}$ factor in the P second factors are used to determine the first parameter; when the second parameter is for performing code rate compensation on a CSI part 2, the second parameter and an $i^{th}$ factor in the P third factors are used to determine the first parameter; or when the second parameter is for performing code rate compensation on CG-UCI, the second parameter and an $i^{th}$ factor in the P third factors are used to determine the first parameter, where a value of i ranges from 1 to P.

Specifically, the fifth information received by the terminal device may be implemented by using at least one of the P sets of factors, the target factor, the first target factor, the second target factor, and the third target factor, or at least one of the P first factors, the P second factors, and the P third factors, so that flexibility of implementing the solution is improved.

In an implementation example, a process of determining the first parameter based on the second parameter and a factor (for example, one factor in the P sets of factors, the target factor, the first target factor, the second target factor, the third target factor, and the fourth target factor) indicated by the fifth information may be represented as follows:

$$\beta_{offset}^{PUSCH,SBFD} = \beta_{offset}^{PUSCH,UL} \times \gamma^{PUSCH};$$

or

$$\beta_{offset}^{PUSCH,SBFD} = \beta_{offset}^{PUSCH,UL} + \gamma^{PUSCH},$$

where

$\beta_{offset}^{PUSCH,SBFD}$ represents the first parameter, $\beta_{offset}^{PUSCH,UL}$ represents the second parameter, and $\gamma^{PUSCH}$ represents the factor.

The following uses an example in which the P sets of second indexes indicated by the fourth information are four sets of second indexes (that is, a value of P is 4), and each of the P sets of second indexes includes seven second indexes. The seven second indexes may include a first HARQ-ACK index, a second HARQ-ACK index, a third HARQ-ACK index, a first CSI part 1 index, a second CSI part 1 index, a first CSI part 2 index, and a second CSI part 2 index.

In an implementation example, when the fifth information includes the P sets of factors, the P sets of factors may be four sets of factors, and each set of factors includes seven factors, to provide 28 factors (4 sets * 7/set = 28) in a one-to-one correspondence with the 28 second indexes (4 sets * 7/set = 28). It may be understood that different second indexes included in each of the P sets of second indexes may correspond to different factors.

In another implementation example, when the fifth information includes the P factors, the P sets of factors may be four factors, to provide four factors corresponding to different sets of second indexes in the four sets of second indexes. It may be understood that different second indexes included in each of the P sets of second indexes correspond to a same factor, and that different second indexes included in different sets of second indexes in the P sets of second indexes may correspond to different factors.

In another implementation example, when the fifth information includes the target factor, the P sets of factors may be one factor, to provide the same factor corresponding to different second indexes in the P sets of second indexes. It may be understood that different second indexes included in each of the P sets of second indexes correspond to the same factor, and that different second indexes included in different sets of second indexes in the P sets of second indexes also correspond to the same factor.

In another implementation example, when the fifth information includes at least one of the first target factor, the second target factor, the third target factor, and the fourth target factor, the P sets of factors may be four factors, to provide one same factor corresponding to UCI of a same type in the P sets of second indexes. It may be understood that UCI of a same type in the P sets of second indexes corresponds to a same factor, and that UCI of different types in the P sets of second indexes may correspond to different factors.

In another implementation example, when the fifth information includes at least one of at least one of the P first factors, the P second factors, the P third factors, and the P fourth factors, the P sets of factors may be 16 (4 sets * 4/set = 16) factors, to provide one same factor corresponding to UCI of a same type in each of the P sets of second indexes. It may be understood that UCI of a same type in a set of second indexes in the P sets of second indexes corresponds to a same factor, and that UCI of different types in a set of second indexes in the P sets of second indexes may correspond to different factors.

S403: The terminal device sends UCI and uplink data, and correspondingly, the network device receives the UCI and the uplink data.

The terminal device sends the UCI and the uplink data in the SBFD time unit based on the fourth information and the fifth information; and/or sends the UCI and the uplink data in the uplink time unit based on the fourth information.

It should be noted that the terminal device may determine the second parameter based on the fourth information received in step S401, and that the terminal device may determine the first parameter based on the fourth information received in step S401 and the fifth information received in step S402. Correspondingly, in step S403, the terminal device sends the UCI and the uplink data in the SBFD time unit based on the first parameter; and/or sends the UCI and the uplink data in the uplink time unit based on the second parameter. Therefore, the terminal device can perform uplink transmission in the SBFD time unit and/or the uplink time unit based on a code rate compensation parameter that adapts to channel environments (or channel interference, or the like).

It may be understood that in step S403 of the method shown in FIG. 4, the terminal device may trigger, based on a signaling indication of the network device, sending of the UCI and the uplink data. For example, the signaling may include first signaling indicating the terminal device to send the uplink data and second signaling indicating the terminal device to send the UCI. That the uplink data scheduled by the first signaling and the UCI scheduled by the second signaling overlap in time domain includes: the uplink data scheduled by the first signaling and the UCI scheduled by the second signaling overlap in the SBFD time unit, and/or the uplink data scheduled by the first signaling and the UCI scheduled by the second signaling overlap in the uplink time unit.

Optionally, in step S403, a PUSCH carrying the UCI and the uplink data may be a single-slot PUSCH or a multislot PUSCH. When the PUSCH carrying the UCI and the uplink data is a multislot PUSCH, the PUSCH may be any one of the following PUSCHs, for example, a PUSCH repetition type A, a PUSCH repetition type B, a TBoMS PUSCH, or a plurality of PUSCHs scheduled by single DCI.

Further optionally, the multislot PUSCH may include a first-type multislot PUSCH and a second-type multislot PUSCH. For definitions of the single-slot PUSCH, the first-type multislot PUSCH, and the second-type multislot PUSCH, refer to the foregoing descriptions in FIG. 3 and related embodiments. In addition, before the terminal device sends the UCI and the uplink data in step S403, the terminal device may further determine a code rate compensation parameter (for example, the foregoing first parameter and/or second parameter) of the UCI based on the fourth information and the fifth information. In addition, for a process in which the terminal device determines the first parameter and/or the second parameter, and sends the UCI and the uplink data on the single-slot PUSCH, the first-type multislot PUSCH, or the second-type multislot PUSCH based on the first parameter and/or the second parameter, refer to the foregoing descriptions in FIG.

3 and related embodiments.

Optionally, in a possible implementation of the technical solution shown in FIG. 4, before the terminal device sends the UCI in step S403, the terminal device may determine a third parameter that indicates an upper limit on a quantity of encoded modulation symbols for the UCI carried on the PUSCH in the SBFD time unit, and/or the terminal device may determine a fourth parameter that indicates an upper limit on a quantity of encoded modulation symbols for the UCI carried on the PUSCH in the uplink time unit, so that the terminal device sends the UCI and the uplink data in step S403 based on the third parameter and/or the fourth parameter.

Optionally, in a possible implementation of the technical solution shown in FIG. 4, for a process of determining the quantity of encoded modulation symbols for the UCI sent by the terminal device in step S403, refer to the foregoing descriptions in FIG. 3 and related embodiment.

Based on the technical solution shown in FIG. 4, after the terminal device receives the fourth information indicating the P sets of second indexes in step S401, the terminal device can determine, based on the fourth information, the second parameter for performing code rate compensation on the UCI carried in the uplink time unit. In addition, the terminal device can determine, in step S402 based on the received fifth information and the second parameter, the first parameter used to perform code rate compensation on the UCI carried in the subband full duplex SBFD time unit. Therefore, when the UCI is carried on the PUSCH, the terminal device can determine the code rate compensation parameter of the UCI in the uplink time unit and/or the code rate compensation parameter of the UCI in the SBFD time unit, so that the terminal device performs uplink transmission in the SBFD time unit and/or the uplink time unit based on the code rate compensation parameter that adapts to the channel environments (or channel interference, or the like), thereby improving reliability of UCI transmission and resolving the foregoing problem (1), to improve communication efficiency.

FIG. 5a is a diagram of a communication method according to this application.

S501: A terminal device determines a first quantity of REs and a second quantity of REs.

S502: A network device determines a first quantity of REs and a second quantity of REs.

In step S501, the terminal device determines that a quantity of REs in a first time unit on a PUSCH is the first quantity of REs, and the terminal device determines that a quantity of REs in a second time unit on the PUSCH is the second quantity of REs. Correspondingly, in step S502, the network device determines that the quantity of REs in the first time unit on the PUSCH is the first quantity of REs, and the network device determines that the quantity of REs in the second time unit on the PUSCH is the second quantity of REs. The first time unit is an SBFD time unit and the second time unit is an uplink time unit, or the first time unit is an uplink time unit and the second time unit is an SBFD time unit.

It should be understood that an execution sequence of step S501 and step S502 is not limited. For example, step S501 may be performed before step S502, or step S502 may be performed before step S501, or step S501 and step S502 may be performed at the same time. This is not limited herein.

In a possible implementation, before step S501, the method further includes: the terminal device receives sixth information from the network device, so that the terminal device determines the first quantity of REs and the second quantity of REs based on the sixth information in step S501. The sixth information includes indication information indicating the first quantity of REs and the sixth information includes indication information indicating the second quantity of REs; or the sixth information includes indication information indicating the first quantity of REs and the sixth information includes an indication about relative information between the first quantity of REs and the second quantity of REs; or the sixth information includes indication information indicating the second quantity of REs and the sixth information includes an indication about relative information between the first quantity of REs and the second quantity of REs. Therefore, the terminal device may receive the sixth information used to determine the first quantity of REs and the second quantity of REs, and the sixth information may be implemented in the foregoing plurality of manners, so that flexibility of implementing the solution is improved.

S503: The terminal device sends UCI and uplink data, and correspondingly, the network device receives the UCI and the uplink data.

In step S503, the UCI and the uplink data that are sent by the terminal device are carried on the PUSCH; a quantity of encoded modulation symbols for the UCI is determined based on a TBS in a time unit in which the UCI is located and a quantity of REs available for transmitting the UCI in the time unit in which the UCI is located; and when the UCI is carried in the first time unit and a TBS in the first time unit is determined based on the second quantity of REs, any one of the following is met: the TBS in the time unit in which the UCI is located is determined based on the first quantity of REs; the quantity of REs available for transmitting the UCI in the time unit in which the UCI is located is determined based on the second quantity of REs; and the quantity of encoded modulation symbols for the UCI is determined based on the relative information between the first quantity of REs and the second quantity of REs.

Optionally, the relative information includes a relative difference or a relative ratio.

For example, a method for determining the TBS by the terminal device is as follows:

First, the terminal device determines a quantity $N_{info}$ of information bits based on the following formula:

$$N_{info} = K \cdot N_{RE} \cdot R \cdot Q_m \cdot v,$$

where

where $N_{RE}$ indicates a quantity of REs allocated for PUSCH transmission in one slot, R indicates a code rate, $Q_m$ indicates a modulation order, v indicates a quantity of layers, K indicates a quantity of slots for one TBoMS PUSCH transmission, and for a PUSCH repetition type A and a PUSCH repetition type B, K = 1. It should be understood that these parameters may be indicated by using an RRC message that carries first information.

If $N_{info} \leq 3824$, a quantized intermediate value of the quantity of information bits is calculated by using a formula

$$N'_{info} = \max\left(24, 2^n \cdot \left\lfloor \frac{N_{info}}{2^n} \right\rfloor\right),$$ where $n = \max(3, \lfloor \log_2(N_{info}) \rfloor - 6)$, and a value that is close to and not less than $N'_{info}$ is obtained by looking up a table in a protocol and is used as the TBS.

If $N_{info} > 3824$, a quantized intermediate value $N'_{info} = \max\left(3840, 2^n \cdot \text{round}\left(\frac{N_{info}-24}{2^n}\right)\right)$ of the quantity of information bits is calculated by using a formula, where $n = \lfloor \log_2(N_{info} - 24) \rfloor - 5$; and if the code

rate $R \leq 1/4$, $\text{TBS} = 8 \cdot C \cdot \left\lceil \frac{N'_{info}+24}{8 \cdot C} \right\rceil - 24$, where $C = \left\lceil \frac{N'_{info}+24}{3816} \right\rceil$.

Otherwise, if $N'_{info} > 8424$, $\text{TBS} = 8 \cdot C \cdot \left\lceil \frac{N'_{info}+24}{8 \cdot C} \right\rceil - 24$, and $C = \left\lceil \frac{N'_{info}+24}{8424} \right\rceil$; otherwise,

$$\text{TBS} = 8 \cdot \left\lceil \frac{N'_{info}+24}{8} \right\rceil - 24.$$

Optionally, for the second-type multislot PUSCH, $N_{RE}$ of the SBFD time unit and $N_{RE}$ of the uplink time unit are different, and are respectively denoted as $N_{RE,SBFD}$ and $N_{RE,UL}$.

Optionally, $N_{RE,UL}$ is indicated by the RRC message carrying the first information, and $N_{RE,SBFD}$ is determined based on both a frequency domain resource range indicated by the RRC message and a frequency domain range of an uplink subband. For example, $N_{RE,SBFD}$ is determined by an intersection set of the frequency domain range indicated by the RRC message carrying the first information and the frequency domain range of the uplink subband.

Optionally, $N_{RE,SBFD}$ and $N_{RE,UL}$ are indicated by the RRC message carrying the first information.

Optionally, a method for determining the TBS may include: determining the TBS based on $N_{RE,UL}$. that is, replacing $N_{RE}$ with $N_{RE,UL}$; or determining the TBS based on $N_{RE,SBFD}$, that is, replacing $N_{RE}$ with $N_{RE,SBFD}$.

Then the terminal device further determines a quantity of encoded modulation symbols per layer for the UCI.

Optionally, in an example in which the HARQ-ACK is multiplexed on the PUSCH repetition type A, a quantity $Q'_{ACK}$ of encoded modulation symbols per layer for the HARQ-ACK meets the foregoing formula (1).

In a possible implementation, the denominator $\sum_{r=0}^{C_{UL-SCH}-1} K_r$ in formula (1) is obtained through calculation based on $N_{RE}$ corresponding to the type of the time unit in which UCI multiplexing occurs. For example, if UCI multiplexing occurs in the uplink time unit, the denominator $\sum_{r=0}^{C_{UL-SCH}-1} K_r$ is obtained through calculation based on $N_{RE,UL}$; or if UCI multiplexing occurs in the SBFD time unit, the denominator $\sum_{r=0}^{C_{UL-SCH}-1} K_r$ is obtained through calculation based on $N_{RE,SBFD}$.

In another possible implementation, the numerator $\sum_{l=0}^{N_{symb,all}^{PUSCH}-1} M_{sc}^{UCI}(l)$ in formula (1) is determined based on a slot type used for calculating the TBS. For example, if the TBS is obtained through calculation based on $N_{RE,UL}$, $\sum_{l=0}^{N_{symb,all}^{PUSCH}-1} M_{sc}^{UCI}(l)$ is a total of available time-frequency resources corresponding to the uplink time unit; or if the TBS is obtained through calculation based on $N_{RE,SBFD}$, $\sum_{l=0}^{N_{symb,all}^{PUSCH}-1} M_{sc}^{UCI}(l)$ is a total of available time-frequency resources corresponding to the SBFD time unit.

In another possible implementation, formula (1) is modified to:

$$Q'_{ACK} = \min \left\{ \left\lceil \frac{(O_{ACK} + L_{ACK}) \beta_{offset}^{PUSCH} \cdot \sum_{l=0}^{N_{symb,all}^{PUSCH} - 1} M_{sc}^{UCI}(l)}{\delta \times \sum_{r=0}^{C_{UL-SCH} - 1} K_r} \right\rceil, \left\lceil \alpha \cdot \sum_{l=l_0}^{N_{symb,all}^{PUSCH} - 1} M_{sc}^{UCI}(l) \right\rceil \right\},$$

where

a scaling factor $\delta$ may be defined as follows: if the TBS is obtained through calculation based on $N_{RE,UL}$, but UCI multiplexing occurs in the SBFD slot, $\delta = N_{RE,SBFD}/N_{RE,UL}$; or if the TBS is obtained through calculation based on $N_{RE,SBFD}$, but UCI multiplexing occurs in the SBFD slot, $\delta = N_{RE,UL}/N_{RE,SBFD}$.

Optionally, in other cases, $\delta = 1$.

Alternatively, $\delta$ may be determined by using a unified formula: $\delta = N_{RE,UCI}/N_{RE,TBS}$, where $N_{RE,TBS}$ indicates $N_{RE}$ used during TBS calculation, and $N_{RE,UCI}$ indicates $N_{RE}$ in the time unit in which UCI multiplexing occurs.

Alternatively, formula (1) may be modified to:

$$Q'_{ACK} = \min \left\{ \left\lceil \frac{(O_{ACK} + L_{ACK}) \cdot \delta \cdot \beta_{offset}^{HARQ-ACK} \cdot \sum_{l=0}^{N_{symb,all}^{PUSCH} - 1} M_{sc}^{UCI}(l)}{\sum_{r=0}^{C_{UL-SCH} - 1} K_r} \right\rceil, \left\lceil \alpha \cdot \sum_{l=l_0}^{N_{symb,all}^{PUSCH} - 1} M_{sc}^{UCI}(l) \right\rceil \right\}.$$

In the foregoing formula, $\delta = N_{RE,TBS}/N_{RE,UCI}$.

Alternatively, formula (1) is not modified, but $\beta_{offset}^{PUSCH}$ in the numerator of formula (1) is modified to

$\beta_{offset}^{PUSCH} = \delta \times \beta_{offset}^{HARQ-ACK}$, where $\delta = N_{RE,TBS}/N_{RE,UCI}$.

It may be understood that, in the foregoing implementation process, parameter optimization in formula (1) is described by using the quantity $Q'_{ACK}$ of encoded modulation symbols per layer for the HARQ-ACK as an example. Similarly, a quantity $Q'_{CSI-1}$ of encoded modulation symbols per layer for a CSI part 1 is determined by using formula (2), a quantity $Q'_{CSI-2}$ of encoded modulation symbols per layer for a CSI part 2 is determined by using formula (3), a quantity $Q'_{CG-UCI}$ of encoded modulation symbols per layer for CG-UCI is determined by using formula (4), and a quantity $Q'_{ACK}$ of encoded modulation symbols per layer for the HARQ-ACK jointly encoded with the CG-UCI is determined by using formula (5), and parameter optimization may be performed on the formula based on any one of the foregoing or by using the foregoing implementation process. For details, refer to the foregoing implementation process.

Then the terminal device determines the quantity of encoded modulation symbols for the UCI in the foregoing manner, and further sends the UCI and the uplink data in step S403 based on the quantity of encoded modulation symbols for the UCI.

Based on the technical solution shown in FIG. 5a, for a problem that frequency domain resource allocation is inconsistent in different types of slots when a multislot PUSCH can be configured in both an SBFD slot and an uplink slot, in a process of determining the quantity of encoded modulation symbols for the UCI, any one of formula (1) to formula (5) is modified in the following manner:

modifying the numerator in the formula to a quantity of resources available for UCI transmission in a slot used for calculating the TBS;
modifying the denominator in the formula to a TBS obtained through calculation based on a quantity of resources in a slot in which UCI multiplexing occurs; and
multiplying the denominator in the formula by a scaling factor, where the scaling factor is a ratio of a quantity of SBFD frequency domain resources to a quantity of UL frequency domain resources.

This resolves a problem (the foregoing problem 2) that reliability of UCI transmission or reliability of PUSCH transmission is reduced because a frequency domain resource used for TBS calculation is inconsistent with a frequency domain resource on which UCI multiplexing occurs when a multislot PUSCH can be allocated to an SBFD slot and an uplink slot.

In a communication system, if a signal is transmitted between a network device and a terminal device in an SBFD duplex mode, because transmission channels or transmission service data volumes of different terminal devices may be different, when the network device configures a same uplink (downlink) subband time-frequency resource for a plurality of different terminal devices in an SBFD time unit, system flexibility may be reduced, and time-frequency resource utilization may be reduced.

In an implementation example, a time-frequency resource pattern of an uplink (downlink) subband shown in FIG. 1b is used as an example. The network device may configure a same time-frequency resource pattern shown in FIG. 1b for a plurality of different connected terminal devices. To be specific, the plurality of different terminal devices all need to receive/monitor downlink signals in a downlink subband 1 and a downlink subband 3, or need to send uplink signals in an uplink subband 2. However, transmission channels or transmission service data volumes of different terminal devices are not invariable.

The following uses an example in which the network device configures the time-frequency resource pattern shown in FIG. 1b for both a terminal device A and a terminal device B.

For the terminal device A, if there is heavy burst uplink traffic, more uplink frequency bands in addition to the uplink subband 2 may need to be used to carry the uplink traffic. Uplink time-frequency resources in the uplink subband 2 in the five time units shown in FIG. 1b may be insufficient. Consequently, the uplink traffic cannot be carried, and a transmission rate may be reduced.

For the terminal device B, if quality of communication between the terminal device B and the network device deteriorates, more downlink frequency bands in addition to the downlink subband 1 and a downlink subband 2 may need to be used to carry downlink traffic. Downlink time-frequency resources in the downlink subband 1 and the downlink subband 2 in the five time units shown in FIG. 1b may be insufficient. Consequently, the downlink traffic cannot be carried, and a transmission rate may be reduced.

It can be learned from the foregoing example that, when signal transmission is performed between the network device and the terminal device in the SBFD duplex mode, because a transmission channel or a transmission service data volume of the terminal device may change, but an uplink (downlink) subband time-frequency resource configured by the network device for the terminal device in advance is invariable, data transmission rate reduction or the like may occur due to poor implementation flexibility of an SBFD system.

Therefore, how to improve implementation flexibility of the SBFD system is an urgent technical problem to be resolved.

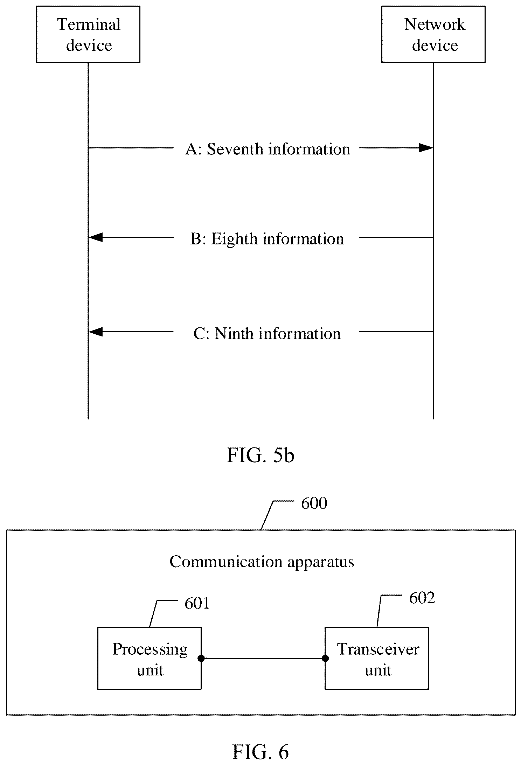

FIG. 5b is a diagram of a communication method according to this application.

Step A: A terminal device sends seventh information to a network device, and correspondingly, the network device receives the seventh information.

Optionally, in step A, the seventh information indicates that the terminal device supports dynamic SBFD. The network device may dynamically allocate a time-frequency resource (including a time-frequency resource of an uplink subband and/or a time-frequency resource of a downlink subband) of an uplink (downlink) subband. Dynamic allocation is to support configuring an uplink subband time-frequency resource and/or a downlink subband time-frequency resource of a terminal device by using dynamic signaling. Further optionally, the signaling may include DCI, a medium access control control element (medium access control control element, MAC CE), or the like.

Optionally, in step A, the seventh information indicates that the terminal device supports a dynamic configuration of the time domain resource of the subband.

Optionally, in step A, the seventh information indicates that the terminal device supports a dynamic configuration of the frequency domain resource of the subband.

Optionally, in step A, the seventh information indicates that the terminal device supports a dynamic configuration of the time-frequency resource of the subband.

The subband may include one or more of an uplink subband, a downlink subband, and a flexible subband. It may be understood that the flexible subband may transmit an uplink signal, or may transmit a downlink signal. Whether the terminal device sends an uplink signal or receives a downlink signal in the flexible subband depends on scheduling. The network device may receive an uplink signal or send a downlink signal in the flexible subband.

Optionally, in step A, the seventh information is carried in a higher layer message (for example, an RRC message).

Step B: The network device sends eighth information to the terminal device, and correspondingly, the terminal device receives the eighth information.

The eighth information indicates to receive (or monitor (monitor) or the like) ninth information.

It may be understood that, when the network device receives the seventh information in step A and determines that the terminal device has a corresponding capability, the network device may send the eighth information, to indicate, by using the eighth information, the terminal device to receive (or monitor) the ninth information.

Optionally, in the communication system, the network device may consider by default that each terminal device has the foregoing capability. Therefore, in some possible implementations, the network device may also perform step B and step C when the network device does not need to receive the seventh information in step A. In other words, the foregoing step A is an optional step.

Optionally, in step B, the eighth information is carried in a higher layer message (for example, an RRC message).

Step C: The network device sends the ninth information to the terminal device, and correspondingly, the terminal device receives the ninth information.

In step C, after the terminal device receives the ninth information, the terminal device modifies the subband configuration based on the third information.

Optionally, in step C, the ninth information is carried in signaling (or dynamic signaling). Further optionally, the signaling may include DCI, a MAC CE, or the like.

Optionally, in step C, the ninth information indicates the terminal device to reconfigure/modify the (uplink) subband time domain resource.

Optionally, in step C, the ninth information indicates the terminal device to reconfigure/modify the (uplink) subband frequency domain resource.

Optionally, in step C, the ninth information indicates the terminal device to reconfigure/modify the (uplink) subband time-frequency resource.

Optionally, in step C, the ninth information indicates the terminal device to reconfigure/modify the flexible subband to an uplink subband or a downlink subband.

For example, in step C, the network device may send the ninth information based on uplink and downlink service volume (channel information of uplink and downlink channels, uplink and downlink interference, or the like) information, so that the terminal device dynamically modifies an uplink subband to a downlink subband (or dynamically modifies a downlink subband to an uplink subband) based on the ninth information.

It may be understood that, when the terminal device dynamically modifies the uplink subband to the downlink subband (or dynamically modifies the downlink subband to the uplink subband) based on the ninth information, the terminal device may modify a time-frequency resource of an SBFD time unit to a time-frequency resource of a TDD uplink or downlink time unit. For example, in the example shown in FIG. 1b, when the uplink subband 2 is modified to the downlink subband, the time unit 1 to the time unit 5 shown in FIG. 1b may be considered as a time-frequency resource of a TDD downlink time unit, to meet signal transmission of the terminal device B. For another example, in the example shown in FIG. 1b, when both the downlink subband 1 and the downlink subband 3 are modified to uplink subbands, the time unit 1 to the time unit 5 shown in FIG. 1b may be considered as time-frequency resources of the TDD uplink time unit, to meet signal transmission of the terminal device A.

In an implementation example of step C, if the terminal device has a large quantity of uplink services, the network device may indicate, by using the ninth information, to modify the downlink subband to the uplink subband. Conversely, if the terminal device has a large quantity of downlink services, the network device may indicate, by using the ninth information, to modify the uplink subband to the downlink subband based. In this implementation example, a frequency domain location of the subband is modified.

In another implementation example of step C, if a user has a large quantity of uplink services, the network device may indicate, by using the ninth information, to modify the SBFD time unit to the uplink time unit; otherwise, if a user has a large quantity of downlink services, the network device may indicate, by using the ninth information, to modify the SBFD time unit to the downlink time unit. In this implementation example, a time domain location of the subband is modified.

In another implementation example of step C, if interference on the SBFD is relatively strong and communication performance of the system is affected, the network device may indicate, by using the ninth information, to modify the SBFD to TDD.

It can be learned from the technical solution shown in FIG. 5b that, through dynamic scheduling by using the eighth information and the ninth information, the network device may modify/configure the time-frequency resource of the uplink subband and/or the downlink subband in a timely manner based on an uplink-downlink service proportion (or the channel information of the uplink and downlink channels), or modify the flexible subband to the uplink subband or the downlink subband in a timely manner, to improve resource utilization of the network system and improve flexibility of the network system.

Refer to FIG. 6. An embodiment of this application provides a communication apparatus 600. The communication apparatus 600 can implement a function of the terminal device (or the network device) in the foregoing method embodiments, and therefore can also achieve beneficial effects of the foregoing method embodiments. In this embodiment of this application, the communication apparatus 600 may be the terminal device (or the network device), or may be an integrated circuit, an element, or the like inside the terminal device (or the network device), for example, a chip. In the following embodiments, an example in which the communication apparatus 600 is the terminal device or the network device is used for description.

In a possible implementation, when the apparatus 600 is configured to perform the foregoing method performed by the terminal device in FIG. 3 and related embodiments, the apparatus 600 includes a processing unit 601 and a transceiver unit 602. The transceiver unit 602 is configured to receive first information, where the first information indicates N sets of first indexes, one of the N sets of first indexes includes M first indexes, the M first indexes include a first index, the first index corresponds to a first parameter, the first parameter is for performing code rate compensation on uplink control information UCI carried in a subband full duplex SBFD time unit, N is a positive integer, and M is a positive integer; and the first information further indicates P sets of second indexes, one of the P sets of second indexes includes Q second indexes, the Q second indexes include a second index, the second index corresponds to a second parameter, the second parameter is for performing code rate compensation on UCI carried in an uplink time unit, P is a positive integer, and Q is a positive integer; the processing unit 601 is configured to determine one first parameter and one second parameter; and the transceiver unit 602 is further configured to send UCI and uplink data based on the first parameter and/or the second parameter, where the UCI and the uplink data are carried on a physical uplink shared channel PUSCH.

In a possible implementation, the transceiver unit 602 is specifically configured to: send the UCI and the uplink data in the SBFD time unit based on the first parameter; and/or send the UCI and the uplink data in the uplink time unit based on the second parameter.

In a possible implementation, the transceiver unit 602 is further configured to receive second information, where the second information indicates a third parameter and a fourth parameter, the third parameter indicates an upper limit on a quantity of encoded modulation symbols for the UCI carried on the PUSCH in the SBFD time unit, and the fourth parameter indicates an upper limit on a quantity of encoded modulation symbols for the UCI carried on the PUSCH in the uplink time unit; the transceiver unit 602 is specifically configured to send the UCI and the uplink data in the SBFD time unit based on the first parameter and the third parameter; and the transceiver unit 602 is specifically configured to send the UCI and the uplink data in the uplink time unit based on the second parameter and the fourth parameter.

In a possible implementation, both parameters corresponding to the N sets of first indexes and parameters corresponding to the P sets of second indexes are semi-statically configured parameters, and values of both P and N are 1.

In a possible implementation, both parameters corresponding to the N sets of first indexes and parameters corresponding to the P sets of second indexes are dynamically configured parameters, and values of both P and N are greater than 1; and the transceiver unit 602 is further configured to receive third information, where the third information indicates one of the N sets of first indexes and/or indicates one of the P sets of second indexes.

In a possible implementation, the third information is carried in DCI; and one bit in a first field in the DCI indicates one of the N sets of first indexes, and another bit in the first field in the DCI indicates one of the P sets of second indexes; or a first field in the DCI indicates one of the N sets of first indexes, and a second field in the DCI indicates one of the P sets of second indexes.

In a possible implementation, the first information includes a first information element and a second information element in an RRC message, where the first information element indicates the N sets of first indexes, and the second information element indicates the P sets of second indexes.

In a possible implementation, the first information element is betaOffsetsCrossPri0, and the second information element is betaOffsetsCrossPri1; or the first information element is betaOffsetsCrossPri0DCI-0-2, and the second information element is betaOffsetsCrossPri1DCI-0-2; or the first information element is cg-betaOffsetsCrossPri0, and the second information element is cg-betaOffsetsCrossPri1; or the second information element is betaOffsetsCrossPri0, and the first information element is betaOffsetsCrossPri1; or the second information element is betaOffsetsCrossPri0DCI-0-2, and the first information element is betaOffsetsCrossPri1DCI-0-2; or the second information element is cg-betaOffsetsCrossPri0, and the first information element is cg-betaOffsetsCrossPri1.

In a possible implementation, the RRC message further includes a third information element, where when a value of the third information element is a target value, the third information element indicates that the first information element indicates the N sets of first indexes, and the third information element indicates that the second information element indicates the P sets of second indexes.

In a possible implementation, both the parameters corresponding to the N sets of first indexes and the parameters corresponding to the P sets of second indexes are semi-statically configured parameters; or both the parameters corresponding to the N sets of first indexes and the parameters corresponding to the P sets of second indexes are dynamically configured parameters.

In a possible implementation, the quantity of encoded modulation symbols for the UCI is determined based on a TBS in a time unit in which the UCI is located and a quantity of REs available for transmitting the UCI in the time unit in which the UCI is located; and when the UCI is carried in a first time unit and a TBS in the first time unit is determined based on a second quantity of REs in a second time unit, any one of the following is met: the TBS in the time unit in which the UCI is located is determined based on a first quantity of REs in the first time unit; the quantity of REs available for transmitting the UCI in the time unit in which the UCI is located is determined based on the second quantity of REs; and the quantity of encoded modulation symbols for the UCI is determined based on relative information between the first quantity of REs and the second quantity of REs, where the first time unit is an SBFD time unit and the second time unit is an uplink time unit, or the first time unit is an uplink time unit and the second time unit is an SBFD time unit.

In a possible implementation, when the apparatus 600 is configured to perform the foregoing method performed by the network device in FIG. 3 and related embodiments, the apparatus 600 includes a processing unit 601 and a transceiver unit 602. The processing unit 601 is configured to determine first information; the transceiver unit 602 is configured to send the first information, where the first information indicates N sets of first indexes, one of the N sets of first indexes includes M first indexes, the M first indexes include a first index, the first index corresponds to a first parameter, the first parameter is for performing code rate compensation on uplink control information UCI carried in a subband full duplex SBFD time unit, N is a positive integer, and M is a positive integer; and the first information further indicates P sets of second indexes, one of the P sets of second indexes includes Q second indexes, the Q second indexes include a second index, the second index corresponds to a second parameter, the second parameter is for performing code rate compensation on UCI carried in an uplink time unit, P is a positive integer, and Q is a positive integer; and the transceiver unit 602 is further configured to receive UCI and uplink data based on the first parameter and/or the second parameter, where the UCI and the uplink data are carried on a physical uplink shared channel PUSCH.

In a possible implementation, the transceiver unit 602 is specifically configured to receive the UCI and the uplink data in the SBFD time unit based on the first parameter; and/or the transceiver unit 602 is specifically configured to receive the UCI and the uplink data in the uplink time unit based on the second parameter.

In a possible implementation, the transceiver unit 602 is further configured to send second information, where the second information indicates a third parameter and a fourth parameter, the third parameter indicates an upper limit on a quantity of encoded modulation symbols for the UCI carried on the PUSCH in the SBFD time unit, and the fourth parameter indicates an upper limit on a quantity of encoded modulation symbols for the UCI carried on the PUSCH in the uplink time unit; the transceiver unit 602 is specifically configured to receive the UCI and the uplink data in the SBFD time unit based on the first parameter and the third parameter; and the transceiver unit 602 is specifically configured to receive the UCI and the uplink data in the uplink time unit based on the second parameter and the fourth parameter.

In a possible implementation, both parameters corresponding to the N sets of first indexes and parameters corresponding to the P sets of second indexes are semi-statically configured parameters, and values of both P and N are 1.

In a possible implementation, both parameters corresponding to the N sets of first indexes and parameters corresponding to the P sets of second indexes are dynamically configured parameters, and values of both P and N are greater than 1; and the transceiver unit 602 is further configured to send third information, where the third information indicates one of the N sets of first indexes and/or indicates one of the P sets of second indexes.

In a possible implementation, the third information is carried in DCI; and one bit in a first field in the DCI indicates one of the N sets of first indexes, and another bit in the first field in the DCI indicates one of the P sets of second indexes; or a first field in the DCI indicates one of the N sets of first indexes, and a second field in the DCI indicates one of the P sets of second indexes.

In a possible implementation, the first information includes a first information element and a second information element in an RRC message, where the first information element indicates the N sets of first indexes, and the second information element indicates the P sets of second indexes.

In a possible implementation, the first information element is betaOffsetsCrossPri0, and the second information element is betaOffsetsCrossPri1; or the first information element is betaOffsetsCrossPri0DCI-0-2, and the second information element is betaOffsetsCrossPri1DCI-0-2; or the first information element is cg-betaOffsetsCrossPri0, and the second information element is cg-betaOffsetsCrossPri1; or the second information element is betaOffsetsCrossPri0, and the first information element is betaOffsetsCrossPri1; or the second information element is betaOffsetsCrossPri0DCI-0-2, and the first information element is betaOffsetsCrossPri1DCI-0-2; or the second information element is cg-betaOffsetsCrossPri0, and the first information element is cg-betaOffsetsCrossPri1.

In a possible implementation, the RRC message further includes a third information element, where when a value of the third information element is a target value, the third information element indicates that the first information element indicates the N sets of first indexes, and the third information element indicates that the second information element indicates the P sets of second indexes.

In a possible implementation, both the parameters corresponding to the N sets of first indexes and the parameters corresponding to the P sets of second indexes are semi-statically configured parameters; or both the parameters corresponding to the N sets of first indexes and the parameters corresponding to the P sets of second indexes are dynamically configured parameters.

In a possible implementation, the quantity of encoded modulation symbols for the UCI is determined based on a TBS in a time unit in which the UCI is located and a quantity of REs available for transmitting the UCI in the time unit in which the UCI is located; and when the UCI is carried in a first time unit and a TBS in the first time unit is determined based on a second quantity of REs in a second time unit, any one of the following is met: the TBS in the time unit in which the UCI is located is determined based on a first quantity of REs in the first time unit; the quantity of REs available for transmitting the UCI in the time unit in which the UCI is located is determined based on the second quantity of REs; and the quantity of encoded modulation symbols for the UCI is determined based on relative information between the first quantity of REs and the second quantity of REs, where the first time unit is an SBFD time unit and the second time unit is an uplink time unit, or the first time unit is an uplink time unit and the second time unit is an SBFD time unit.

In a possible implementation, when the apparatus 600 is configured to perform the foregoing method performed by the terminal device in FIG. 4 and related embodiments, the apparatus 600 includes a processing unit 601 and a transceiver unit 602. The transceiver unit 602 is configured to receive fourth information, where the fourth information indicates P sets of second indexes, one of the P sets of second indexes includes Q second indexes, the Q second indexes include a second index, the second index corresponds to a second parameter, the second parameter is for performing code rate compensation on UCI carried in an uplink time unit, P is a positive integer, and Q is a positive integer; the terminal device receives fifth information, where the fifth information and the second parameter are used to determine a first parameter, and the first parameter is for performing code rate compensation on UCI carried in a subband full duplex SBFD time unit; and the processing unit 601 is configured to control the transceiver unit 602 to send the UCI and uplink data in the SBFD time unit based on the fourth information and the fifth information; and/or the processing unit 601 is configured to control the transceiver unit 602 to send the UCI and uplink data in the uplink time unit based on the fourth information.

In a possible implementation, when the apparatus 600 is configured to perform the foregoing method performed by the network device in FIG. 4 and related embodiments, the apparatus 600 includes a processing unit 601 and a transceiver unit 602. The processing unit 601 is configured to determine fourth information; the transceiver unit 602 is configured to send the fourth information, where the fourth information indicates P sets of second indexes, one of the P sets of second indexes includes Q second indexes, the Q second indexes include a second index, the second index corresponds to a second parameter, the second parameter is for performing code rate compensation on UCI carried in an uplink time unit, P is a positive integer, and Q is a positive integer; the processing unit 601 is further configured to determine fifth information, and the transceiver unit 602 is further configured to send the fifth information, where the fifth information and the second parameter are used to determine a first parameter, and the first parameter is for performing code rate compensation on UCI carried in a subband full duplex SBFD time unit; and the transceiver unit 602 is further configured to receive the UCI and uplink data in the SBFD time unit based on the fourth information and the fifth information, and/or receive the UCI and uplink data in the uplink time unit based on the fourth information.

In a possible implementation, the fifth information includes at least one of the following:

P sets of factors, where one of the P sets of factors includes Q factors, the second index is a $j^{th}$ second index of an $i^{th}$ set of second indexes in the P sets of second indexes, the second parameter and a $j^{th}$ factor of an $i^{th}$ set of factors in the P sets of factors are used to determine the first parameter, a value of i ranges from 1 to P, and a value of j ranges from 1 to Q; or

P factors, where the second index is located in an $i^{th}$ set of second indexes in the P sets of second indexes, the second parameter and an $i^{th}$ factor in the P factors are used to determine the first parameter, and a value of i ranges from 1 to P; or

a target factor, where the second index is a $j^{th}$ second index of an $i^{th}$ set of second indexes in the P sets of second indexes, the second parameter and the target factor are used to determine the first parameter, a value of i ranges from 1 to P, and a value of j ranges from 1 to Q; or

at least one of a first target factor, a second target factor, and a third target factor, where

when the second parameter is for performing code rate compensation on a HARQ-ACK, the second parameter and the first target factor are used to determine the first parameter;

when the second parameter is for performing code rate compensation on a CSI part 1, the second parameter and the second target factor are used to determine the first parameter; or

when the second parameter is for performing code rate compensation on a CSI part 2, the second parameter and the third target factor are used to determine the first parameter; or

at least one of P first factors, P second factors, and P third factors, where the second index is located in an $i^{th}$ set of second indexes in the P sets of second indexes; and

when the second parameter is for performing code rate compensation on a HARQ-ACK, the second parameter and an $i^{th}$ factor in the P first factors are used to determine the first parameter;

when the second parameter is for performing code rate compensation on a CSI part 1, the second parameter and an $i^{th}$ factor in the P second factors are used to determine the first parameter; or

when the second parameter is for performing code rate compensation on a CSI part 2, the second parameter and an $i^{th}$ factor in the P third factors are used to determine the first parameter, where a value of i ranges from 1 to P.

In a possible implementation, when the apparatus 600 is configured to perform the foregoing method performed by the terminal device in FIG. 5a and related embodiments, the apparatus 600 includes a processing unit 601 and a transceiver unit 602. The processing unit 601 is configured to determine a first quantity of resource elements REs in a first time unit on a PUSCH, and determine a second quantity of REs in a second time unit on the PUSCH, where the first time unit is an SBFD time unit and the second time unit is an uplink time unit, or the first time unit is an uplink time unit and the second time unit is an SBFD time unit; and the transceiver unit 602 is configured to send UCI and uplink data, where the UCI and the uplink data are carried on the PUSCH, where a quantity of encoded modulation symbols for the UCI is determined based on a TBS in a time unit in which the UCI is located and a quantity of REs available for transmitting the UCI in the time unit in which the UCI is located; and when the UCI is carried in the first time unit and a TBS in the first time unit is determined based on the second quantity of REs, any one of the following is met: the TBS in the time unit in which the UCI is located is determined based on the first quantity of REs; the quantity of REs available for transmitting the UCI in the time unit in which the UCI is located is determined based on the second quantity of REs; and the quantity of encoded modulation symbols for the UCI is determined based on relative information between the first quantity of REs and the second quantity of REs.

In a possible implementation, the transceiver unit 602 is further configured to receive sixth information, where the sixth information is for determining the first quantity of REs and the second quantity of REs; and the sixth information includes indication information indicating the first quantity of REs and the sixth information includes indication information indicating the second quantity of REs; or the sixth information includes indication information indicating the first quantity of REs and the sixth information includes an indication about the relative information between the first quantity of REs and the second quantity of REs; or the sixth information includes indication information indicating the second quantity of REs and the sixth information includes an indication about the relative information between the first quantity of REs and the second quantity of REs.

In a possible implementation, the relative information includes a relative difference or a relative ratio.

In a possible implementation, when the apparatus 600 is configured to perform the foregoing method performed by the network device in FIG. 5a and related embodiments, the apparatus 600 includes a processing unit 601 and a transceiver unit 602. The processing unit 601 is configured to determine a first quantity of resource elements REs in a first time unit on a PUSCH, and determine a second quantity of REs in a second time unit on the PUSCH, where the first time unit is an SBFD time unit and the second time unit is an uplink time unit, or the first time unit is an uplink time unit and the second time unit is an SBFD time unit; and the transceiver unit 602 is configured to receive UCI and uplink data, where the UCI and the uplink data are carried on the PUSCH, where a quantity of encoded modulation symbols for the UCI is determined based on a TBS in a time unit in which the UCI is located and a quantity of REs available for transmitting the UCI in the time unit in which the UCI is located; and when the UCI is carried in the first time unit and a TBS in the first time unit is determined based on the second quantity of REs, any one of the following is met: the TBS in the time unit in which the UCI is located is determined based on the first quantity of REs; the quantity of REs available for transmitting the UCI in the time unit in which the UCI is located is determined based on the second quantity of REs; and the quantity of encoded modulation symbols for the UCI is determined based on relative information between the first quantity of REs and the second quantity of REs.

In a possible implementation, the transceiver unit 602 is further configured to send sixth information, where the sixth information is for determining the first quantity of REs and the second quantity of REs; and the sixth information includes indication information indicating the first quantity of REs and the sixth information includes indication information indicating the second quantity of REs; or the sixth information includes indication information indicating the first quantity of REs and the sixth information includes an indication about the relative information between the first quantity of REs and the second quantity of REs; or the sixth information includes indication information indicating the second quantity of REs and the sixth information includes an indication about the relative information between the first quantity of REs and the second quantity of REs.

In a possible implementation, the relative information includes a relative difference or a relative ratio.

In a possible implementation, when the apparatus 600 is configured to perform the foregoing method performed by the terminal device in FIG. 5b and related embodiments, the apparatus 600 includes a processing unit 601 and a transceiver unit 602. The processing unit 601 is configured to determine seventh information; the transceiver unit 602 is configured to send the seventh information; the transceiver unit 602 is further configured to receive eighth information; and the transceiver unit 602 is further configured to receive ninth information.

In a possible implementation, when the apparatus 600 is configured to perform the foregoing method performed by the network device in FIG. 5b and related embodiments, the apparatus 600 includes a processing unit 601 and a transceiver unit 602. The transceiver unit 602 is configured to receive seventh information; the processing unit 601 is configured to determine eighth information and ninth information; the transceiver unit 602 is configured to send the eighth information; and the transceiver unit 602 is further configured to send the ninth information.

It should be noted that, for content such as an information execution process of the unit of the communication apparatus 600, refer to the descriptions in the foregoing method embodiment in this application. Details are not described herein.

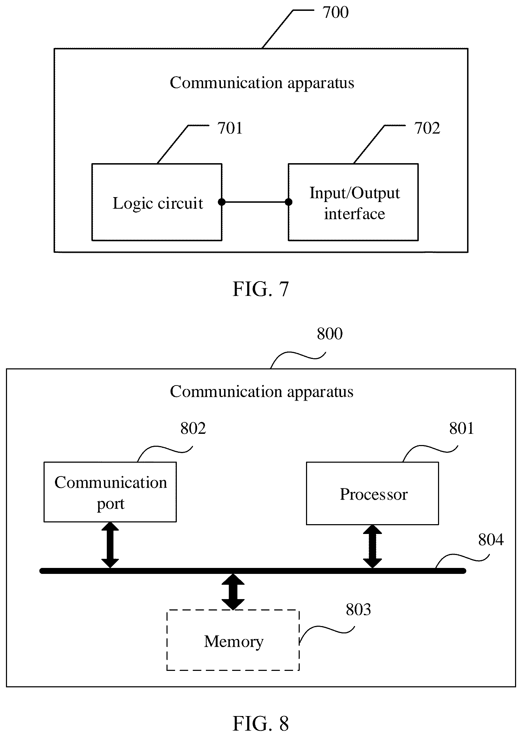

FIG. 7 is another diagram of a structure of a communication apparatus 700 according to this application. The communication apparatus 700 includes at least an input/output interface 702. The communication apparatus 700 may be a chip or an integrated circuit.

Optionally, the communication apparatus further includes a logic circuit 701.

The transceiver unit 602 shown in FIG. 6 may be a communication interface. The communication interface may be the input/output interface 702 in FIG. 7. The input/output interface 702 may include an input interface and an output interface. Alternatively, the communication interface may be a transceiver circuit, and the transceiver circuit may include an input interface circuit and an output interface circuit.

Optionally, the input/output interface 702 is configured to receive first information; the logic circuit 701 is configured to determine a first parameter and a second parameter; and the input/output interface 702 is further configured to send UCI and uplink data based on the first parameter and/or the second parameter. The logic circuit 701 and the input/output interface 702 may further perform other steps performed by the terminal device in FIG. 3 and related embodiments, and achieve corresponding beneficial effects. Details are not described herein again.

Optionally, the logic circuit 701 is configured to determine first information; the input/output interface 702 is configured to send the first information; and the input/output interface 702 is further configured to receive UCI and uplink data based on a first parameter and/or a second parameter. The logic circuit 701 and the input/output interface 702 may further perform other steps performed by the network device in FIG. 3 and related embodiments, and achieve corresponding beneficial effects. Details are not described herein again.

Optionally, the input/output interface 702 is configured to receive fourth information and fifth information; and the logic circuit 701 is configured to control the input/output interface 702 to send UCI and uplink data in an SBFD time unit based on the fourth information and the fifth information; and/or the logic circuit 701 is configured to control the input/output interface 702 to send UCI and uplink data in an uplink time unit based on the fourth information. The logic circuit 701 and the input/output interface 702 may further perform other steps performed by the terminal device in FIG. 4 and related embodiments, and achieve corresponding beneficial effects. Details are not described herein again.

Optionally, the input/output interface 702 is configured to send fourth information and fifth information; and the logic circuit 701 is configured to control the input/output interface 702 to receive UCI and uplink data in an SBFD time unit based on the fourth information and the fifth information; and/or the logic circuit 701 is configured to control the input/output interface 702 to receive UCI and uplink data in an uplink time unit based on the fourth information. The logic circuit 701 and the input/output interface 702 may further perform other steps performed by the network device in FIG. 4 and related embodiments, and achieve corresponding beneficial effects. Details are not described herein again.

Optionally, the logic circuit 701 is configured to determine a first quantity of REs and a second quantity of REs, and the input/output interface 702 is configured to send UCI and uplink data. The logic circuit 701 and the input/output interface 702 may further perform other steps performed by the terminal device in FIG. 5a and related embodiments, and achieve corresponding beneficial effects. Details are not described herein again.

Optionally, the logic circuit 701 is configured to determine a first quantity of REs and a second quantity of REs, and the input/output interface 702 is configured to receive UCI and uplink data. The logic circuit 701 and the input/output interface 702 may further perform other steps performed by the network device in FIG. 5a and related embodiments, and achieve corresponding beneficial effects. Details are not described herein again.

Optionally, the logic circuit 701 is configured to determine seventh information; the input/output interface 702 is configured to send the seventh information; the input/output interface 702 is further configured to receive eighth information; and the input/output interface 702 is further configured to receive ninth information. The logic circuit 701 and the input/output interface 702 may further perform other steps performed by the terminal device in FIG. 5b and related embodiments, and achieve corresponding beneficial effects. Details are not described herein again.

Optionally, the input/output interface 702 is configured to receive seventh information; the logic circuit 701 is configured to determine eighth information and ninth information; the input/output interface 702 is configured to send the eighth information; and the input/output interface 702 is further configured to send the ninth information. The logic circuit 701 and the input/output interface 702 may further perform other steps performed by the network device in FIG. 5b and related embodiments, and achieve corresponding beneficial effects. Details are not described herein again.

In a possible implementation, the processing unit 601 shown in FIG. 6 may be the logic circuit 701 in FIG. 7.

Optionally, the logic circuit 701 may be a processing apparatus, and some or all functions of the processing apparatus may be implemented by using software. Some or all functions of the processing apparatus may be implemented by software.

Optionally, the processing apparatus may include a memory and a processor. The memory is configured to store a computer program, and the processor reads and executes the computer program stored in the memory, to perform corresponding processing and/or steps in any method embodiment.

Optionally, the processing apparatus may include only a processor. A memory configured to store a computer program is located outside the processing apparatus, and the processor is connected to the memory through a circuit/wire, to read and execute the computer program stored in the memory. The memory and the processor may be integrated together, or may be physically independent of each other.

Optionally, the processing apparatus may be one or more chips, or one or more integrated circuits. For example, the processing apparatus may be one or more field-programmable gate arrays (field programmable gate arrays, FPGAs), an application-specific integrated chip (application-specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), a programmable logic device (programmable logic device, PLD), or another integrated chip, or any combination of the foregoing chips or processors.

FIG. 8 shows a communication apparatus 800 in the foregoing embodiments according to an embodiment of this application. The communication apparatus 800 may be specifically a communication apparatus serving as a terminal device in the foregoing embodiments. An example shown in FIG. 8 is that the terminal device is implemented as the terminal device (or a component in the terminal device).

In a possible diagram of a logical structure of the communication apparatus 800, the communication apparatus 800 may include but is not limited to at least one processor 801 and a communication port 802.

Further optionally, the apparatus may further include at least one of a memory 803 and a bus 804. In this embodiment of this application, the at least one processor 801 is configured to control an action of the communication apparatus 800.

In addition, the processor 801 may be a central processing unit, a general-purpose processor, a digital signal processor, an application-specific integrated circuit, a field programmable gate array, another programmable logic device, a transistor logic device, a hardware component, or any combination thereof. The processor 801 can implement or perform various logical blocks, modules, and circuits described as examples with reference to content disclosed in this application. Alternatively, the processor may be a combination of processors implementing a computing function, for example, a combination of one or more microprocessors, or a combination of a digital signal processor and a microprocessor. It may be clearly understood by a person skilled in the art that, for the purpose of convenient and brief description, for a detailed working process of the foregoing system, apparatus, and unit, refer to a corresponding process in the foregoing method embodiments, and details are not described herein again.

It should be noted that the communication apparatus 800 shown in FIG. 8 may be specifically configured to implement steps implemented by the terminal device in the foregoing method embodiments, and achieve technical effects corresponding to the terminal device. For a specific implementation of the communication apparatus shown in FIG. 8, refer to the descriptions in the foregoing method embodiments. Details are not described herein again.

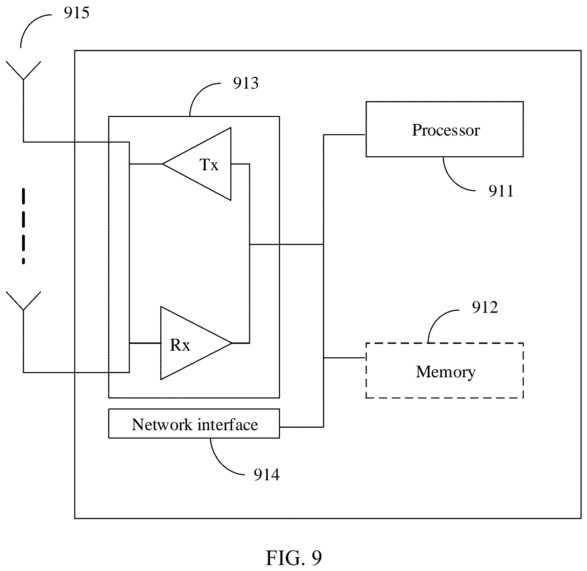

FIG. 9 is a diagram of a structure of a communication apparatus 900 in the foregoing embodiments according to an embodiment of this application. The communication apparatus 900 may be specifically a communication apparatus serving as a network device in the foregoing embodiments. For the structure of the communication apparatus, refer to the structure shown in FIG. 9.

The communication apparatus 900 includes at least one processor 911 and at least one network interface 914. Further optionally, the communication apparatus further includes at least one memory 912, at least one transceiver 913, and one or more antennas 915. The processor 911, the memory 912, the transceiver 913, and the network interface 914 are connected, for example, by using a bus. In this embodiment of this application, the connection may include various interfaces, transmission lines, buses, or the like. This is not limited in this embodiment. The antennas 915 are connected to the transceiver 913. The network interface 914 is configured to enable the communication apparatus to communicate with another communication device by using a communication link. For example, the network interface 914 may include a network interface between the communication apparatus and a core network device, for example, an S1 interface. The network interface may include a network interface between the communication apparatus and another communication apparatus (for example, another network device or a core network device), for example, an X2 or Xn interface.

The processor 911 is mainly configured to process a communication protocol and communication data, control the entire communication apparatus, execute a software program, and process data of the software program, for example, configured to support the communication apparatus in performing actions described in the foregoing method embodiment. The communication apparatus may include a baseband processor and a central processing unit. The baseband processor is mainly configured to process the communication protocol and the communication data. The central processing unit is mainly configured to control an entire terminal device, execute the software program, and process the data of the software program. The processor 911 in FIG. 9 may integrate functions of the baseband processor and the central processing unit. A person skilled in the art may understand that the baseband processor and the central processing unit may alternatively be independent processors, and are interconnected by using a technology such as a bus. A person skilled in the art may understand that the terminal device may include a plurality of baseband processors to adapt to different network standards, and the terminal device may include a plurality of central processing units to enhance processing capabilities of the terminal device, and components of the terminal device may be connected by using various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the memory in a form of a software program, and the processor executes the software program to implement a baseband processing function.

The memory is mainly configured to store the software program and data. The memory 912 may exist independently, and is connected to the processor 911. Optionally, the memory 912 may be integrated with the processor 911, for example, integrated into a chip. The memory 912 can store program code for executing the technical solutions in embodiments of this application, and the processor 911 controls the execution. Various types of executed computer program code may also be considered as drivers of the processor 911.

FIG. 9 shows only one memory and one processor. In an actual terminal device, there may be a plurality of processors and a plurality of memories. The memory may also be referred to as a storage medium, a storage device, or the like. The memory may be a storage element on a same chip as the processor, that is, an on-chip storage element, or may be an independent storage element. This is not limited in this embodiment of this application.

The transceiver 913 may be configured to support receiving or sending of a radio frequency signal between the communication apparatus and the terminal, and the transceiver 913 may be connected to the antennas 915. The transceiver 913 includes a transmitter Tx and a receiver Rx. Specifically, the one or more antennas 915 may receive a radio frequency signal. The receiver Rx of the transceiver 913 is configured to: receive the radio frequency signal from the antenna, convert the radio frequency signal into a digital baseband signal or a digital intermediate frequency signal, and provide the digital baseband signal or the digital intermediate frequency signal for the processor 911, so that the processor 911 further processes the digital baseband signal or the digital intermediate frequency signal, for example, performs demodulation processing and decoding processing. In addition, the transmitter Tx of the transceiver 913 is further configured to: receive a modulated digital baseband signal or a modulated digital intermediate frequency signal from the processor 99, convert the modulated digital baseband signal or the digital intermediate frequency signal into a radio frequency signal, and send the radio frequency signal through the one or more antennas 915. Specifically, the receiver Rx may selectively perform one-level or multi-level down frequency mixing processing and analog-to-digital conversion processing on the radio frequency signal, to obtain the digital baseband signal or the digital intermediate frequency signal. A sequence of the down frequency mixing processing and the analog-to-digital conversion processing is adjustable. The transmitter Tx may selectively perform one-level or multi-level up frequency mixing processing and digital-to-analog conversion on the modulated digital baseband signal or digital intermediate frequency signal, to obtain the radio frequency signal. A sequence of the up frequency mixing processing and the digital-to-analog conversion is adjustable. The digital baseband signal and the digital intermediate frequency signal may be collectively referred to as a digital signal.

The transceiver 913 may also be referred to as a transceiver unit, a transceiver machine, a transceiver apparatus, or the like. Optionally, a device that is in the transceiver unit and that is configured to implement a receiving function may be considered as a receiving unit, and a device that is in the transceiver unit and that is configured to implement a sending function may be considered as a sending unit. In other words, the transceiver unit includes the receiving unit and the sending unit. The receiving unit may also be referred to as a receiver machine, an input port, a receiver circuit, or the like. The sending unit may be referred to as a transmitter machine, a transmitter, a transmitter circuit, or the like.

It should be noted that the communication apparatus 900 shown in FIG. 9 may be specifically configured to implement steps implemented by the network device in the foregoing method embodiments, and achieve technical effects corresponding to the network device. For a specific implementation of the communication apparatus 900 shown in FIG. 9, refer to the descriptions in the foregoing method embodiments. Details are not described herein again.

An embodiment of this application further provides a computer-readable storage medium storing one or more computer-executable instructions. When the computer-executable instructions are executed by a processor, the processor performs the method in the possible implementations of the terminal device in the foregoing embodiments.

An embodiment of this application further provides a computer-readable storage medium storing one or more computer-executable instructions. When the computer-executable instructions are executed by a processor, the processor performs the method in the possible implementations of the network device in the foregoing embodiments.

An embodiment of this application further provides a computer program product (or referred to as a computer program) stored in one or more computers. When the computer program product is executed by a processor, the processor performs the method in the possible implementations of the terminal device.

An embodiment of this application further provides a computer program product stored in one or more computers. When the computer program product is executed by a processor, the processor performs the method in the possible implementations of the network device.

An embodiment of this application further provides a chip system. The chip system includes at least one processor, configured to support a communication apparatus in implementing a function in the possible implementations of the communication apparatus. Optionally, the chip system further includes an interface circuit, and the interface circuit provides program instructions and/or data for the at least one processor. In a possible design, the chip system may further include a memory. The memory is configured to store program instructions and data that are necessary for the communication apparatus. The chip system may include a chip, or may include a chip and another discrete component. The communication apparatus may be specifically the terminal device in the foregoing method embodiments.

An embodiment of this application further provides a chip system. The chip system includes at least one processor, configured to support a communication apparatus in implementing a function in the possible implementations of the communication apparatus. Optionally, the chip system further includes an interface circuit, and the interface circuit provides program instructions and/or data for the at least one processor. In a possible design, the chip system may further include a memory. The memory is configured to store program instructions and data that are necessary for the communication apparatus. The chip system may include a chip, or may include a chip and another discrete component. The communication apparatus may be specifically the network device in the foregoing method embodiments.

An embodiment of this application further provides a communication system. The communication system includes the terminal device and the network device in any one of the foregoing embodiments.

In the several embodiments provided in this application, it should be understood that the disclosed system, apparatus, and method may be implemented in other manners. For example, the foregoing apparatus embodiments are merely examples. For example, division of the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected depending on actual requirements, to achieve the objectives of the solutions in embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit. When the integrated unit is implemented in the form of a software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The storage medium includes any medium that can store program code, such as a USB flash drive, a removable hard disk, a read-only memory (ROM, Read-Only Memory), a random access memory (RAM, Random Access Memory), a magnetic disk, or an optical disc.

**Claims**

1.   A communication method, comprising:

receiving first information, wherein
the first information indicates N sets of first indexes, one of the N sets of first indexes comprises M first indexes, the M first indexes comprise a first index, the first index corresponds to a first parameter, the first parameter is for performing code rate compensation on uplink control information UCI carried in a subband full duplex SBFD time unit, N is a positive integer, and M is a positive integer; and
the first information further indicates P sets of second indexes, one of the P sets of second indexes comprises Q second indexes, the Q second indexes comprise a second index, the second index corresponds to a second parameter, the second parameter is for performing code rate compensation on UCI carried in an uplink time unit, P is a positive integer, and Q is a positive integer; and
sending UCI and uplink data based on the first parameter and/or the second parameter, wherein the UCI and the uplink data are carried on a physical uplink shared channel PUSCH.

2.   The method according to claim 1, wherein sending the UCI and the uplink data based on the first parameter and/or the second parameter comprises:

sending the UCI and the uplink data in the SBFD time unit based on the first parameter; and/or
sending the UCI and the uplink data in the uplink time unit based on the second parameter.

3.   The method according to claim 2, wherein the method further comprises:

receiving second information, wherein the second information indicates a third parameter and a fourth parameter, the third parameter indicates an upper limit on a quantity of encoded modulation symbols for the UCI carried on the PUSCH in the SBFD time unit, and the fourth parameter indicates an upper limit on a quantity of encoded modulation symbols for the UCI carried on the PUSCH in the uplink time unit;
sending the UCI and the uplink data in the SBFD time unit based on the first parameter comprises: sending the UCI and the uplink data in the SBFD time unit based on the first parameter and the third parameter; and
sending the UCI and the uplink data in the uplink time unit based on the second parameter comprises: sending the UCI and the uplink data in the uplink time unit based on the second parameter and the fourth parameter.

4.   The method according to any one of claims 1 to 3, wherein both parameters corresponding to the N sets of first indexes and parameters corresponding to the P sets of second indexes are dynamically configured parameters, and values of both P and N are greater than 1, and the method further comprises:
receiving third information, wherein the third information indicates one of the N sets of first indexes and/or indicates one of the P sets of second indexes.

5. The method according to claim 4, wherein the third information is carried in downlink control information DCI; and

   one bit in a first field in the DCI indicates one of the N sets of first indexes, and another bit in the first field in the DCI indicates one of the P sets of second indexes; or
   a first field in the DCI indicates one of the N sets of first indexes, and a second field in the DCI indicates one of the P sets of second indexes.

6. The method according to any one of claims 1 to 5, wherein the first information comprises a first information element and a second information element in a radio resource control RRC message, wherein
   the first information element indicates the N sets of first indexes, and the second information element indicates the P sets of second indexes.

7. The method according to claim 6, wherein

   the first information element is betaOffsetsCrossPri0, and the second information element is betaOffsetsCrossPri1; or
   the first information element is betaOffsetsCrossPriODCI-0-2, and the second information element is betaOffsetsCrossPri1DCI-0-2; or
   the first information element is cg-betaOffsetsCrossPri0, and the second information element is cg-betaOffsetsCrossPri1; or
   the second information element is betaOffsetsCrossPri0, and the first information element is betaOffsetsCrossPri1; or
   the second information element is betaOffsetsCrossPri0DCI-0-2, and the first information element is betaOffsetsCrossPri1DCI-0-2; or
   the second information element is cg-betaOffsetsCrossPriO, and the first information element is eg-betaOffsetsCrossPri1.

8. The method according to claim 6 or 7, wherein the RRC message further comprises a third information element, wherein
   when a value of the third information element is a target value, the third information indicates that the first information element indicates the N sets of first indexes, and the third information indicates that the second information element indicates the P sets of second indexes.

9. The method according to any one of claims 1 to 8, wherein

   both the parameters corresponding to the N sets of first indexes and the parameters corresponding to the P sets of second indexes are semi-statically configured parameters; or
   both the parameters corresponding to the N sets of first indexes and the parameters corresponding to the P sets of second indexes are dynamically configured parameters.

10. The method according to any one of claims 1 to 9, wherein the quantity of encoded modulation symbols for the UCI is determined based on a TBS in a time unit in which the UCI is located and a quantity of REs available for transmitting the UCI in the time unit in which the UCI is located; and
    when the UCI is carried in a first time unit and a TBS in the first time unit is determined based on a second quantity of REs in a second time unit, any one of the following is met:

    the TBS in the time unit in which the UCI is located is determined based on a first quantity of REs in the first time unit;
    the quantity of REs available for transmitting the UCI in the time unit in which the UCI is located is determined based on the second quantity of REs; and
    the quantity of encoded modulation symbols for the UCI is determined based on relative information between the first quantity of REs and the second quantity of REs, wherein
    the first time unit is an SBFD time unit and the second time unit is an uplink time unit, or the first time unit is an uplink time unit and the second time unit is an SBFD time unit.

11. A communication method, comprising:

  sending first information, wherein
  the first information indicates N sets of first indexes, one of the N sets of first indexes comprises M first indexes, the M first indexes comprise a first index, the first index corresponds to a first parameter, the first parameter is for performing code rate compensation on uplink control information UCI carried in a subband full duplex SBFD time unit, N is a positive integer, and M is a positive integer; and
  the first information further indicates P sets of second indexes, one of the P sets of second indexes comprises Q second indexes, the Q second indexes comprise a second index, the second index corresponds to a second parameter, the second parameter is for performing code rate compensation on UCI carried in an uplink time unit, P is a positive integer, and Q is a positive integer; and
  receiving UCI and uplink data based on the first parameter and/or the second parameter, wherein the UCI and the uplink data are carried on a physical uplink shared channel PUSCH.

12. The method according to claim 11, wherein receiving the UCI and the uplink data based on the first parameter and/or the second parameter comprises:

  receiving the UCI and the uplink data in the SBFD time unit based on the first parameter; and/or
  receiving the UCI and the uplink data in the uplink time unit based on the second parameter.

13. The method according to claim 12, wherein the method further comprises:

  sending second information, wherein the second information indicates a third parameter and a fourth parameter, the third parameter indicates an upper limit on a quantity of encoded modulation symbols for the UCI carried on the PUSCH in the SBFD time unit, and the fourth parameter indicates an upper limit on a quantity of encoded modulation symbols for the UCI carried on the PUSCH in the uplink time unit;
  receiving the UCI and the uplink data in the SBFD time unit based on the first parameter comprises: receiving the UCI and the uplink data in the SBFD time unit based on the first parameter and the third parameter; and
  receiving the UCI and the uplink data in the uplink time unit based on the second parameter comprises: receiving the UCI and the uplink data in the uplink time unit based on the second parameter and the fourth parameter.

14. The method according to any one of claims 11 to 13, wherein both parameters corresponding to the N sets of first indexes and parameters corresponding to the P sets of second indexes are dynamically configured parameters, and values of both P and N are greater than 1, and the method further comprises:
  sending third information, wherein the third information indicates one of the N sets of first indexes and/or indicates one of the P sets of second indexes.

15. The method according to claim 14, wherein the third information is carried in downlink control information DCI; and

  one bit in a first field in the DCI indicates one of the N sets of first indexes, and another bit in the first field in the DCI indicates one of the P sets of second indexes; or
  a first field in the DCI indicates one of the N sets of first indexes, and a second field in the DCI indicates one of the P sets of second indexes.

16. The method according to any one of claims 11 to 15, wherein the first information comprises a first information element and a second information element in a radio resource control RRC message, wherein
  the first information element indicates the N sets of first indexes, and the second information element indicates the P sets of second indexes.

17. The method according to claim 16, wherein

  the first information element is betaOffsetsCrossPri0, and the second information element is betaOffsetsCrossPri1; or
  the first information element is betaOffsetsCrossPri0DCI-0-2, and the second information element is betaOffsetsCrossPri1DCI-0-2; or
  the first information element is cg-betaOffsetsCrossPriO, and the second information element is cg-betaOffsetsCrossPri1; or

the second information element is betaOffsetsCrossPri0, and the first information element is betaOffsetsCrossPri1; or

the second information element is betaOffsetsCrossPri0DCI-0-2, and the first information element is betaOffsetsCrossPri1DCI-0-2; or

the second information element is cg-betaOffsetsCrossPri0, and the first information element is eg-betaOffsetsCrossPri1.

18. The method according to claim 16 or 17, wherein the RRC message further comprises a third information element, wherein

when a value of the third information element is a target value, the third information indicates that the first information element indicates the N sets of first indexes, and the third information indicates that the second information element indicates the P sets of second indexes.

19. The method according to any one of claims 11 to 18, wherein

both the parameters corresponding to the N sets of first indexes and the parameters corresponding to the P sets of second indexes are semi-statically configured parameters; or
both the parameters corresponding to the N sets of first indexes and the parameters corresponding to the P sets of second indexes are dynamically configured parameters.

20. The method according to any one of claims 11 to 19, wherein the quantity of encoded modulation symbols for the UCI is determined based on a TBS in a time unit in which the UCI is located and a quantity of REs available for transmitting the UCI in the time unit in which the UCI is located; and

when the UCI is carried in a first time unit and a TBS in the first time unit is determined based on a second quantity of REs in a second time unit, any one of the following is met:

the TBS in the time unit in which the UCI is located is determined based on a first quantity of REs in the first time unit;
the quantity of REs available for transmitting the UCI in the time unit in which the UCI is located is determined based on the second quantity of REs; and
the quantity of encoded modulation symbols for the UCI is determined based on relative information between the first quantity of REs and the second quantity of REs, wherein
the first time unit is an SBFD time unit and the second time unit is an uplink time unit, or the first time unit is an uplink time unit and the second time unit is an SBFD time unit.

21. A communication apparatus, comprising a transceiver unit and a processing unit, wherein

the transceiver unit is configured to receive first information, wherein
the first information indicates N sets of first indexes, one of the N sets of first indexes comprises M first indexes, the M first indexes comprise a first index, the first index corresponds to a first parameter, the first parameter is used to perform code rate compensation on uplink control information UCI carried in a subband full duplex SBFD time unit, N is a positive integer, and M is a positive integer; and
the first information further indicates P sets of second indexes, one of the P sets of second indexes comprises Q second indexes, the Q second indexes comprise a second index, the second index corresponds to a second parameter, the second parameter is used to perform code rate compensation on UCI carried in an uplink time unit, P is a positive integer, and Q is a positive integer;
the processing unit is configured to determine the first parameter and/or the second parameter; and
the transceiver unit is further configured to send UCI and uplink data based on the first parameter and/or the second parameter, wherein the UCI and the uplink data are carried on a physical uplink shared channel PUSCH.

22. The apparatus according to claim 21, wherein the transceiver unit is specifically configured to:

send the UCI and the uplink data in the SBFD time unit based on the first parameter; and/or
send the UCI and the uplink data in the uplink time unit based on the second parameter.

23. The apparatus according to claim 22, wherein

the transceiver unit is further configured to receive second information, wherein the second information indicates a third parameter and a fourth parameter, the third parameter indicates an upper limit on a quantity of encoded modulation symbols for the UCI carried on the PUSCH in the SBFD time unit, and the fourth parameter indicates an upper limit on a quantity of encoded modulation symbols for the UCI carried on the PUSCH in the uplink time unit;

the transceiver unit is specifically configured to send the UCI and the uplink data in the SBFD time unit based on the first parameter and the third parameter; and

the transceiver unit is specifically configured to send the UCI and the uplink data in the uplink time unit based on the second parameter and the fourth parameter.

24. The apparatus according to any one of claims 21 to 23, wherein both parameters corresponding to the N sets of first indexes and parameters corresponding to the P sets of second indexes are dynamically configured parameters, and values of both P and N are greater than 1; and

the transceiver unit is further configured to receive third information, wherein the third information indicates one of the N sets of first indexes and/or indicates one of the P sets of second indexes.

25. The apparatus according to claim 24, wherein the third information is carried in downlink control information DCI; and

one bit in a first field in the DCI indicates one of the N sets of first indexes, and another bit in the first field in the DCI indicates one of the P sets of second indexes; or

a first field in the DCI indicates one of the N sets of first indexes, and a second field in the DCI indicates one of the P sets of second indexes.

26. The apparatus according to any one of claims 21 to 25, wherein the first information comprises a first information element and a second information element in a radio resource control RRC message, wherein

the first information element indicates the N sets of first indexes, and the second information element indicates the P sets of second indexes.

27. The apparatus according to claim 26, wherein

the first information element is betaOffsetsCrossPri0, and the second information element is betaOffsetsCrossPri1; or

the first information element is betaOffsetsCrossPri0DCI-0-2, and the second information element is betaOffsetsCrossPri1DCI-0-2; or

the first information element is cg-betaOffsetsCrossPri0, and the second information element is cg-betaOffsetsCrossPri1; or

the second information element is betaOffsetsCrossPri0, and the first information element is betaOffsetsCrossPri1; or

the second information element is betaOffsetsCrossPri0DCI-0-2, and the first information element is betaOffsetsCrossPri1DCI-0-2; or

the second information element is cg-betaOffsetsCrossPriO, and the first information element is eg-betaOffsetsCrossPri1.

28. The apparatus according to claim 26 or 27, wherein the RRC message further comprises a third information element, wherein

when a value of the third information element is a target value, the third information element indicates that the first information element indicates the N sets of first indexes, and the third information element indicates that the second information element indicates the P sets of second indexes.

29. The apparatus according to any one of claims 21 to 28, wherein

both the parameters corresponding to the N sets of first indexes and the parameters corresponding to the P sets of second indexes are semi-statically configured parameters; or

both the parameters corresponding to the N sets of first indexes and the parameters corresponding to the P sets of second indexes are dynamically configured parameters.

30. The apparatus according to any one of claims 21 to 29, wherein the quantity of encoded modulation symbols for the UCI is determined based on a TBS in a time unit in which the UCI is located and a quantity of REs available for transmitting the UCI in the time unit in which the UCI is located; and

when the UCI is carried in a first time unit and a TBS in the first time unit is determined based on a second quantity of REs in a second time unit, any one of the following is met:

the TBS in the time unit in which the UCI is located is determined based on a first quantity of REs in the first time unit;

the quantity of REs available for transmitting the UCI in the time unit in which the UCI is located is determined based on the second quantity of REs; and

the quantity of encoded modulation symbols for the UCI is determined based on relative information between the first quantity of REs and the second quantity of REs, wherein

the first time unit is an SBFD time unit and the second time unit is an uplink time unit, or the first time unit is an uplink time unit and the second time unit is an SBFD time unit.

31. A communication apparatus, comprising a transceiver unit and a processing unit, wherein

the processing unit is configured to determine first information;

the transceiver unit is configured to send the first information, wherein

the first information indicates N sets of first indexes, one of the N sets of first indexes comprises M first indexes, the M first indexes comprise a first index, the first index corresponds to a first parameter, the first parameter is used to perform code rate compensation on uplink control information UCI carried in a subband full duplex SBFD time unit, N is a positive integer, and M is a positive integer; and

the first information further indicates P sets of second indexes, one of the P sets of second indexes comprises Q second indexes, the Q second indexes comprise a second index, the second index corresponds to a second parameter, the second parameter is used to perform code rate compensation on UCI carried in an uplink time unit, P is a positive integer, and Q is a positive integer; and

the transceiver unit is further configured to receive UCI and uplink data based on the first parameter and/or the second parameter, wherein the UCI and the uplink data are carried on a physical uplink shared channel PUSCH.

32. The apparatus according to claim 31, wherein the transceiver unit is specifically configured to:

receive the UCI and the uplink data in the SBFD time unit based on the first parameter; and/or
receive the UCI and the uplink data in the uplink time unit based on the second parameter.

33. The apparatus according to claim 32, wherein

the transceiver unit is further configured to send second information, wherein the second information indicates a third parameter and a fourth parameter, the third parameter indicates an upper limit on a quantity of encoded modulation symbols for the UCI carried on the PUSCH in the SBFD time unit, and the fourth parameter indicates an upper limit on a quantity of encoded modulation symbols for the UCI carried on the PUSCH in the uplink time unit;

the transceiver unit is specifically configured to receive the UCI and the uplink data in the SBFD time unit based on the first parameter and the third parameter; and

the transceiver unit is specifically configured to receive the UCI and the uplink data in the uplink time unit based on the second parameter and the fourth parameter.

34. The apparatus according to any one of claims 31 to 33, wherein both parameters corresponding to the N sets of first indexes and parameters corresponding to the P sets of second indexes are dynamically configured parameters, and values of both P and N are greater than 1; and

the transceiver unit is further configured to send third information, wherein the third information indicates one of the N sets of first indexes and/or indicates one of the P sets of second indexes.

35. The apparatus according to claim 34, wherein the third information is carried in downlink control information DCI; and

one bit in a first field in the DCI indicates one of the N sets of first indexes, and another bit in the first field in the DCI indicates one of the P sets of second indexes; or

a first field in the DCI indicates one of the N sets of first indexes, and a second field in the DCI indicates one of the P sets of second indexes.

36. The apparatus according to any one of claims 31 to 35, wherein the first information comprises a first information element and a second information element in a radio resource control RRC message, wherein
the first information element indicates the N sets of first indexes, and the second information element indicates the P sets of second indexes.

37. The apparatus according to claim 36, wherein

the first information element is betaOffsetsCrossPri0, and the second information element is betaOffsetsCrossPri1; or
the first information element is betaOffsetsCrossPri0DCI-0-2, and the second information element is betaOffsetsCrossPri1DCI-0-2; or
the first information element is cg-betaOffsetsCrossPri0, and the second information element is cg-betaOffsetsCrossPri1; or
the second information element is betaOffsetsCrossPri0, and the first information element is betaOffsetsCrossPri1; or
the second information element is betaOffsetsCrossPri0DCI-0-2, and the first information element is betaOffsetsCrossPri1DCI-0-2; or
the second information element is cg-betaOffsetsCrossPri0, and the first information element is eg-betaOffsetsCrossPri1.

38. The apparatus according to claim 36 or 37, wherein the RRC message further comprises a third information element, wherein
when a value of the third information element is a target value, the third information indicates that the first information element indicates the N sets of first indexes, and the third information indicates that the second information element indicates the P sets of second indexes.

39. The apparatus according to any one of claims 31 to 38, wherein

both the parameters corresponding to the N sets of first indexes and the parameters corresponding to the P sets of second indexes are semi-statically configured parameters; or
both the parameters corresponding to the N sets of first indexes and the parameters corresponding to the P sets of second indexes are dynamically configured parameters.

40. The apparatus according to any one of claims 31 to 39, wherein the quantity of encoded modulation symbols for the UCI is determined based on a TBS in a time unit in which the UCI is located and a quantity of REs available for transmitting the UCI in the time unit in which the UCI is located; and
when the UCI is carried in a first time unit and a TBS in the first time unit is determined based on a second quantity of REs in a second time unit, any one of the following is met:

the TBS in the time unit in which the UCI is located is determined based on a first quantity of REs in the first time unit;
the quantity of REs available for transmitting the UCI in the time unit in which the UCI is located is determined based on the second quantity of REs; and
the quantity of encoded modulation symbols for the UCI is determined based on relative information between the first quantity of REs and the second quantity of REs, wherein
the first time unit is an SBFD time unit and the second time unit is an uplink time unit, or the first time unit is an uplink time unit and the second time unit is an SBFD time unit.

41. A communication apparatus, comprising at least one processor, wherein the at least one processor is coupled to a memory;

the memory is configured to store a program or instructions; and
the at least one processor is configured to execute the program or instructions, to enable the apparatus to implement the method according to any one of claims 1 to 10, or enable the apparatus to implement the method according to any one of claims 11 to 20.

42. A computer-readable storage medium, wherein the medium stores instructions, and when the instructions are executed by a computer, the method according to any one of claims 1 to 20 is implemented.

43. A computer program product, wherein the computer program product comprises computer instructions, and when some or all of the computer instructions are run on a computer, the method according to any one of claims 1 to 10 is performed, or the method according to any one of claims 11 to 20 is performed.

44. A chip, wherein the chip comprises a processor and a communication interface, wherein
the communication interface is coupled to the processor, and the processor is configured to run a computer program or instructions, to implement the method according to any one of claims 1 to 20.

45. A communication system, wherein

the communication system comprises a communication apparatus configured to perform the method according to any one of claims 1 to 10 and a communication apparatus configured to perform the method according to any one of claims 11 to 20; or
the communication system comprises the communication apparatus according to any one of claims 21 to 30 and the communication apparatus according to any one of claims 31 to 40.

| Time unit 1 | Time unit 2 | Time unit 3 | Time unit 4 | Time unit 5 |
|---|---|---|---|---|
| Downlink time-frequency resource (D) | Downlink time-frequency resource (D) | Downlink time-frequency resource (D) | Downlink time-frequency resource (D) | Uplink time-frequency resource (U) |

FIG. 1a

| | Time unit 1 | Time unit 2 | Time unit 3 | Time unit 4 | Time unit 5 |
|---|---|---|---|---|---|
| Downlink subband 1 | Downlink time-frequency resource (D) | Downlink time-frequency resource (D) | Downlink time-frequency resource (D) | Downlink time-frequency resource (D) | Downlink time-frequency resource (D) |
| Uplink subband 2 | Uplink time-frequency resource (U) | Uplink time-frequency resource (U) | Uplink time-frequency resource (U) | Uplink time-frequency resource (U) | Uplink time-frequency resource (U) |
| Downlink subband 3 | Downlink time-frequency resource (D) | Downlink time-frequency resource (D) | Downlink time-frequency resource (D) | Downlink time-frequency resource (D) | Downlink time-frequency resource (D) |

FIG. 1b

| | Time unit 1 | Time unit 2 | Time unit 3 | Time unit 4 | Time unit 5 |
|---|---|---|---|---|---|
| Downlink subband 1 | Downlink time-frequency resource (D) | Downlink time-frequency resource (D) | Downlink time-frequency resource (D) | Downlink time-frequency resource (D) | |
| Uplink subband 2 | Uplink time-frequency resource (U) | Uplink time-frequency resource (U) | Uplink time-frequency resource (U) | Uplink time-frequency resource (U) | Uplink time-frequency resource (U) |
| Downlink subband 3 | Downlink time-frequency resource (D) | Downlink time-frequency resource (D) | Downlink time-frequency resource (D) | Downlink time-frequency resource (D) | |

FIG. 1c

|  | Time unit 1 | Time unit 2 | Time unit 3 | Time unit 4 | Time unit 5 |
|---|---|---|---|---|---|
| Downlink subband 1 |  | Downlink time-frequency resource (D) | Downlink time-frequency resource (D) | Downlink time-frequency resource (D) |  |
| Uplink subband 2 | Downlink time-frequency resource (D) | Uplink time-frequency resource (U) | Uplink time-frequency resource (U) | Uplink time-frequency resource (U) | Uplink time-frequency resource (U) |
| Downlink subband 3 |  | Downlink time-frequency resource (D) | Downlink time-frequency resource (D) | Downlink time-frequency resource (D) |  |

FIG. 1d

FIG. 2

FIG. 3

| Terminal device | | Network device |
|---|---|---|

S401: Fourth information

S402: Fifth information

S403: UCI and uplink data

FIG. 4

| Terminal device | | Network device |
|---|---|---|

S501: Determine a first quantity of REs and a second quantity of REs

S502: Determine a first quantity of REs and a second quantity of REs

S503: UCI and uplink data

FIG. 5a

Terminal
device

Network
device

A: Seventh information

B: Eighth information

C: Ninth information

FIG. 5b

600

Communication apparatus

601

Processing
unit

602

Transceiver
unit

FIG. 6

700

Communication apparatus

701

Logic circuit

702

Input/Output interface

FIG. 7

800

Communication apparatus

802

Communication port

801

Processor

804

803

Memory

FIG. 8

915

913

Tx

Processor

911

912

Rx

Memory

Network interface

914

FIG. 9

## INTERNATIONAL SEARCH REPORT

| International application No. |
|---|
| **PCT/CN2024/085506** |

| A. | CLASSIFICATION OF SUBJECT MATTER |
|---|---|

H04W 72/231(2023.01)i

According to International Patent Classification (IPC) or to both national classification and IPC

| B. | FIELDS SEARCHED |
|---|---|

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNABS; CNTXT; CNKI; VEN; WOTXT; USTXT; EPTXT; 3GPP: 时分双工, 子带全双工, 时间, 时隙, 子帧, 帧, 符号, 上行控制信息, 信道状态信息, 索引, 因子, 指示, 参数, 码率, 补偿, 编码, 调制, 传输块, TDD, SBFD, subband full duplex, slot, frame, symbol, UCI, HARQ, ACK, CSI, index, indicate, parameter, code, rate, compensate, modulate, TBS

| C. | DOCUMENTS CONSIDERED TO BE RELEVANT |
|---|---|

| Category* | Citation of document, with indication, where appropriate, of the relevant passages | Relevant to claim No. |
|---|---|---|
| A | CN 115915442 A (HUAWEI TECHNOLOGIES CO., LTD.) 04 April 2023 (2023-04-04) description, paragraphs [0146]-[0879] | 1-45 |
| A | CN 115913490 A (HUAWEI TECHNOLOGIES CO., LTD.) 04 April 2023 (2023-04-04) entire document | 1-45 |
| A | CN 114830571 A (QUALCOMM INC.) 29 July 2022 (2022-07-29) entire document | 1-45 |
| A | CN 115398850 A (QUALCOMM INC.) 25 November 2022 (2022-11-25) entire document | 1-45 |
| A | INTEL CORP. "On SBFD in NR Systems" *3GPP TSG RAN WG1 #112, R1-2300946*, 18 February 2023 (2023-02-18), entire document | 1-45 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **18 June 2024** | **24 June 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/085506**

| Patent document cited in search report | | | Publication date (day/month/year) | Patent family member(s) | Publication date (day/month/year) |
|---|---|---|---|---|---|
| CN | 115915442 | A | 04 April 2023 | None | |
| CN | 115913490 | A | 04 April 2023 | None | |
| CN | 114830571 | A | 29 July 2022 | None | |
| CN | 115398850 | A | 25 November 2022 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310410242